# EUROPÄISCHE PATENTSCHRIFT

(11) **EP 4 472 875 B1**
(45) Veröffentlichungstag und Bekanntmachung des Hinweises auf die Patenterteilung: **15.04.2026**
(21) Anmeldenummer: 23708660.8
(22) Anmeldetag: 03.02.2023
(51) Int. Cl.: B61B 3/02, B65G 17/20, B65G 17/48, B65G 47/71, B65G 54/02, B65G 23/23

(54) **HÄNGEFÖRDERVORRICHTUNG FÜR EIN KOMMISSIONIERSYSTEM**
SUSPENDED CONVEYOR DEVICE FOR AN ORDER-PICKING SYSTEM
DISPOSITIF DE CONVOYEUR AÉRIEN POUR UN SYSTÈME DE PRÉPARATION DE COMMANDES

(30) Priorität: 04.02.2022 AT 500682022; 27.06.2022 AT 504632022
(43) Veröffentlichungstag der Anmeldung: 11.12.2024
(73) Patentinhaber: TGW Logistics GmbH, 4614 Marchtrenk (AT)
(72) Erfinder: REISCHL, Josef, 4623 Gunskirchen (AT); PAUZENBERGER, Christoph, 4720 Neumarkt i. H. (AT)
(74) Vertreter: Burger, Hannes Alfred
(86) Internationale Anmeldenummer: PCT/AT2023/060032
(87) Internationale Veröffentlichungsnummer: WO 2023/147620

(56) Entgegenhaltungen:
- EP-A1- 1 159 180
- EP-A1- 3 476 685
- DE-A1- 102018 128 417
- DE-T2- 60 214 761
- DE-T2- 69 104 604
- DE-T2- 69 114 945
- DE-U1- 8 701 763
- JP-A- 2015 095 158
- US-A1- 2020 074 825
- US-B1- 6 886 651

## Beschreibung

Die Erfindung betrifft eine Hängefördervorrichtung für ein Kommissioniersystem.

Die WO 2020/160585 A2 offenbart ein Transportträgersystem für eine Hängefördervorrichtung. Insbesondere weist der Transportträger dabei einen universell verwendbaren Basiskörper und einen über eine Verbindungsvorrichtung auswechselbaren Tragkörper auf, welcher in einer ersten Konfiguration mit einer vollständig umschlossenen Aufnahmeöffnung zum Transport von Transporttaschen und in einer zweiten Konfiguration mit einem Haken zum Transport von Ware auf Kleiderbügeln versehen ist. Nachteilig an diesem und an anderen bekannten Transportträgersystemen ist, dass diese kein individuelles Bewegen eines Transportträgers durch ein Kommissioniersystem erlauben. Stattessend werden Transportträger in bekannten Kommissioniersystemen im Kollektiv mit anderen Transportträgern bewegt. Dies führt zu Leistungseinbußen im Betrieb bekannter Kommissioniersysteme und dazu, dass bekannte Kommissioniersysteme vergleichsweise viel Bauraum benötigen. Auch kann die Tragstruktur bei bekannten Kommissioniersystemen nicht sehr flexibel gestaltet werden.

Ferner beschreibt die WO 2019/234046 A2 ein Transportträgersystem für eine Hängefördervorrichtung, wobei die Transportträger eine Antriebsvorrichtung aufweisen und somit autonom entlang eines Schienensystems verfahrbar sind. Hierbei muss lediglich einmalig ein Zielort vorgegeben werden. Der Fahrweg wird dann vom Transportträger autonom ermittelt.

Die US 6,886,651 B1, welche die Merkmale des Oberbegriffs des Anspruchs 1 und des Oberbegriffs des Anspruchs 18 beschreibt, offenbart eine Hängefördervorrichtung für ein Kommissioniersystem, umfassend eine Tragstruktur und einen Transportträger zum Transport von Hängeware. Die Tragstruktur bildet eine Fahrfläche aus. Der Transportträger umfasst einen Basiskörper, eine Antriebsvorrichtung zum Bewegen des Transportträgers auf der Fahrfläche und einen Haltekrafterzeuger, durch welche der Transportkörper an der Tragstruktur bewegbar haftet. Der Basiskörper bildet eine erste Transportträgerseite und eine zweite Transportträgerseite. Die Antriebsvorrichtung umfasst Antriebsorgane, welche an der Fahrfläche anliegen. Die Antriebsorgane sind jeweils mit einem Motor gekoppelt und an den Transportträgerseiten angeordnet, Die Antriebsorgane bilden gleichzeitig auch die Haftkrafterzeuger.

Eine Aufgabe der Erfindung ist es daher, eine verbesserte Hängefördervorrichtung für ein Kommissioniersystem anzugeben.

Die Aufgabe der Erfindung wird mit einer Hängefördervorrichtung für ein Kommissioniersystem gemäß den Ansprüchen 1 und 18 gelöst.

Durch die vorgeschlagenen Maßnahmen kann die Tragstruktur besonders flexibel gestaltet werden, da diese nur eine Fahrfläche für die Transportträger zur Verfügung stellen muss.

Darüber hinaus kann durch die vorgeschlagenen Maßnahmen eine Route des Transportträgers, eine Geschwindigkeit des Transportträgers, eine Beschleunigung des Transportträgers und/oder ein Abstand des Transportträgers zu einem anderen, vorausfahrenden Transportträger individuell gewählt werden. Durch entsprechende Vorgabe der Geschwindigkeit des Transportträgers und/oder des Abstandes des Transportträgers zu einem anderen, vorausfahrenden Transportträger kann auch ein bestimmter Durchsatz von Transportträgern vorgegeben beziehungsweise erreicht werden. Beispielsweise kann die besagte Geschwindigkeit und der besagte Abstand in Kurven erhöht und auf geraden Abschnitten verringert werden. Der besagte Durchsatz kann dabei insbesondere konstant gehalten werden. Möglich ist insbesondere auch, eine Pendelbewegung der Hängeware, welche beim Beschleunigen oder Bremsen des Transportträgers auftreten kann, individuell auszuregeln. Dabei werden Antriebsräder des Transportträgers so angetrieben, dass sie einer Pendelbewegung entgegenwirken. Regelalgorithmen für diesen Zweck sind grundsätzlich bekannt und werden daher an dieser Stelle nicht im Detail ausgeführt.

Die Hängeware kann generell durch Kleidungsstücke gebildet sein, die mittels Kleiderbügel an den Transportträgern hängen, oder durch Transporttaschen zur Aufnahme von Waren, welche an den Transportträgern hängen.

Günstig ist es, wenn die Hängefördervorrichtung oder der/die Transportträger die Hängeware umfasst, welche mit dem Transportträger transportierbar ist, und die Hängeware gegebenenfalls eine Transporttasche mit einem Taschenkörper zur Aufbewahrung einer Ware aufweist.

Insbesondere sind die Transporttasche und der Transportträger aneinandergekoppelt. Die Transporttasche umfasst in einer bevorzugten Ausführung einen Hängeträger, wobei der Hängeträger und der Transportträger über eine Gelenkverbindung derart gelenkig miteinander gekoppelt sind, dass der Hängeträger um eine im Wesentlichen parallel zur Hängefördervorrichtung (beziehungsweise im Wesentlichen orthogonal zur Transportrichtung des Transportträger) verlaufende Achse relativ zum Transportträger schwenkbar ist. Der Transportträger kann mit einem ersten Kupplungselement und der Hängeträger mit einem zweiten Kupplungselement versehen werden, wobei das erste Kupplungselement und das zweite Kupplungselement koppelbar sind und die Gelenkverbindung bilden. Das erste Kupplungselement kann dabei eine Schwenkaufnahme und das zweite Kupplungselement eine Schwenklagerachse umfassen. Die Schwenklagerachse kann dabei an einem Haken ausgebildet sein. Nach einer anderen Ausführung kann die Gelenkverbindung zwischen dem Hängeträger und dem Transportträger einen elastischen Körper umfassen, insbesondere aus Elastomermaterial, welcher einerseits mit dem Hängeträger und andererseits mit dem Transportträger verbunden ist. Der Hängeträger und der Transportträger sind über den elastischen Körper (die elastische Gelenkverbindung) bevorzugt dauerhaft beziehungsweise unlösbar miteinander verbunden.

Es kann sich von Vorteil erweisen, wenn gemäß einem Verfahren zum Ansteuern von Transportträgern zum Transport von Hängeware an einer Hängefördervorrichtung für ein Kommissioniersystem folgende Schritte ausgeführt werden:
Bereitstellen einer Fahrwegmarkierung entlang eines Transportwegs, umfassend eine Meldemarkierung und eine Abfragemarkierung, welche einem Weichenabschnitt des Transportwegs zugeordnet ist, wobei der Weichenabschnitt eine zu einem Knoten des Weichenabschnitts hinführende Einlaufstrecke und mehrere von dem Knoten wegführende Auslaufstrecken umfasst und die Einlaufstrecke und jeweils eine Auslaufstrecke jeweils einen Weg für den Transportträger im Weichenabschnitt bilden, wobei die Abfragemarkierung entlang der Einlaufstrecke angeordnet ist,
Bereitstellen einer Fahrvorgabe in einem Speicher eines Transportträgers, welche eine Wegdefinition umfasst, die einen Weg der Wege für den Transportträger im Weichenabschnitt vorgibt,
Bewegen des Transportträgers entlang des Transportwegs durch eine Fahrsteuerung des Transportträgers,
Passieren des Weichenabschnitts durch den Transportträger, umfassend die Schritte:
   Abrufen der Wegdefinition aus dem elektronischen Speicher, wenn der Transportträger die Abfragemarkierung erreicht, durch die Fahrsteuerung,
   Auswählen des Weges im Weichenabschnitt gemäß der Wegdefinition durch die Fahrsteuerung,
   Ansteuern des Transportträgers durch die Fahrsteuerung, sodass dieser im Weichenabschnitt entlang des ausgewählten Weges bewegt wird,
   Übertragen einer weiteren Fahrvorgabe von einer übergeordneten Steuerung an den Transportträger, wenn dieser die Meldemarkierung erreicht, wobei die weitere Fahrvorgabe im Speicher des Transportträgers bereitgestellt wird.

Entlang des Transportwegs wird die Fahrwegmarkierung bereitgestellt. Vorzugsweise ist die Fahrwegmarkierung an der Tragstruktur, insbesondere auf der Fahrfläche, angeordnet. Darüber hinaus umfasst die Fahrwegmarkierung zumindest die Abfragemarkierung sowie die Meldemarkierung. Wie nachfolgend beschrieben wird, kann die Fahrwegmarkierung überdies weitere Markierungen umfassen.

Die Abfragemarkierung markiert einen Ort, beispielsweise einen Abbiegepunkt, entlang des Transportweges, welcher in einer Transportrichtung des Transportträgers dem Knoten des Weichenabschnitts vorgelagert ist. Ferner beeinflusst die Abfragemarkierung ein Verhalten des Transportträgers. Konkret wird der Transportträger bzw. dessen Fahrsteuerung durch ein Erreichen der Abfragemarkierung dazu veranlasst die Wegdefinition aus dem Speicher abzurufen. Somit wirkt die Abfragemarkierung im Wesentlichen als Abbiegepunkt. Hierfür ist die Abfragemarkierung entlang der Einlaufstrecke des Weichenabschnitts angeordnet.

Darüber hinaus markiert die Meldemarkierung einen Ort bzw. Meldepunkt entlang des Transportweges, an welchem eine Übertragung einer neuen bzw. der weiteren Fahrvorgabe möglich und gegebenenfalls erforderlich ist. Die Meldemarkierung ist vorzugsweise einem nachfolgend beschriebenen Zusammenführungsabschnitt zugeordnet, an welchem mehrere Strecken des Transportwegs auf eine Strecke zusammenlaufen.

Es kann vorgesehen sein, dass die Fahrwegmarkierung eine Fahrmarkierung umfasst, mit welcher der Transportträger entlang des Transportweges leitbar ist. Die Fahrmarkierung wird vorzugsweise beim Bewegen des Transportträgers durch diesen verfolgt. Hierfür ist es besonders vorteilhaft, wenn die Fahrmarkierung durch den Transportträger, insbesondere durch die Erfassungseinheit des Transportträgers, erfasst und der Transportträger durch die Fahrsteuerung derart angesteuert wird, dass der Transportträger entlang der Fahrmarkierung bewegt wird.

Vorzugsweise ist die Fahrmarkierung als entlang des Transportwegs verlaufende Fahrlinie mit einer ersten Kante und einer zweiten Kante ausgebildet. Beim Bewegen des Transportträgers wird insbesondere wahlweise die erste Kante oder die zweite Kante durch den Transportträger verfolgt. Die (optische) Fahrmarkierung kann somit als Leit- bzw. Fahrlinie auf der Fahrfläche der Tragstruktur ausgebildet sein, entlang welcher der Transportträger entlangfahren soll. Um die Verzweigung des Transportwegs im Weichenabschnitt auszubilden, kann die Fahrlinie, beispielsweise stern- oder Y-förmig, verzweigt sein, um die Einlaufstrecke und die Auslaufstrecken zu markieren.

Darüber hinaus kann vorgesehen sein, dass die Fahrmarkierung eine, insbesondere erste, Umschaltmarkierung umfasst, wobei der Transportträger durch die Fahrsteuerung in Reaktion auf ein Erreichen dieser Umschaltmarkierung derart angesteuert wird, dass die erste Kante der Fahrmarkierung durch den Transportträger verfolgt wird und/oder eine, insbesondere zweite, Umschaltmarkierung umfasst, wobei der Transportträger durch die Fahrsteuerung in Reaktion auf ein Erreichen dieser Umschaltmarkierung derart angesteuert wird, dass die zweite Kante der Fahrmarkierung durch den Transportträger verfolgt wird. Somit kann wahlweise die erste oder zweite Kante verfolgt werden, unabhängig davon, ob der Transportträger beim Erreichen der jeweiligen Umschaltmarkierung die erste oder zweite Kante verfolgt hat. Dadurch kann beispielsweise eine Zwangsführung erreicht werden, beispielsweise wenn eine Strecke durch den Transportträger nicht befahren werden darf.

Analog dazu kann bei einem Transportträger vorgesehen sein, dass die Fahrsteuerung dazu ausgebildet ist, in Reaktion auf ein Erfassen einer Umschaltmarkierung erster Art, beispielsweise der ersten Umschaltmarkierung, eine erste Leitvorgabe einer Fahrmarkierung zu verfolgen und in Reaktion auf ein Erfassen einer Umschaltmarkierung zweiter Art, beispielsweise der zweiten Umschaltmarkierung, eine zweite Leitvorgabe einer Fahrmarkierung zu verfolgen. Die erste und zweite Leitvorgabe können insbesondere durch die erste und zweite Kante der Fahrlinie gebildet bzw. bereitgestellt sein.

Darüber hinaus kann vorgesehen sein, dass die Fahrwegmarkierung eine Regelungsmarkierung umfasst, mit welcher eine Bewegungsdynamik des Transportträgers, insbesondere eine Geschwindigkeit, ein Beschleunigungsprofil und/oder ein Abstand zu einem vorausfahrenden Transportträger, beeinflussbar ist.

Beispielsweise kann die Regelungsmarkierung als Haltepunkt wirken, wenn die Markierung das Anhalten des Transportträgers bewirkt. Auch eine Änderung der Geschwindigkeit des Transportträgers, die Änderung der Beschleunigung des Transportträgers und/oder die Änderung des Abstands des Transportträgers zu einem anderen, insbesondere vorausfahrenden, Transportträger kann durch eine Regelmarkierung beeinflusst werden.

Die Abfragemarkierung, die Meldemarkierung, die Regelmarkierung, die Kontrollmarkierung und dergleichen können im Wesentlichen unter dem Begriff "Steuermarkierung" zusammengefasst werden. Somit kann eine Steuermarkierung eine Abfragemarkierung, eine Meldemarkierung, eine Regelmarkierung und/oder eine Kontrollmarkierung sein.

Vorteilhaft ist es, wenn der Transportträger beispielsweise in geraden Abschnitten des Transportweges mit höherer Geschwindigkeit als in gekrümmten Abschnitten des Transportweges bewegt wird. Ferner kann vorgesehen sein, dass der Transportträger in Abschnitten des Transportweges, in welchen beispielsweise Weichenabschnitte oder Zusammenführungsabschnitte angeordnet sind, mit größerem Abstand zu einem vorausfahrenden Transportträger bewegt wird. Dies kann mit einer entsprechenden Regelungsmarkierung oder mit mehreren Regelungsmarkierungen erreicht werden.

Darüber hinaus kann vorgesehen sein, dass die Fahrwegmarkierung weitere Markierungen, wie beispielsweise eine Kontrollmarkierung, umfasst.

Hierbei kann vorgesehen sein, dass ein Erreichen der Kontrollmarkierung ein Senden eines Meldesignals auslöst, wie dies nachfolgend im Zusammenhang mit der Meldemarkierung beschrieben wird. Somit kann eine Ankunft des Transportträgers an einem definierten Ort verifiziert werden, ohne dass hierbei zwingend eine neue Fahrvorgabe übermittelt wird.

Vorteilhaft ist es bei einem Transportträger, wenn die Fahrsteuerung dazu ausgebildet ist, in Reaktion auf ein Erfassen einer Kontrollmarkierung ein Senden eines Meldesignals auszulösen.

Es kann vorgesehen sein, dass die Fahrwegmarkierung, insbesondere die zuvor beschriebenen Markierungen der Fahrwegmarkierung, durch den Transportträger, insbesondere durch eine Erfassungseinheit des Transportträgers, erfasst und erkannt oder der Transportträger durch die Fahrwegmarkierung erfasst und erkannt wird. In letzterem Fall kann die jeweilige Markierung dazu ausgebildet sein, der Fahrsteuerung das Erreichen dieser zu signalisieren.

Von Vorteil ist es, wenn die Fahrwegmarkierung, insbesondere die Abfragemarkierung und/oder die Meldemarkierung, durch den Transportträger, beispielsweise durch eine Erfassungseinheit des Transportträgers, erfassbar ist bzw. durch die Erfassungseinheit des Transportträgers erfasst und ausgewertet wird, insbesondere um die Abfragemarkierung und/oder die Meldemarkierung zu erkennen. Ein Schritt des Erfassens und Auswertens der Fahrwegmarkierung erfolgt vorzugsweise während des Bewegens des Transportträgers entlang des Transportwegs. Dadurch kann die Fahrwegmarkierung als im Wesentlichen passive Markierung ausgebildet sein, sodass insbesondere keine Strom- und oder Datenleitungen mit den Markierungen verbunden sein müssen.

Bevorzugt ist vorgesehen, dass die Fahrwegmarkierung, insbesondere die Abfragemarkierung, die Meldemarkierung, die Regelungsmarkierung, und/oder die Fahrmarkierung, ausgewählt ist aus einer Gruppe umfassend eine optische Markierung, mechanische Markierung, elektronische Markierung, magnetische Markierung und/oder elektromagnetische Markierung.

Eine optische Markierung kann auf die Tragstruktur aufgebracht, beispielsweise aufgemalt, aufgeklebt, eingeätzt, eingraviert, aufgedruckt oder dergleichen sein. Die optische Markierung kann insbesondere als Barcode oder QR-Code ausgebildet sein. Zudem kann die optische Markierung (in Transportrichtung) auch länger ausgebildet sein und auf mehrere aufeinanderfolgende Transportträger wirken. Obwohl der Einsatz optischer Markierungen von Vorteil ist, können natürlich auch Markierungen auf anderer Basis eingesetzt werden, beispielsweise mechanische, elektronische und/oder magnetische Markierungen.

Eine mechanische Markierung kann beispielsweise als Taster ausgebildet sein, welche durch den Transportträger betätigt wird, oder als (gefederter) Anschlag, welcher einen am Transportträger angeordneten Taster betätigt, wenn der Transportträger die jeweilige Markierung erreicht.

Ferner kann eine elektronische Markierung als elektrische Verbindungseinrichtung ausgebildet sein, wobei eine elektrische Verbindung zwischen der Markierung und dem Transportträger hergestellt wird, wenn der Transportträger die jeweilige Markierung erreicht.

Eine magnetische oder elektromagnetische Markierung kann beispielsweise durch einen stationären Elektromagneten oder Permanentmagneten bereitgestellt sein, wobei dessen Magnetfeld durch einen am Transportträger angeordneten Magnetfeldsensor erfasst werden kann, wenn der Transportträger die jeweilige Markierung erreicht. Alternativ kann auch der Magnetfeldsensor stationär an der Tragstruktur angeordnet sein und die Markierung bereitstellen. Hierbei kann der Elektromagnet oder Permanentmagnet am Transportträger angeordnet sein.

Um die Fahrwegmarkierung zu erfassen und gegebenenfalls zu erkennen kann vorgesehen sein, dass der Transportträger eine mit der Fahrsteuerung verbundene Erfassungseinheit aufweist, mit welcher eine, insbesondere auf der Tragstruktur des Verteilermoduls und/oder der Hängefördervorrichtung angeordnete, Fahrwegmarkierung, insbesondere eine Fahrmarkierung und/oder Steuermarkierung, erfassbar bzw. lesbar ist. Mittels der Fahrwegmarkierung kann eine Bewegung des Transportträgers auf der Tragstruktur beeinflussbar sein. Die Erfassungseinheit kann als Fahrflächensensor ausgebildet sein oder einen solchen umfassen.

Es ist vorteilhaft, wenn die Erfassungseinheit einen Sensor, insbesondere einen Fahrflächensensor, umfasst, welcher ausgewählt ist aus einer Gruppe umfassend optischer Sensor, mechanischer Sensor, elektronischer Sensor und/oder Magnetfeldsensor. Zweckmäßig ist es, wenn die Fahrwegmarkierung entsprechend ausgebildet ist. Die Fahrwegmarkierung kann hierbei die Bewegung des Transportträgers beeinflussen. Insbesondere können der Fahrflächensensor als optischer Fahrflächensensor und die Fahrwegmarkierung als optische Fahrmarkierung und/oder die Steuermarkierung als optische Steuermarkierung ausgebildet sein. Mit anderen Worten wird das Verhalten des Transportträgers bei dieser Ausführungsform durch Markierungen auf der Tragstruktur beeinflusst.

Um unterschiedliche Bereiche wahlweise, beispielsweise zwei Kanten der Fahrlinie unabhängig voneinander, zu erfassen, ist bevorzugt vorgesehen, dass der Sensor eine erste Sensoreinheit und eine zweite Sensoreinheit umfasst, welche wechselweise aktivierbar und/oder auslesbar sind.

Es kann also vorgesehen sein, dass die Fahrmarkierung als entlang des Transportwegs verlaufende Fahrlinie mit einer ersten Kante und einer zweiten Kante ausgebildet ist und der Transportträger eine mit der Fahrsteuerung verbundene Erfassungseinheit aufweist, welche einen Sensor mit einer ersten Sensoreinheit und einer zweiten Sensoreinheit umfasst, wobei die erste Sensoreinheit dazu eingerichtet ist, die erste Kante der Fahrmarkierung zu erfassen und die zweite Sensoreinheit dazu eingerichtet ist, die zweite Kante der Fahrmarkierung zu erfassen.

Günstig ist es, wenn der Transportträger, insbesondere die Erfassungseinheit des Transportträgers, eine erste Sensoreinheit zur Erfassung der ersten Kante und eine zweite Sensoreinheit zur Erfassung der zweiten Kante aufweist, wobei durch die Fahrsteuerung wahlweise die erste Sensoreinheit aktiviert und/oder ausgelesen wird, um die erste Kante zu verfolgen, oder die zweite Sensoreinheit aktiviert und/oder ausgelesen wird, um die zweite Kante zu verfolgen. Hierbei kann beispielsweise wahlweise bloß die erste oder zweite Sensoreinheit aktiviert werden, sodass von der jeweils anderen Sensoreinheit kein Signal ausgegeben wird. Alternativ können beispielsweise beide Sensoreinheiten aktiviert sein jedoch wahlweise Signale bloß von einer der Sensoreinheiten ausgelesen werden, ja nachdem, welche Kante verfolgt werden soll.

Hierbei kann auch vorgesehen sein, dass die Erfassungseinheit einen Flächensensor umfasst, beispielsweise einen Fotosensor oder eine Kamera, mit welchem ein die Fahrlinie erfasst werden kann. Die erste und zweite Sensoreinheit können hierbei durch eine erste Pixelgruppe, mit welcher die erste Kante erfasst wird, und eine zweite Pixelgruppe, mit welcher die zweite Kante erfasst wird, gebildet sein.

Die Fahrvorgabe und/oder die weitere Fahrvorgabe werden im Speicher des Transportträgers bereitgestellt. Dies kann dadurch erfolgen, dass die (weitere) Fahrvorgabe von der übergeordneten Steuerung, insbesondere mittels der Kommunikationseinheit, an den Transportträger bzw. dessen Fahrsteuerung übertragen und im Speicher gespeichert wird. Vorzugsweise ist der Speicher als beschreibbarer und auslesbarer (elektronischer) Speicher ausgebildet.

Einerseits kann die Fahrvorgabe, insbesondere eine erste Fahrvorgabe, an einem Startort des Transportträgers, beispielsweise in einem Lager für Hängeware, an einer Beladestation oder dergleichen, von der übergeordneten Steuerung, insbesondere durch eine Kommunikationseinheit der übergeordneten Steuerung, an den Transportträger übertragen werden, um die Fahrvorgabe bereitzustellen. Die weitere Fahrvorgabe oder weitere Fahrvorgaben können an einer oder mehreren Meldemarkierungen ebenso von der übergeordneten Steuerung, insbesondere durch eine Kommunikationseinheit der übergeordneten Steuerung, an den Transportträger übertragen werden, wie nachfolgend beschrieben wird.

Günstig ist es, wenn auch die weitere Fahrvorgabe eine Wegdefinition umfasst.

Darüber hinaus können die Fahrvorgabe und/oder die weitere Fahrvorgabe eine Freigabeanweisung umfassen.

Im Weichenabschnitt verzweigt sich der Transportweg an einem Knoten. Hierfür umfasst der Weichenabschnitt die zum Knoten hinführende Einlaufstrecke, über welche der Transportträger zum Knoten bewegt wird, und mehrere, insbesondere zwei, wegführende Auslaufstrecken, über welche der Transportträger vom Knoten weg bewegt wird. Entlang des Transportweges können wie nachfolgend beschrieben mehrere derartige Weichenabschnitte vorgesehen sein.

Es ist vorteilhaft, wenn die Fahrmarkierung eine Fahrmarkierung des Weichenabschnitts umfasst, wobei eine erste Kante der Fahrmarkierung des Weichenabschnitts entlang der Einlaufstrecke und ferner entlang einer ersten Auslaufstrecke und eine zweite Kante der Fahrmarkierung des Weichenabschnitts entlang der Einlaufstrecke und ferner entlang einer zweiten Auslaufstrecke verlaufen. Die Kanten verlaufen hierbei derart, dass im Weichenabschnitt die erste Kante einen ersten Weg und die zweite Kante einen zweiten Weg definieren. Der Transportträger wird beim Ansteuern des Transportträgers durch die Fahrsteuerung derart angesteuert, dass die erste Kante verfolgt wird, wenn der erste Weg ausgewählt wurde, oder die zweite Kante verfolgt wird, wenn der zweite Weg ausgewählt wurde.

Die Wegdefinition gibt einen Weg für den Transportträger zumindest in einem Weichenabschnitt des Transportwegs bzw. der Tragstruktur vor und bildet somit im Wesentlichen eine Entscheidungsgrundlage für die Fahrsteuerung, welcher Weg im (nächsten) Weichenabschnitt oder in den nächsten Weichenabschnitten gewählt bzw. befahren werden soll. Im Wesentlichen gibt die Wegdefinition an, entlang welcher Auslaufstrecke der Transportträger vom Knoten wegbewegt werden soll.

Die Wegdefinition kann etwa die Wahl einer bestimmten Fahrmarkierung in einem Weichenabschnitt umfassen, also etwa die Abfolge "Geradeausfahrt, Umleitfahrt, Umleitfahrt, Geradeausfahrt". Diese Wegdefinition wird, wie erwähnt, an die Fahrsteuerung übermittelt, im Speicher gespeichert, und dient dann der autonomen Wahl einer Fahrmarkierung beziehungsweise dem autonomen Schalten der Weichen. Das heißt, im ersten Weichenabschnitt wird jene Fahrmarkierung gewählt, welche eine Geradeausfahrt bewirkt, im zweiten Weichenabschnitt jene Fahrmarkierung, welche eine Umleitfahrt bewirkt, und so weiter. Die Übertragung der Wegdefinition kann wiederum optisch, funkbasiert oder drahtgebunden erfolgen.

Sind zwei Auslaufstrecken und somit zwei auswählbare Wege im Weichenabschnitt vorhanden, so kann die Wegdefinition beispielsweise binär angegeben sein, wobei "0" einen ersten Weg bzw. eine erste Auslaufstrecke und "1" einen zweiten Weg bzw. eine zweite Auslaufstrecke definiert. Somit kann beispielsweise jedem Weichenabschnitt, der durch die Fahrvorgabe vorgegeben ist, ein Bit zugeordnet sein. Bildlich gesprochen können "0" bzw. "1" beispielsweise "links" und "rechts" bedeuten.

Die Wegdefinition umfasst in der Regel eine Auswahlvorgabe bzw. ein Bit für jeden Weichenabschnitt zwischen jenem Ort, an welchem der Transportträger die Fahrvorgabe erhält, beispielsweise dem Startort bzw. der Meldemarkierung, und der nächsten Meldemarkierung, einem Zielort und/oder einer zuvor beschriebenen Kontrollmarkierung. Somit beschreibt die Wegdefinition im Wesentlichen den durch den Transportträger zurückzulegenden Weg, beispielsweise bis zur Meldemarkierung, an welcher der Transportträger die weitere Fahrvorgabe erhält.

Um ein komplexes Transportsystem zu realisieren, kann es somit vorteilhaft sein, dass die Fahrwegmarkierung entlang des Transportwegs eine Vielzahl von Abfragemarkierungen umfasst, welche jeweils einem Weichenabschnitt des Transportwegs zugeordnet sind. Hierbei umfassen die Weichenabschnitte jeweils eine zu einem Knoten des jeweiligen Weichenabschnitts hinführende Einlaufstrecke und mehrere von dem Knoten wegführende Auslaufstrecken. Die Einlaufstrecke und jeweils eine Auslaufstrecke bilden jeweils einen Weg für den Transportträger im jeweiligen Weichenabschnitt, wobei die jeweilige Abfragemarkierung entlang der Einlaufstrecke angeordnet ist. Hierbei kann die Wegdefinition eine Liste aus mehreren Listenelementen umfassen, wobei Listenelemente jeweils einen Weg der Wege für den Transportträger in einem der Weichenabschnitte vorgeben. Ferner werden mehrere, insbesondere aufeinanderfolgende, Weichenabschnitte vom Transportträger passiert. Das Auswählen eines Weges der Wege erfolgt jeweils gemäß einem der Listenelemente. Zweckmäßigerweise erfolgt das Auswählen der Auslaufstrecke für aufeinanderfolgende Weichenabschnitte gemäß aufeinanderfolgender Listenelementen.

Eine derartige Liste mit beispielsweise vier Listenelementen kann die Listenelemente "links, rechts, rechts, links" oder "0, 1, 1, 0" wie zuvor beschrieben "Geradeausfahrt, Umleitfahrt, Umleitfahrt, Geradeausfahrt" umfassen. Hierbei werden auszuwählende Zweigstrecken für die nächsten vier Weichenabschnitte angegeben. In diesem Beispiel würde der Transportträger in einem ersten, zweiten, dritten und vierten Weichenabschnitt nacheinander die erste bzw. linke, die zweite bzw. rechte, erneut die zweite bzw. rechte und schließlich die erste bzw. linke Auslaufstrecke wählen. Selbstverständlich kann die Liste beliebig viele Listenelemente umfassen, wobei kurze Listen zwar häufigere Übertragungen neuer Wegdefinitionen bzw. Fahrvorgaben erfordern, allerdings auch eine größere Flexibilität des Systems ermöglichen.

Günstig ist es, wenn den Listenelementen jeweils eine Ordnungszahl zugeordnet wird und beim Passieren des (jeweiligen) Weichenabschnitts oder der Weichenabschnitte ein Markierungszähler durch die Fahrsteuerung inkrementiert wird, wenn die Abfragemarkierung (durch den Transportträger) erreicht wird. Hierbei kann das Auswählen der Auslaufstrecke gemäß jenem Listenelement erfolgt, dessen Ordnungszahl dem Markierungszähler entspricht. Somit kann durch die Fahrsteuerung im Wesentlichen mitgezählt werden, wie viele Weichenabschnitte passiert wurden und das entsprechende Listenelement betrachtet werden. Beim Inkrementieren wird der Markierungszähler um eins erhöht. Wenn also der Transportträger den ersten Weichenabschnitt und somit die erste Abfragemarkierung erreicht, wird der Markierungszähler von null auf eins erhöht. Die Auswahl des Weges im Weichenabschnitt erfolgt somit gemäß dem ersten Listenelement. Im i-ten Weichenabschnitt wird analog der Markierungszähler von i-1 auf i erhöht. Die Auswahl des Weges erfolgt somit gemäß dem i-ten Listenelement. Der Markierungszähler kann beispielsweise als in der Fahrsteuerung implementierte Zählvariable ausgebildet sein.

Alternativ kann jeweils das erste Listenelement für die Auswahl des Weges herangezogen werden und anschließend an das Auswählen des Weges gelöscht werden. Somit wird das nächste Listenelement das "erste Listenelement", welches im nächsten Weichenabschnitt für die Auswahl des Weges herangezogen wird. Hierbei ist kein Markierungszähler erforderlich.

Wenn das Auswählen der Wege für alle Listenelemente der Wegdefinition erfolgt ist, kann es zweckmäßig sein, dass der Markierungszähler durch die Fahrsteuerung auf null gesetzt wird. Somit können den Listenelementen einer Wegdefinition einer weiteren Fahrvorgabe, welche an der Meldemarkierung an den Transportträger übertragen wird, wiederum von eins aufsteigende Ordnungszahlen zugeordnet werden. Somit ist die an der Meldemarkierung übertragene Fahrvorgabe unabhängig davon, wie viele Weichenabschnitte der Transportträger auf dem Weg zur Meldemarkierung passiert hat. Darüber hinaus könnte auch dieselbe Fahrvorgabe bzw. Wegdefinition erneut durchlaufen werden, was beispielsweise in einem Kreislauf sinnvoll sein kann.

Günstig ist es, wenn die Fahrsteuerung des Transportträgers dazu eingerichtet ist, in Reaktion auf ein Erfassen einer Abfragemarkierung die Fahrvorgabe aus dem elektronischen Speicher abzurufen und eine Auslaufstrecke jenes Weichenabschnitts, welcher der erfassten Abfragemarkierung zugeordnet ist, gemäß der Fahrvorgabe, insbesondere gemäß der Wegdefinition, auszuwählen.

Wenn der Transportträger entlang des Transportweges bewegt wird, so kann es vorkommen, dass dieser einen Weichenabschnitt erreicht. Beim Passieren des Weichenabschnitts wird der Transportträger im Wesentlichen entlang des Transportweges über die Einlaufstrecke und eine der Auslaufstrecken bewegt. Eine Auswahl, über welche der Auslaufstrecken der Transportträger bewegt wird, erfolgt durch die Fahrsteuerung gemäß der Wegdefinition.

Günstig ist es, wenn der Transportweg einen Zusammenführungsabschnitt mit einem Knoten, einer zum Knoten hinführenden ersten Einlaufstrecke, einer zum Knoten hinführenden zweiten Einlaufstrecke und einer vom Knoten wegführenden Auslaufstrecke aufweist. Hierbei kann der Transportträger beim Bewegen des Transportträgers über eine der Einlaufstrecken zum Knoten hingeführt, auf die Auslaufstrecke überführt und über die Auslaufstrecke vom Knoten weggeführt werden. Dadurch können mehrere Strecken zusammengeführt und beispielsweise Transportträger von unterschiedlichen Startorten oder Meldemarkierungen zu einem gemeinsamen Zielort geleitet werden.

Vorzugsweise stellen im Zusammenführungsabschnitt die erste Einlaufstrecke und die Auslaufstrecke einen ersten Weg für den Transportträger, insbesondere für einen Transportträger, welcher über die erste Einlaufstrecke zum Knoten bewegt wird, und die zweite Einlaufstrecke und die Auslaufstrecke einen zweiten Weg für den Transportträger, insbesondere für einen Transportträger, welcher über die erste Einlaufstrecke zum Knoten bewegt wird, bereit.

Wenn eine Fahrmarkierung und ein Zusammenführungsabschnitt vorgesehen sind, ist es vorteilhaft, wenn die Fahrmarkierung eine Fahrmarkierung des Zusammenführungsabschnitts umfasst, wobei eine erste Kante der Fahrmarkierung des Zusammenführungsabschnitts entlang der ersten Einlaufstrecke und ferner entlang der Auslaufstrecke und eine zweite Kante der Fahrmarkierung des Weichenabschnitts entlang der zweiten Einlaufstrecke und ferner entlang der Auslaufstrecke verlaufen. Hierbei kann der Transportträger durch die Fahrsteuerung derart angesteuert werden, dass die erste Kante verfolgt wird, wenn der Transportträger über die erste Einlaufstrecke zum Knoten hingeführt und auf die Auslaufstrecke überführt wird, und die zweite Kante verfolgt wird, wenn der Transportträger über die zweite Einlaufstrecke zum Knoten hingeführt und auf die Auslaufstrecke überführt wird. Die Fahrmarkierung des Zusammenführungsabschnittes kann insbesondere Y-förmig ausgebildet sein.

Hierbei kann beispielsweise vorgesehen sein, dass entlang der ersten Einlaufstrecke eine erste Umschaltmarkierung angeordnet ist, sodass der Transportträger zwingend die erste Kante verfolgt. Dadurch kann in einfacher Art und Weise gewährleistet werden, dass der Transportträger, beispielsweise aufgrund einer zuvor getätigten Einstellung, nicht die zweite Kante verfolgt und so auf die zweite Einlaufstrecke fehlgeleitet wird. In gleicher Weise kann entlang der zweiten Einlaufstrecke eine zweite Umschaltmarkierung angeordnet sein, sodass der Transportträger zwingend die zweite Kante verfolgt.

Alternativ kann vorgesehen sein, dass zwischen benachbarten Einlaufstrecken jeweils ein spitzer Winkel und/oder zwischen Einlauf- und Auslaufstrecke jeweils ein stumpfer Winkel eingeschlossen ist. Hierbei kann eine Vorschrift in der Fahrsteuerung implementiert sein, dass, insbesondere im Zusammenführungsabschnitt, eine Kante, welche auf einen spitzen Winkel zuführt nicht verfolgt werden darf.

Ebenso ist es denkbar, dass eine Kantenverfolgung im (unmittelbaren) Bereich des Knotens des Zusammenführungsabschnittes kurz unterbrochen und der Transportträger geradeaus weiterbewegt wird. Unmittelbar nach dem Knoten kann die Kantenverfolgung wieder aufgenommen werden. Auch dadurch kann gewährleistet werden, dass der Transportträger nicht auf eine Einlaufstrecke abbiegt.

Zweckmäßig kann sein, dass der Transportweg eine Verbindungsstrecke aufweist, welche eine der Auslaufstrecken des Weichenabschnitts mit einer der Einlaufstrecken des Zusammenführungsabschnitts verbindet. In gleicher Weise kann auch eine Verbindungsstrecke vorgesehen sein, welche die Auslaufstrecke des Zusammenführungsabschnitts mit der Einlaufstrecke des Weichenabschnitts oder eines weiteren Weichenabschnitts verbindet.

Entlang der Verbindungsstrecke können verschiedene Vorrichtungen, insbesondere eine Beladevorrichtung zum Beladen von an Transportträgern transportierten Hängetaschen, eine Entladevorrichtung zum Entladen derartiger Hängetaschen, eine Sortiervorrichtung zum Sortieren der Transportträger, Puffervorrichtungen zum Puffern von Transportträgern und/oder dergleichen angeordnet sein.

Günstig ist es, wenn die Meldemarkierung dem Zusammenführungsabschnitt zugeordnet und entlang dessen ersten Einlaufstrecke angeordnet ist.

Um beispielsweise eine zuverlässige Übertragung der weiteren Fahrvorgabe zu gewährleisten und/oder um eine Kollision im Zusammenführungsabschnitt zu vermeiden, kann es vorteilhaft sein, wenn der Transportträger durch die Fahrsteuerung angehalten wird, wenn dieser die Meldemarkierung erreicht.

Im Zusammenführungsabschnitt kann es vorkommen, dass sowohl entlang der ersten als auch entlang einer weiteren Einlaufstrecke ein Transportträger in Richtung zum Knoten bewegt wird. Somit kann gerade hier eine Koordination der Transportträger zweckmäßig sein.

Die kann insbesondere dadurch erreicht werden, dass die Meldemarkierung dem Zusammenführungsabschnitt zugeordnet und entlang der ersten Einlaufstrecke des Zusammenführungsabschnitts angeordnet ist, wobei der Transportträger beim Bewegen des Transportträgers über die erste Einlaufstrecke zur Meldemarkierung bewegt wird und die weitere Fahrvorgabe eine Freigabeanweisung umfasst, welche angibt, wann der Transportträger von der Meldemarkierung zum Knoten bewegt und auf die Auslaufstrecke überführt werden soll, und das Verfahren folgenden Schritt umfasst:
Ansteuern des Transportträgers durch die Fahrsteuerung gemäß der weiteren Fahrvorgabe, sodass der Transportträger gemäß der Freigabeanweisung von der ersten Einlaufstrecke auf die Auslaufstrecke bewegt wird.

Die Freigabeanweisung kann beispielsweise ein Losfahren oder ein Weiterfahren des Transportträgers auslösen. Hierfür kann insbesondere eine Wartezeitspanne angegeben werden, welche der Transportträger beispielsweise an der Meldemarkierung oder am Startort verharren soll, bis dieser losfährt. Soll der Transportträger sofort losfahren oder weiterfahren, kann diese Wartezeitspanne null betragen.

Günstig ist es hierbei, wenn die Freigabeanweisung durch die übergeordnete Steuerung derart festgelegt wird, dass der Transportträger ohne Kollision mit einem anderen Transportträger auf die Auslaufstrecke bewegt wird.

Um Hängewaren zu sortieren, kann insbesondere vorgesehen sein, dass die Freigabeanweisung durch das Leitsystem derart festgelegt wird, dass der Transportträger auf der Auslaufstrecke hinter einem weiteren Transportträger eingereiht wird, welcher von der zweiten Einlaufstrecke der Einlaufstrecken auf die Auslaufstrecke bewegt wird.

Eine Koordination der Transportträger kann ferner dadurch erreicht werden, dass die Fahrsteuerung zur Kommunikation mit einer Fahrsteuerung eines anderen Transportträgers ausgebildet ist. Vorzugsweise ist vorgesehen, dass die Meldemarkierung dem Zusammenführungsabschnitt zugeordnet und entlang der ersten Einlaufstrecke des Zusammenführungsabschnitts angeordnet ist, wobei der Transportträger beim Bewegen des Transportträgers über die erste Einlaufstrecke zur Meldemarkierung bewegt wird, wobei die Fahrsteuerung zur Kommunikation mit anderen Transportträgern ausgebildet ist, und das Verfahren folgende Schritte umfasst:
Senden eines Stoppsignals durch eine Fahrsteuerung eines anderen Transportträgers, wenn sich der andere Transportträger im Zusammenführungsabschnitt befindet,
Ansteuern des Transportträgers durch die Fahrsteuerung, sodass dieser entlang der ersten Einlaufstrecke angehalten wird, wenn ein Stoppsignal empfangen wird,
Ansteuern des Transportträgers durch die Fahrsteuerung, sodass dieser von der ersten Einlaufstrecke auf die Auslaufstrecke bewegt wird, wenn kein Stoppsignal empfangen wird.

Das Senden des Stoppsignals kann hierbei durch den Transportträger und/oder den anderen Transportträger während eines Durchfahrens des Zusammenführungsabschnitts erfolgen.

Alternativ kann das Verfahren einen Schritt des Sendens eines Anfragesignals durch die Fahrsteuerung des Transportträgers umfassen, wenn dieser die weitere Fahrvorgabe erhalten hat. Das Senden des Stoppsignals durch die Fahrsteuerung des anderen Transportträgers kann hierbei in Reaktion auf ein Empfangen des Anfragesignals erfolgen.

Günstig ist es, wenn die Fahrsteuerung zum Senden und Empfangen eines Anfragesignals und/oder zum Senden und Empfangen eines Stoppsignals ausgebildet ist.

Ferner kann vorgesehen sein, dass die der Transportträger eine mit der Fahrsteuerung (zur Signal- und/oder Datenübermittlung) verbundene Sensorik zur Erfassung eines anderen Transportträgers, insbesondere im Zusammenführungsabschnitt, aufweist. Die Sensorik kann beispielsweise durch nachfolgend beschriebene Abstandssensoren bereitgestellt oder analog zu diesen ausgebildet sein.

Günstig ist es, wenn die Meldemarkierung dem Zusammenführungsabschnitt zugeordnet und entlang der ersten Einlaufstrecke des Zusammenführungsabschnitts angeordnet ist, wobei der Transportträger beim Bewegen des Transportträgers über die erste Einlaufstrecke zur Meldemarkierung bewegt wird, wobei die Fahrsteuerung mit einer Sensorik zur Erfassung eines anderen Transportträgers im Zusammenführungsabschnitt verbunden ist, und das Verfahren folgende Schritte umfasst:
Ansteuern des Transportträgers durch die Fahrsteuerung, sodass dieser entlang der ersten Einlaufstrecke angehalten wird, wenn ein anderer Transportträger im Weichenabschnitt durch die Sensorik erfasst wird,
Ansteuern des Transportträgers durch die Fahrsteuerung, sodass dieser von der ersten Einlaufstrecke auf die Auslaufstrecke bewegt wird, wenn kein anderer Transportträger im Weichenabschnitt durch die Sensorik erfasst wird.

Um einen Transportfluss im Zusammenführungsabschnitt zu gewährleisten kann vorgesehen sein, dass für jeden Zusammenführungsabschnitt eine individuelle Vorrangregelung oder eine generelle Vorrangregelung implementiert wird.

Ebenso kann vorgesehen sein, dass jedem Transportträger ein Transportauftrag mit einer definierten Priorität zugeordnet ist. Eine Vorrangregelung kann beispielsweise so aussehen, dass jener Transportträger mit einem Transportauftrag mit höherer Priorität im Zusammenführungsabschnitt Vorfahrt erhält. Hierbei kann vorgesehen sein, dass die die Priorität des jeweils zugeordneten Transportauftrags von einem der Transportträger an den anderen oder von beiden Transportträgern an den jeweils anderen übermittelt wird. Das Senden des Stoppsignals kann dann durch jenen Transportträger erfolgen, welchem der Transportträger mit höherer Priorität zugeordnet ist. Alternativ kann auch vorgesehen sein, dass der Transportträger mit niedriger Priorität selbsttätig stoppt. In diesem Fall ist das Senden des Stoppsignals nicht erforderlich.

Um die weitere Fahrvorgabe zu übertragen, ist es günstig, wenn die übergeordnete Steuerung, insbesondere die Kommunikationseinheit der übergeordneten Steuerung, zur drahtgebundenen oder drahtlosen, insbesondere optischen oder funkbasierten, Kommunikation ausgebildet ist. Beispielsweise können Daten und Befehle von der übergeordneten Steuerung der Hängefördervorrichtung oder des Kommissioniersystems an den Transportträger gesendet werden oder auch umgekehrt. Bei der drahtgebundenen Kommunikation kommt insbesondere die Powerline-Communication-Technologie in Betracht, konkret durch Nutzung eines Energieversorgungssystems der Hängefördervorrichtung für die Datenübertragung.

Günstig ist es, wenn das Verfahren zusätzlich folgenden Schritt umfasst:
Übermitteln eines Meldesignals vom Transportträger an die übergeordnete Steuerung, wenn der Transportträger die Meldemarkierung erreicht, wobei das Meldesignal von der Fahrsteuerung des Transportträgers gesendet und von der übergeordneten Steuerung empfangen wird,
wobei das Übertragen der weiteren Fahrvorgabe in Reaktion auf ein Empfangen des Meldesignals durch die übergeordnete Steuerung erfolgt.

Dadurch kann das Erreichen der Meldemarkierung der übergeordneten Steuerung mitgeteilt und somit die weitere Fahrvorgabe zu einem optimalen Zeitpunkt übermittelt werden.

Um in einen Transport von Hängeware durch den Transportträger korrigierend einzugreifen, beispielsweise weil sich eine Auftragsstruktur verändert hat, kann vorgesehen sein, dass die Fahrvorgabe eine Soll-Kennung der Meldemarkierung umfasst, zu welcher der Transportträger gemäß der Wegdefinition geleitet wird, wobei beim Senden des Meldesignals zusätzlich die Soll-Kennung der Meldemarkierung von der Fahrsteuerung des Transportträgers an die übergeordnete Steuerung gesendet wird und beim Empfangen des Meldesignals zusätzlich die Soll-Kennung der Meldemarkierung von der übergeordneten Steuerung empfangen und mit einer Ist-Kennung jener Meldemarkierung verglichen wird, an welcher die Soll-Kennung gesendet wurde. Hierbei kann das Verfahren einen Schritt eines Erstellens der weiteren Fahrvorgabe umfassen, wobei die weitere Fahrvorgabe eine korrigierende Wegdefinition umfasst, wenn die Soll-Kennung von der Ist-Kennung abweicht. Diese weitere Fahrvorgabe kann dann an den Transportträger übertragen werden.

Erreicht der Transportträger die Meldemarkierung, so wird von der übergeordneten Steuerung eine neue Fahrvorgabe bzw. die weitere Fahrvorgabe an den Transportträger übermittelt. Dies kann mittels einer Kommunikationseinheit der übergeordneten Steuerung erfolgen, welche im Bereich der Meldemarkierung angeordnet ist.

Günstig ist es, wenn die weitere Fahrvorgabe beim Übertragen und Bereitstellen dieser in einem Schritt des Sendens durch die übergeordnete Steuerung, insbesondere durch eine Kommunikationseinheit der übergeordneten Steuerung, gesendet wird. Die weitere Fahrvorgabe kann in einem nachfolgenden Schritt des Empfangens durch die Fahrsteuerung des Transportträgers empfangen und anschließend in einem Schritt des Speicherns im Speicher des Transportträgers gespeichert bzw. bereitgestellt werden.

Um den Empfang der weiteren Fahrvorgabe zu bestätigen, kann vorgesehen sein, dass das Übertragen der weiteren Fahrvorgabe ferner folgenden Schritt umfasst:
Senden eines Empfangssignals an die übergeordnete Steuerung durch die Fahrsteuerung des Transportträgers, wenn die weitere Fahrvorgabe durch die Fahrsteuerung empfangen wurde.

Zum Bewegen des Transportträgers ist dieser vorzugsweise selbstangetrieben ausgebildet. Somit erfolgt das Bewegen des Transportträgers vorzugsweise dadurch, dass die Fahrsteuerung des Transportträgers eine oder mehrere Antriebsvorrichtungen des Transportträgers derart ansteuert, dass dieser entlang des Transportwegs bewegt wird.

Um den Transportträger selbstangetrieben zu bewegen, ist vorzugsweise vorgesehen, dass dieser eine Antriebsvorrichtung umfasst, welche zum Wandeln einer bereitgestellten, insbesondere elektrischen, Antriebsenergie in eine Bewegungsenergie zum Transport der Hängeware ausgebildet ist. Um zu gegenüberliegenden Seiten angeordnete Räder unterschiedlich anzutreiben, damit der Transportträger beispielsweise einer gekrümmten Trajektorie folgen kann, ist bevorzugt vorgesehen, dass der Transportträger zwei Antriebsvorrichtungen umfasst, wie dies nachfolgend detaillierter beschrieben wird.

Darüber hinaus kann der Transportträger einen Basiskörper aufweisen, wobei die Antriebsvorrichtung am Basiskörper angeordnet ist. Günstig ist es hierbei, wenn die am Basiskörper angeordnete Antriebsvorrichtung zum Bewegen des Transportträgers entlang einer Tragstruktur, insbesondere auf der Tragstruktur, einer Hängefördervorrichtung ausgebildet ist.

Ferner kann der Transportträger, mehrere am Basiskörper drehbar gelagerte Räder aufweisen. Vorzugsweise weist die Antriebsvorrichtung, wie nachfolgend detailliert beschrieben wird, einen elektrisch betriebenen Motor auf, welcher am Transportträger gelagert ist, wobei ein Rad der genannten Räder als (erstes) Antriebsrad ausgebildet ist, das mit dem Motor gekoppelt ist.

Günstig ist es, wenn die Antriebsvorrichtung einen Zugmitteltrieb aufweist, über welchen das Antriebsrad mit dem Motor (der Antriebsvorrichtung) gekoppelt ist. Dadurch ist der Antrieb relativ leise und wartungsarm. Als Zugmittel des Zugmitteltriebs kommt insbesondere ein Zahnriemen oder ein Flachriemen in Betracht. Alternativ kann die Antriebsvorrichtung auch ein Getriebe, Zahnräder und/oder einen Reibschlussübertrieb umfassen, über welches/welche/welchen das Antriebsrad mit dem Motor (der Antriebsvorrichtung) gekoppelt ist.

Zweckmäßig ist es, wenn die Fahrsteuerung zum Senden eines Meldesignals und/oder zum Empfangen einer Fahrvorgabe ausgebildet ist.

Besonders vorteilhaft ist es darüber hinaus, wenn die Fahrsteuerung des Transportträgers zum Empfang einer Wegdefinition von einer übergeordneten Steuerung, wobei die Wegdefinition einen Weg für den Transportträger zumindest in einem Weichenabschnitt, insbesondere der Tragstruktur bzw. des Transportwegs, vorgibt, zum Speichern einer empfangenen Wegdefinition im Speicher des Transportträgers und zur Auswahl eines Weges von mehreren Wegen im Weichenabschnitt entsprechend der empfangenen Wegdefinition ausgebildet ist. Mit Hilfe der vorgeschlagenen Maßnahmen wird die Autonomie des Transportträgers dadurch verwirklicht, dass dieser seinen Weg in einem Weichenabschnitt selbständig bestimmt. Beispielsweise kann der Transportträger dazu einer von mehreren Fahrmarkierungen folgen. Auf diese Weise kann ein autonomes Bewegen des Transportträgers besonders gut verwirklicht werden. Dabei gibt die übergeordnete Steuerung den Weg vor, welcher dann autonom vom Transportträger mit Hilfe der Fahrsteuerung befahren wird, wie dies im Zusammenhang mit der Wegdefinition bereits beschrieben wurde.

Vorteilhaft ist es, wenn die Fahrsteuerung dazu ausgebildet ist, auf Basis von im (elektronischen) Speicher gespeicherten Bewegungsdaten eine Bewegung des Transportträgers, insbesondere auf einer Tragstruktur, zu beeinflussen bzw. zu steuern. Insbesondere kann auf Basis der Bewegungsdaten eine Route des Transportträgers, eine Geschwindigkeit des Transportträgers, eine Beschleunigung des Transportträgers und/oder ein Abstand des Transportträgers zu einem anderen, vorausfahrenden Transportträger beeinflusst werden. Beispielsweise können die Bewegungsdaten hierfür eine Soll-Route des Transportträgers, eine Soll-Geschwindigkeit des Transportträgers, eine Soll-Beschleunigung des Transport-trägers und/oder einen Soll-Abstand des Transportträgers zu einem anderen, vorausfahrenden Transportträger umfassen und in Folge in die Fahrsteuerung geladen werden, welche die gespeicherten beziehungsweise hinterlegten Transportdaten beziehungsweise Parameter für eine diesen zugeordnete Bewegung des Transportträgers nutzt. Dementsprechend kann die Fahrsteuerung den Transportträger auf der gespeicherten Route bewegen, die gespeicherte Soll-Geschwindigkeit des Transportträgers einstellen oder regeln, die gespeicherte Soll-Beschleunigung des Transportträgers einstellen oder regeln und/oder den gespeicherten Soll-Abstand des Transportträgers zu einem anderen, vorausfahrenden Transportträger einstellen oder regeln. Generell kann die Bewegung des Transportträgers durch Steuer- und/oder Regeleingriffe beeinflusst werden.

Darüber hinaus ist es vorteilhaft, wenn die Fahrsteuerung des Transportträgers zum Empfang eines Gewichts einer vom Transportträger zu transportierenden Masse von einer übergeordneten Steuerung, zum Speichern dieses Gewichts im Speicher des Transportträgers und zum Ausführen eines Beschleunigungsprofils in Abhängigkeit dieses Gewichts ausgebildet ist. Auf diese Weise kann die Fahrdynamik des Transportträgers an die Ware angepasst werden. Das genannte Gewicht kann beispielsweise aus einer Datenbank stammen, in welcher das Gewicht zugeordnet zu einer Ware gespeichert ist, oder durch Abwiegen ermittelt werden. Insbesondere kann das Gewicht der vom Transportträger getragenen Masse auch das Ausregeln einer Pendelbewegung der Hängeware beeinflussen, sofern eine solche Regelung vorgesehen ist.

Von besonderem Vorteil ist es auch, wenn die Fahrsteuerung des Transportträgers zur Regelung einer Geschwindigkeit des Transportträgers und/oder zur Regelung eines Abstands zu einem anderen Transportträger ausgebildet ist. Dadurch sind Geschwindigkeit und/oder Abstand zu einem anderen Transportträger individuell regelbar. Der Fahrbetrieb der Transportträger kann dadurch besonders flexibel erfolgen beziehungsweise beeinflusst werden. Zur Regelung des Abstands kann vorgesehen sein, dass der Transportträger zumindest einen Abstandssensor aufweist, welcher (zur Signal- und/oder Datenübermittlung) mit der Fahrsteuerung verbunden ist.

Besonders vorteilhaft ist es weiterhin, wenn der Transportträger mehrere Abstandssensoren aufweist, welche mit der Fahrsteuerung (zur Signal- und/oder Datenübermittlung) verbunden und derart angeordnet sind, dass diese paarweise einen Winkel von mehr als 0° und kleiner als 180° einschließen. Dadurch kann der Abstand zwischen Transportträgern auch in Kurven oder im Weichenbereich gut geregelt werden. Dabei wird jeweils das Signal des in das Kurveninnere weisenden Abstandssensors bevorzugt oder ausschließlich ausgewertet. Beispielsweise kann der Abstandssensor als Ultraschallsensor ausgebildet sein.

Erfindungsgemäß ist vorgesehen, dass die Antriebsvorrichtung Antriebsorgane umfasst, welche an der Fahrfläche anliegen. Hierbei umfasst die Antriebsvorrichtung einen elektrisch betriebenen Motor oder mehrere elektrisch betriebene Motoren. Nach erster Ausführung ist der elektrisch betriebene Motor der Antriebsvorrichtung am Basiskörper angeordnet, wobei ein erstes Antriebsorgan der Antriebsorgane und ein zweites Antriebsorgan der Antriebsorgane mit dem elektrisch betriebenen Motor gekoppelt sind. Nach zweiter Ausführung sind die mehreren elektrisch betriebenen Motoren am Basiskörper angeordnet, wobei ein erstes Antriebsorgan der Antriebsorgane mit einem ersten Motor der elektrisch betriebenen Motoren und ein zweites Antriebsorgan der Antriebsorgane mit einem zweiten Motor der elektrisch betriebenen Motoren gekoppelt sind.

Ferner ist es günstig, dass der Basiskörper mit dem ersten und zweiten Antriebsorgan versehen ist, wobei das erste Antriebsorgan auf der ersten Transportträgerseite und das zweite Antriebsorgan auf der zweiten Transportträgerseite angeordnet ist. Durch die vorgeschlagenen Maßnahmen kann der Transportträger auf der Fahrfläche sowohl geradeausfahren (wenn die Antriebsorgane gleich angesteuert werden) als auch um die Kurve (wenn die Antriebsorgane unterschiedlich angesteuert werden).

Vorteilhaft ist es, wenn die Antriebsorgane jeweils ein oder mehrere Antriebsräder umfassen. Dadurch kann der Antrieb vergleichsweise einfach aufgebaut sein.

Ferner kann das erste Antriebsorgan ein auf der ersten Transportträgerseite um die Antriebsräder des ersten Antriebsorgans geführtes, endlos umlaufendes erstes Raupenband oder Kette und/oder das zweite Antriebsorgan ein auf der zweiten Transportträgerseite um die Antriebsräder des zweiten Antriebsorgans geführtes, endlos umlaufendes zweites Raupenband oder Kette umfassen. Dadurch wird die Kontaktfläche zur Fahrfläche hin vergrößert.

Besonders vorteilhaft ist, wenn das erste und zweite Antriebsorgan jeweils einen Außenumfang ausbilden und mehrere Haftkrafterzeuger am Außenumfang der Antriebsorgane angeordnet sind. Dadurch kann eine vergleichsweise hohe Haftkraft zwischen dem Transportträger und der Fahrfläche erzeugt werden, auch bei Bewegung der Antriebsorgane. Zudem ist das vorgeschlagene System fehlertolerant, da der Ausfall eines Haftkrafterzeugers nicht zu einem Totalausfall des Systems führt. Bevorzugt ist hierbei vorgesehen, dass jeweils mehrere Haftkrafterzeuger an einer Umfangfläche beziehungsweise am Außenumfang der Antriebsräder oder an einer Oberfläche des Raupenbandes beziehungsweise der Kette angeordnet sind.

Alternativ oder zusätzlich kann vorgesehen sein, dass der Haftkrafterzeuger am Basiskörper zwischen der ersten Transportträgerseite und zweiten Transportträgerseite angeordnet ist. Dadurch kann der Haftkrafterzeuger an fixen, nicht bewegten Teilen des Transportträgers angebracht werden, wodurch der Aufbau des Transportträger vereinfacht werden kann.

Besonders vorteilhaft ist es, wenn der Haftkrafterzeuger einen Permanentmagneten, Haftlamellen (nach dem Gecko-Prinzip), Saugnäpfe und/oder ein Klettband einer Klettverbindung (insbesondere einen Teil eines Klettbands), beispielsweise Haken oder Pilzköpfe einer Klettverbindung, umfasst. Im Fall, dass der Haftkrafterzeuger einen Permanentmagneten umfasst, ist es von Vorteil, wenn die Tragstruktur eine Fahrfläche ausbildet und aus einem (ferro)magnetischen Werkstoff (zum Beispiels aus einem Stahlblech) hergestellt ist, wobei der Transportträger über die (beziehungsweise mit Hilfe der) Permanentmagneten an der Fahrfläche bewegbar haftet. Das heißt, der Transportträger haftet dann durch die magnetische Kraft an der Fahrfläche. Die Verwendung eines oder mehrerer Permanentmagneten zu dem angesprochenen Zweck ist zwar von Vorteil, denkbar wäre aber auch der Einsatz eines oder mehrerer Elektromagneten, um die für das Anhaften des Transportträgers an der Fahrfläche nötige Haftkraft zu erzeugen. Von Vorteil ist insbesondere, dass die Erzeugung der Haftkraft kontaktlos erfolgt. Das heißt, der zumindest eine Permanentmagnet muss keinen Kontakt zur Fahrfläche haben, sondern kann geringfügig von dieser beabstandet sein. Neben dem (elektro)magnetischen Prinzip werden auch andere Technologien zur Erzeugung einer Haftkraft eingesetzt, nämlich die genannten Haftlamellen (nach dem Gecko-Prinzip), Saugnäpfe und/oder Haken oder Pilzköpfe einer Klettverbindung. Hierbei wird die Haftkraft durch Kontakt des Haftkrafterzeugers mit der Fahrfläche erzeugt. Besonders vorteilhaft ist dabei, wenn Haftkrafterzeuger wie zuvor beschrieben am Außenumfang der Antriebsorgane angeordnet sind. Während die Fahrfläche bei Anwendung von Haftlamellen und/oder Saugnäpfen eher glatt ausgestaltet ist, kann sie bei der Klettverbindung einen Teil einer Klettverbindung aufweisen. Am Transportträger (insbesondere am Außenumfang der Antriebsorgane) ist dann der andere Teil der Klettverbindung angeordnet. Saugnäpfe können zudem an einen Unterdruckerzeuger angeschlossen sein, um die Haftkraft zu erzeugen oder um diese zu verstärken.

Besonders vorteilhaft ist es auch, wenn der Transportträger eine Gelenkanordnung umfasst, welche ein Ausschwenken der Hängeware relativ zum Basiskörper um mehr als 45° und insbesondere um zumindest 90° quer zur Bewegungsrichtung des Transportträgers ermöglicht. Dadurch ist es möglich, dass der Transportträger auch an nicht horizontal ausgerichteten Fahrflächen fahren kann, ohne dass die Bewegung durch die Hängeware behindert wird. Die Fahrfläche kann schräg verlaufen oder sogar vertikal ausgerichtet sein und dann im Prinzip eine Wand ausbilden. Auf dieser Wand können die an der Fahrfläche haftenden Transportträger ebenfalls fahren. Zum Beispiel kann auf diese Weise eine platzsparende Lagerfläche für die Transportträger gebildet werden. Für den angesprochenen Zweck kann der Transportträger eine Verlängerungsstange mit einer daran angeordneten Öse und einem darin drehbar gelagerten Haken einer Hängeware aufweisen. Durch eine entsprechende Wahl der Länge der Verlängerungsstange kann insbesondere der seitliche Ausschwenkwinkel beeinflusst werden.

Alternativ kann vorgesehen sein, wenn die Hängeware derart an den Transportträger gekoppelt ist, dass ein Ausschwenken der Hängeware relativ zum Basiskörper, insbesondere quer zur Bewegungsrichtung, verhindert ist.

Besonders vorteilhaft ist es, wenn der Transportträger den Basiskörper und einen Tragkörper mit einer Aufnahme zum Aufhängen der Hängeware aufweist. Insbesondere kann die Aufnahme eine vollständig umschlossene Aufnahmeöffnung (Öse) zum Einhängen eines Bügels der Hängeware oder einen offenen Aufnahmeabschnitt (Haken) zum Einhängen oder Aufhängen eines Bügels der Hängeware umfassen.

Von Vorteil ist es, wenn der Tragkörper über eine Verbindungsvorrichtung auswechselbar am Basiskörper befestigt ist. Dadurch ist der Tragkörper flexibel einsetzbar und kann für eine Vielzahl unterschiedlicher Hängewaren verwendet werden. Darüber hinaus kann die Hängeware eine Transporttasche mit einem Taschenkörper zur Aufbewahrung einer Ware umfassen.

Günstig ist es, wenn der Transportträger einen mit dem Motor elektrisch verbundenen Energiespeicher und/oder eine mit dem Motor elektrisch verbundene Energiequelle aufweist. Alternativ oder zusätzlich kann vorgesehen sein, dass der Transportträger die Hängeware umfasst, welche eine Transporttasche mit einem Taschenkörper zur Aufbewahrung einer Ware aufweist, wobei die Transporttasche einen mit dem Motor elektrisch verbundene Energiespeicher und/oder eine mit dem Motor elektrisch verbundene Energiequelle aufweist.

Insbesondere kann der Motor über ein Schaltelement oder ein Steuerelement mit dem Energiespeicher beziehungsweise mit der Energiequelle verbunden sein. Der Energiespeicher kann beispielsweise als Akkumulator ausgebildet sein oder auch als Kondensator (z.B. als "Supercap"). Der Energiespeicher kann während einer Bewegung des Transportträgers aufgeladen werden, beispielsweise über ein entlang der Tragstruktur oder Fahrfläche angeordnetes Energieversorgungssystem, oder stationär an einer Ladestation der Hängefördervorrichtung bzw. des Kommissioniersystems.

Die Energiequelle kann beispielsweise als Solarmodul ausgebildet und zusätzlich oder alternativ zu einem Energiespeicher vorgesehen sein. Die vorgeschlagenen Maßnahmen ermöglichen oder unterstützen ein individuelles Bewegen des Transportträgers im Kommissioniersystem. Insbesondere ist der vorgeschlagene Transportträger zumindest temporär unabhängig von einem (stationären) Energieversorgungssystem des Kommissioniersystems.

Vorteilhaft ist es auch, wenn die Hängefördervorrichtung ein elektrisches Energieversorgungssystem aufweist, welches einen Isolator und freiliegende elektrische Leiter umfasst, welche entlang der Tragstruktur oder Fahrfläche verlaufen (und insbesondere auf dieser angeordnet sind), wobei der Transportträger Stromabnehmer aufweist, welche elektrisch in Kontakt mit den elektrischen Leitern stehen und elektrisch mit dem Motor verbunden sind. Dadurch ist es möglich, einen Transportträger auch unabhängig von einem optionalen Energiespeicher des Transportträgers oder unabhängig von einer optionalen Energiequelle des Transportträgers mit Strom zu versorgen und den Antrieb des Transportträgers zu ermöglichen. Darüber hinaus kann auch ein Energiespeicher des Transportträgers über das Energieversorgungssystem aufgeladen werden, insbesondere auch während einer Bewegung des Transportträgers. Die Stromabnehmer können beispielsweise als Schleifkontakte ausgebildet sein und bei Bewegung des Transportträgers auf den elektrischen Leitern gleiten/schleifen. Wenn die elektrischen Leiter auf der Tragstruktur oder Fahrfläche angeordnet sind und die Abnehmer darauf abrollen, können die Abnehmer auch als Räder des Transportträgers ausgebildet sein.

Vorteilhaft ist es weiterhin, wenn die Hängefördervorrichtung entlang der Tragstruktur, insbesondere an beziehungsweise auf der Tragstruktur oder Fahrfläche, ein induktives Energieversorgungssystem beziehungsweise ein induktives Energieübertragungssystem aufweist und die Energieübertragung zum Motor (und gegebenenfalls zu einer Ladeschaltung eines mit dem Motor verbundenen Energiespeichers) des Transportträgers induktiv erfolgt. Dadurch kann die Energieübertragung zum Transportträger kontaktlos und damit geräuschlos und verschleißfrei erfolgen. Insbesondere kann das induktive Energieversorgungsystem zumindest einen parallel zur Tragstruktur oder Fahrfläche verlaufenden elektrischen Leiter sowie eine Spule aufweisen, welche auf dem Transportträger angeordnet und elektrisch mit dem Motor verbunden ist, wobei die Energieübertragung zur Spule kontaktlos erfolgt. In einer besonders vorteilhaften Ausführungsvariante umfasst der Transportträger einen ferromagnetischen Kern, um welchen die Spule gewickelt ist und welcher den zumindest einen elektrischen Leiter zumindest teilweise umgreift. Dadurch kann der magnetische Fluss besser geführt und der Wirkungsgrad der induktiven Energieübertragung verbessert werden.

Vorteilhaft ist das elektrische Energieversorgungssystem nur auf geraden Streckenabschnitten der Fahrfläche vorgesehen. Dadurch kann das elektrische Energieversorgungssystem einfacher gestaltet sein. In Kurven und auf Weichen wird der Motor bei dieser Ausführungsform aus dem Energiespeicher beziehungsweise der Energiequelle des Transportträgers versorgt.

Mit Vorteil ist vorgesehen, dass der oder die Transportträger der Hängefördervorrichtung, die Hängefördervorrichtung und/oder deren Tragstruktur nach einem der zuvor beschriebenen Aspekte ausgebildet sind. Vorzugsweise ist der Transportträger auf der Tragstruktur bewegbar gelagert.

Darüber hinaus ist es günstig, wenn die Tragstruktur zumindest ein Steuerelement aufweist und die Fahrsteuerung dazu ausgebildet ist, auf Basis von im Speicher gespeicherten beziehungsweise hinterlegten Steuerdaten, beispielsweise auf Basis der Fahrvorgabe, eine Bewegung eines Steuerelements der Tragstruktur zu beeinflussen beziehungsweise zu steuern. Insbesondere kann unter einem solchen Steuerelement eine durch die Fahrsteuerung ansteuerbare Einrichtung in einem Kommissioniersystem, beispielsweise ein Lift, verstanden werden. Generell kann die Bewegung des Steuerelements durch Steuer- und/oder Regeleingriffe beeinflusst werden.

Günstig ist es, wenn die Fahrsteuerung des Transportträgers und/oder das zumindest eine Steuerelement der Tragstruktur zur optischen, drahtgebundenen oder funkbasierten Kommunikation ausgebildet sind. Wie bereits zuvor im Zusammenhang mit der Kommunikationseinheit beschrieben, können beispielsweise Daten und Befehle von der übergeordneten Steuerung der Hängefördervorrichtung oder des Kommissioniersystems an den Transportträger gesendet werden oder auch umgekehrt.

Bevorzugt umfassen der Transportträger eine mit der Fahrsteuerung verbundene Lichtquelle und das Steuerelement der Tragstruktur ein lichtempfindliches Element, wobei mit der Lichtquelle über das lichtempfindliche Element ein Steuerbefehl von der Fahrsteuerung des Transportträgers an das Steuerelement der Tragstruktur übertragbar ist. Mit anderen Worten erfolgt die Übertragung von Daten oder von Steuerbefehlen vom Transportträger auf die Tragstruktur auf optischem Weg. Beispielsweise kann vorgesehen sein, dass das Steuerelement aktiviert oder umgeschaltet wird, wenn das lichtempfindliche Element Licht der Lichtquelle empfängt. Dieses Licht kann moduliert oder unmoduliert sein. Darüber hinaus ist bei entsprechender Modulation der Lichtquelle auch eine komplexere Datenübertragung möglich.

Besonders vorteilhaft ist es auch, wenn die Tragstruktur eine steuerbare Lichtquelle und der Transportträger einen mit der Fahrsteuerung verbundenen optischen Fahrflächensensor aufweist, wobei ein Steuerbefehl mittels der Lichtquelle und des optischen Fahrflächensensors von der Tragstruktur an die Fahrsteuerung des Transportträgers übertragbar ist. Insbesondere kann die steuerbare Lichtquelle auf dem Transportträger oder der Tragstruktur mehrere individuell aktivierbare und matrixförmig angeordnete Leuchtpunkte aufweisen. Dadurch sind die an den Transportträger übertragenen Steuerbefehle nicht fix, sondern können flexibel an eine bestimmte Situation angepasst werden. Die Leuchtpunkte können dabei als Fahrwegmarkierung, insbesondere als Fahrmarkierung und/oder Steuermarkierung, wirken. Das oben zur Fahrwegmarkierung, insbesondere zur Fahrmarkierung und/oder Steuermarkierung, Gesagte gilt daher sinngemäß.

"Matrixförmig angeordnet" kann in diesem Zusammenhang bedeuten, dass mehrere Leuchtpunkte in einer Reihe (in Form einer 1 x m-Matrix) angeordnet sind und so eine Leuchtpunktreihe bilden. Dadurch kann insbesondere ein eindimensionaler Steuerbefehl erstellt werden. Darüber hinaus kann Matrixförmig angeordnet bedeuten, dass gegebenenfalls mehrere, insbesondere zumindest zwei, derartige Leuchtpunktreihen nebeneinander angeordnet sind (in Form einer n x m-Matrix, wobei n > 1 ist). Dadurch kann beispielsweise ein mehrdimensionaler Steuerbefehl erstellt werden, wodurch eine Anzahl an erstellbaren Steuerbefehlen erhöht ist.

Vorteilhaft ist es, wenn ein Einstellen einer Zielgeschwindigkeit des Transportträgers oder eines Zielabstands des Transportträgers zu einem anderen Transportträger anhand einer Fahrwegmarkierung, beispielsweise anhand einer Steuermarkierung, bewirkt wird, welche im Bereich der Tragstruktur und durch den Transportträger erfassbar angeordnet ist. Dadurch kann das Verhalten der Transportträger einfach durch Anbringen entsprechender Markierungen auf der Tragstruktur beeinflusst werden. Komplizierte Datenübertragungsverfahren von einer übergeordneten Steuerung sind dazu nicht nötig.

Vorteilhaft ist es weiterhin, wenn der Transportträger einen mit der Fahrsteuerung verbundenen Fahrflächensensor, mit dem eine an der Tragstruktur angeordnete Steuermarkierung lesbar ist, wobei ein Erkennen der Steuermarkierung ein Melden der Fahrsteuerung bei einer übergeordneten Steuerung auslöst, oder einen mit der Fahrsteuerung verbundenen Kurzdistanz-Funkempfänger, mit dem ein Signal eines an der Tragstruktur angeordneten Kurzdistanz-Funksenders empfangbar ist, wobei ein Empfang des Signals durch den Kurzdistanz-Funkempfänger ein Melden der Fahrsteuerung bei einer übergeordneten Steuerung auslöst oder einen Kurzdistanz-Funksender aufweist, wobei ein Empfang eines Signals des Kurzdistanz-Funksenders des Transportträgers durch einen an der Tragstruktur angeordneten Kurzdistanz-Funkempfänger ein Melden des Transportträgers (mit Hilfe des Kurzdistanz-Funkempfängers) bei einer übergeordneten Steuerung auslöst.

Mit dem Melden können, wie auch zuvor bereits ausgeführt, weitere Aktionen verknüpft sein, beispielsweise das Übermitteln von Befehlen oder Daten von der übergeordneten Steuerung an den Transportträger. Beispielsweise kann an den Transportträger die (weitere) Fahrvorgabe übermittelt werden, welche beispielsweise eine Soll-Geschwindigkeit, eine Soll-Beschleunigung und/oder einen Soll-Abstand des Transportträgers zu einem anderen, vorausfahrenden Transportträger, umfasst.

Der Meldepunkt kann durch eine (optische) Meldemarkierung und/oder Steuermarkierung gebildet sein. Wird diese Markierung vom Fahrflächensensor erfasst, löst dies ein Melden der Fahrsteuerung bei der übergeordneten Steuerung aus, was wiederum die schon beschriebenen Folgeaktionen auslösen kann. Der Meldepunkt bzw. die Meldemarkierung kann auch durch einen auf der Tragstruktur angeordneten Kurzdistanz-Funksender gebildet sein. Wird dessen Signal vom Kurz-distanz-Funkempfänger des Transportträgers empfangen, wird ebenfalls ein Melden der Fahrsteuerung bei einer übergeordneten Steuerung ausgelöst, was die schon beschriebenen Folgeaktionen auslösen kann. Alternativ kann der Transportträger einen Kurzdistanz-Funksender aufweisen. Wird dessen Signal mit einem auf der Tragstruktur angeordneten Kurzdistanz-Funkempfänger erfasst, löst dies wiederum das Melden bei einer übergeordneten Steuerung aus, was ebenfalls die schon beschriebenen Folgeaktionen auslösen kann. Vorteilhaft ist es in beiden Fällen, wenn der Kurzdistanz-Funksender eine eindeutige Kennung aussendet, damit zugeordnet werden kann, von welchem Kurzdistanz-Funksender ein Signal empfangen wird. "Kurzdistanz" bedeutet im gegebenen Zusammenhang insbesondere eine Reichweite von wenigen Zentimetern bis zu wenigen Metern (beispielsweise weniger als zwei Metern).

Bevorzugt kann das Melden der Fahrsteuerung bei der übergeordneten Steuerung ein Senden bzw. Übertragen einer Wegdefinition an die Fahrsteuerung durch die übergeordnete Steuerung bewirken beziehungsweise auslösen. Beispielsweise kann das durch die Tragstruktur gebildete Transportnetz in mehrere durch Steuermarkierungen, insbesondere Abfragemarkierungen und/oder Meldemarkierungen bzw. Meldepunkte getrennte Segmente unterteilt sein. Diese Segmente können beispielsweise durch zuvor beschriebene Verteilermodule ausgebildet sein. Beim aktiven Melden der Fahrsteuerung an einem Meldepunkt (zum Beispiel einer als Meldepunkt wirkenden Steuermarkierung) erhält die Fahrsteuerung von der übergeordneten Steuerung die Wegdefinition für das folgende Segment. Auf diese Weise unterstützt die Maßnahme das flexible und autonome Bewegen des Transportträgers durch das Transportnetz.

In einer weiteren vorteilhaften Ausführungsform der Hängefördervorrichtung ist der Fahrwegmarkierung, insbesondere der Fahrmarkierung und/oder Steuermarkierung, oder dem an der Tragstruktur angeordneten Kurzdistanz-Funksender oder dem an der Tragstruktur angeordneten Kurzdistanz-Funkempfänger eine örtliche Position zugeordnet, wobei das Melden der Fahrsteuerung bei der übergeordneten Steuerung eine Anpassung der Wegdefinition ausgehend von dieser Position durch die übergeordnete Steuerung bewirkt, wenn eine Soll-Position des Transportträgers nicht mit der örtlichen Position der Fahrwegmarkierung, insbesondere der Fahrmarkierung und/oder der Steuermarkierung, oder des Kurzdistanz-Funksenders oder des Kurzdistanz-Funkempfängers übereinstimmt. Dies kann insbesondere durch einen Abgleich einer Soll-Kennung, welche im Wesentlichen die Soll-Position angibt, mit einer Ist-Kennung, welche die örtliche Position der jeweiligen Markierung angibt, überprüft werden, wie dies zuvor beschrieben wurde. Es kann vorkommen, dass die tatsächliche Position des Transportträgers, beispielsweise jene Position, an welcher das Meldesignal gesendet wurde, nicht mit der von der Fahrsteuerung angenommenen Position des Transportträgers übereinstimmt. Das Wählen eines Weges in einem Weichenabschnitt entsprechend der im Speicher gespeicherten Wegdefinition führt dann zu Fehlschaltungen und Fehlleitungen. Mit den vorgeschlagenen Maßnahmen kann eine Abweichung der tatsächlichen Position des Transportträgers von der von der Fahrsteuerung angenommenen Position des Transportträgers aber berücksichtigt und die Soll-Position des Transportträgers wieder korrigiert werden, das heißt auf dessen Ist-Position gesetzt oder eine alternative Route vorgegeben werden.

Denkbar wäre auch, dass die Fahrwegmarkierung, insbesondere die Fahrmarkierung und/oder die Steuermarkierung, oder der an der Tragstruktur angeordnete Kurzdistanz-Funksender oder der an der Tragstruktur angeordnete Kurzdistanz-Funkempfänger dazu ausgebildet sind, das gleichzeitige Melden der Fahrsteuerungen mehrerer Transportträger bei der übergeordneten Steuerung zu bewirken. Auf diese Weise kann in Folge das Verhalten einer Gruppe von Transportträgern beeinflusst werden.

Günstig ist es, wenn ein Energieversorgungssystem der Hängefördervorrichtung (zum Beispiel eine Schleifleitung oder ein induktives Energieversorgungssystem), insbesondere das zuvor beschriebene Energieversorgungssystem, auch zur drahtgebundenen Kommunikation mit der Fahrsteuerung des Transportträgers ausgebildet ist. Dadurch kann das Energieversorgungssystem einen Doppelnutzen erbringen.

Vorteilhaft ist es auch, wenn das Energieversorgungssystem der Hängefördervorrichtung in mehrere Versorgungs-Segmente gegliedert ist, welche unterschiedliche Adressen in einem Kommunikationssystem der Hängefördervorrichtung aufweisen. Insbesondere kann die Adresse durch den Transportträger erfassbar sein. Dadurch ist eine Lokalisierung eines Transportträgers auf relativ einfache Weise möglich.

Vorteilhaft ist es dabei auch, wenn das Energieversorgungssystem der Hängefördervorrichtung in mehrere Versorgungs-Segmente gegliedert ist, wobei einem der Versorgungs-Segmente des Energieversorgungssystems eine örtliche Position zugeordnet ist und ein Einfahren des Transportträgers in dieses Versorgungs-Segment eine Anpassung der Wegdefinition basierend auf der örtlichen Position, welche diesem Versorgungs-Segment zugeordnet ist, durch eine übergeordnete Steuerung bewirkt, wenn eine Soll-Position des Transportträgers nicht mit der örtlichen Position des Versorgungs-Segments des Energieversorgungssystems übereinstimmt. Hierbei kann selbstverständlich vorgesehen sein, dass den Versorgungs-Segmenten jeweils eine örtliche Position zugeordnet ist, wobei die Anpassung der Wegdefinition abhängig von dem jeweiligen Versorgungs-Segment erfolgt, in welches der Transportträger eingefahren ist. Die Wahl eines bestimmten Weges entsprechend der im Speicher gespeicherten Wegdefinition führt bei der genannten Abweichung wiederum zu Fehlschaltungen und Fehlleitungen. Mit den vorgeschlagenen Maßnahmen kann eine Abweichung der tatsächlichen Position des Transportträgers von der von der Fahrsteuerung angenommenen Position aber berücksichtigt und die Soll-Position des Transportträgers wieder korrigiert werden, das heißt auf dessen Ist-Position gesetzt werden (in diesem Fall auf die Position des Versorgungs-Segments, in welches der Transportträger einfährt). Eine angepasste bzw. korrigierende Wegdefinition kann beispielsweise beim Übertragen der weiteren Fahrvorgabe an den Transportträger übertragen werden.

Besonders vorteilhaft ist, insbesondere bei der Ausführungsvariante, bei welcher der Transportträger eine Fahrsteuerung und einen damit verbundenen beschreib- und auslesbar ausgebildeten Speicher aufweist, wenn das elektrische Energieversorgungssystem einen Isolator und freiliegende elektrische Leiter umfasst, welche entlang der Tragstruktur oder Fahrfläche verlaufen (und insbesondere auf beziehungsweise an dieser angeordnet sind), und der Transportträger Stromabnehmer aufweist, welche elektrisch in Kontakt mit den Leitern stehen und sowohl elektrisch mit einem Motor der Antriebsvorrichtung als auch elektrisch über ein Kommunikationsmodul des Transportträgers mit der Fahrsteuerung verbunden sind. Dadurch ist es nicht nur möglich, einen Transportträger unabhängig von einem im Transportträger vorgesehenen Energiespeicher oder unabhängig von einer im Transportträger vorgesehenen Energiequelle mit Strom zu versorgen, sondern es ist auf diese Weise auch möglich, die Übertragung von Daten und/oder Steuerbefehlen von und zum Transportträger über das elektrische Energieversorgungssystem durchzuführen. Eine an den elektrischen Leitern anliegende Spannung beziehungsweise ein an den elektrischen Leitern anliegendes elektrisches Signal liegt dabei auch an den Eingängen des Kommunikationsmoduls an, welches die Daten aus dem Signal extrahieren und diese umwandeln kann. Das Kommunikationsmodul ist somit auch datentechnisch mit den Stromabnehmern beziehungsweise den elektrischen Leitern verbunden. Insbesondere kann im Kommunikationsmodul auch eine galvanische Trennung zwischen den Stromabnehmern und Eingängen der Fahrsteuerung vorgenommen werden, beispielsweise mit Hilfe eines Optokopplers oder mit Hilfe eines Trenntransformators. Selbstverständlich kann auch die Energieversorgung des Kommunikationsmoduls, der Fahrsteuerung und anderen Module über die Stromabnehmer erfolgen. Die Stromabnehmer können beispielsweise als Schleifkontakte ausgebildet sein und bei Bewegung des Transportträgers auf den elektrischen Leitern gleiten/schleifen. Wenn die elektrischen Leiter auf der Tragstruktur oder Fahrfläche angeordnet sind und die Abnehmer darauf abrollen, können die Abnehmer auch als Räder des Transportträgers ausgebildet sein.

Vorteilhaft ist es weiterhin, wenn die Hängefördervorrichtung entlang der Tragstruktur, insbesondere an der Tragstruktur, und/oder entlang der Fahrfläche, insbesondere auf der Fahrfläche, ein induktives Energieversorgungssystem beziehungsweise ein induktives Energieübertragungssystem aufweist und die Energieübertragung zu einem Motor der Antriebsvorrichtung des Transportträgers und/oder eine Datenübertragung zu einem mit der Fahrsteuerung verbundenen Kommunikationsmodul des Transportträgers induktiv erfolgt. Dadurch kann die Energieübertragung zum Transportträger und auch die Übertragung von Daten und oder Steuerbefehlen von und zum Transportträger kontaktlos erfolgen. Insbesondere kann das induktive Energieversorgungsystem zumindest einen entlang der Tragstruktur oder Fahrfläche verlaufenden elektrischen Leiter sowie eine Spule aufweisen, welche auf dem Transportträger angeordnet und elektrisch mit dem Motor und dem Kommunikationsmodul verbunden ist, wobei die Energie- und/oder Datenübertragung zur Spule kontaktlos erfolgt. Eine an der Spule anliegende Spannung beziehungsweise ein an der Spule anliegendes elektrisches Signal liegt dabei auch an den Eingängen des Kommunikationsmoduls an, welches die Daten aus dem Signal extrahieren und diese umwandeln kann. Das Kommunikationsmodul ist somit auch datentechnisch mit der Spule beziehungsweise den elektrischen Leitern verbunden. Insbesondere kann im Kommunikationsmodul eine galvanische Trennung zwischen der Spule und Eingängen der Fahrsteuerung vorgenommen werden, beispielsweise mit Hilfe eines Optokopplers oder mit Hilfe eines Trenntransformators. Selbstverständlich kann auch die Energieversorgung des Kommunikationsmoduls, der Fahrsteuerung und anderen Module über die Spule erfolgen. In einer besonders vorteilhaften Ausführungsvariante umfasst der Transportträger einen ferromagnetischen Kern, um welchen die Spule gewickelt ist und welcher den zumindest einen elektrischen Leiter zumindest teilweise umgreift. Dadurch kann der magnetische Fluss besser geführt und der Wirkungsgrad der induktiven Energieübertragung verbessert werden.

Bevorzugt ist vorgesehen, dass die Hängefördervorrichtung zumindest ein Verteilermodul mit einer Tragstruktur umfasst, wobei die Tragstruktur eine Fahrfläche und einen Transportweg ausbildet. Der Transportweg ist entlang der Tragstruktur angeordnet und weist einen Weichenabschnitt mit einem Knoten auf. Weiterhin umfasst der Weichenabschnitt eine zum Knoten hinführende Einlaufstrecke sowie eine vom Knoten wegführende erste und zweite Auslaufstrecke. Die Einlaufstrecke und die erste Auslaufstrecke stellen einen ersten Weg und die Einlaufstrecke und die zweite Auslaufstrecke einen zweiten Weg für den Transportträger bereit. Darüber hinaus umfasst das Verteilermodul eine Fahrwegmarkierung und eine Kommunikationseinheit einer übergeordneten Steuerung. Hierbei ist die Fahrwegmarkierung entlang des Transportwegs an der Tragstruktur angeordnet und umfasst eine, insbesondere durch den Transportträger erfassbare, Abfragemarkierung. Die Abfragemarkierung ist dem Weichenabschnitt zugeordnet und entlang der Einlaufstrecke angeordnet. Ferner weist die Fahrwegmarkierung eine, insbesondere durch den Transportträger erfassbare, Meldemarkierung auf. Die Kommunikationseinheit ist im Bereich der Meldemarkierung angeordnet und dazu ausgebildet, eine Fahrvorgabe zu senden. Hierbei umfasst die Fahrvorgabe eine Freigabeanweisung und/oder eine Wegdefinition für den Transportträger.

Ferner ist die Fahrsteuerung des Transportträgers dazu eingerichtet, eine von der Kommunikationseinheit des zumindest einen Verteilermoduls gesendete Fahrvorgabe zu empfangen, diese im Speicher des Transportträgers zu speichern, aus dem Speicher abzurufen und den Transportträger gemäß der Fahrvorgabe anzusteuern.

Besonders bevorzugt ist vorgesehen, dass die Hängefördervorrichtung eine Vielzahl von derartigen Verteilermodulen und/oder eine Vielzahl von derartigen Transportträgern umfasst.

Die übergeordnete Steuerung kann eine oder mehrere Kommunikationseinheiten umfassen, welche jeweils einem Verteilermodul zugeordnet sind. Bei der Kommunikationseinheit des zumindest einen Verteilermoduls handelt es sich somit vorzugsweise um die Kommunikationseinheit oder eine der Kommunikationseinheiten der übergeordneten Steuerung.

Durch die vorgeschlagenen Maßnahmen ist es möglich, einen Transportträger individuell und (weitgehend) unabhängig von anderen Transportträgern im Kommissioniersystem zu bewegen. Ein mit der Erfindung erzielter Vorteil ist insbesondere darin zu sehen, dass der Transportträger autonom zwischen einem Startort und einem Zielort, nämlich dem Ort der Meldemarkierung navigieren bzw. verfahren kann. Darüber hinaus ist es vorteilhaft, dass bloß eine Teilstrecke und nicht die gesamte vom Transportträger zurückzulegende Route vorgegeben werden muss. Dadurch kann flexibel auf Fehlleitungen, Änderungen der Auftragsstruktur und dergleichen reagiert werden. Darüber hinaus muss eine Kommunikation zwischen dem Transportträger und der übergeordneten Steuerung nicht überall entlang des Transportwegs, sondern bloß an ausgewählten Orten, wie beispielsweise im Bereich der Meldemarkierung(en), gewährleistet sein. So kann der Transportträger im Wesentlichen von Meldemarkierung zu Meldemarkierung geleitet werden, bis der Zielort erreicht ist. An jeder Meldemarkierung bietet sich hierbei eine Möglichkeit zur Wegkorrektur, wodurch das Verfahren besonders flexibel ist.

Zudem ist ein mit dem Verteilermodul erzielter Vorteil insbesondere darin zu sehen, dass damit Abschnitte einer Hängefördervorrichtung bereitgestellt werden können, in welchen eine Kommunikation mit dem Transportträger, insbesondere zum Übertragen der weiteren Fahrvorgabe, ermöglicht ist. Das Verteilermodul ermöglicht somit einen modularen Aufbau der Hängefördervorrichtung, indem beispielsweise mehrere derartige Verteilermodule hintereinander geschaltet werden. Das Verteilermodul ist insbesondere zur Durchführung des zuvor beschriebenen Verfahrens eingerichtet.

Zum besseren Verständnis der Erfindung wird diese anhand der nachfolgenden Figuren näher erläutert.

Es zeigen in jeweils stark vereinfachter, schematischer Darstellung:
- Fig. 1: ein Verfahren zum Ansteuern von Transportträgern einer Hängefördervorrichtung;
- Fig. 2: ein Passieren eines Weichenabschnitts der Hängefördervorrichtung durch den Transportträger;
- Fig. 3: ein Übertragen einer weiteren Fahrvorgabe an den Transportträger;
- Fig. 4: eine schematische Darstellung eines Ausschnitts aus einem Transportnetz mit einer Weiche;
- Fig. 5a bis 5c: einen Ausschnitt einer Hängefördervorrichtung mit einem Weichenabschnitt;
- Fig. 6a bis 6c: einen Ausschnitt der Hängefördervorrichtung mit einem Zusammenführungsabschnitt;
- Fig. 7: einen Ausschnitt eines Transportweges mit mehreren Weichenabschnitten;
- Fig. 8: eine Ansicht eines Transportträgers mit einer Hängeware von schräg oben;
- Fig. 9: eine Ansicht einer Hängefördervorrichtung mit einer Fahrfläche und dem darauf haftenden Transportträger aus Fig. 8 von schräg unten;
- Fig. 10: den Transportträger aus Fig. 8 in detaillierter Ansicht von schräg oben;
- Fig. 11: den Transportträger aus Fig. 8 in detaillierter Ansicht von schräg unten;
- Fig. 12: die Hängefördervorrichtung aus Fig. 9 in detaillierter Darstellung in Vorderansicht;
- Fig. 13: einen beispielhaften Transportträger mit Raupenbändern von schräg oben;
- Fig. 14: eine Hängefördervorrichtung mit einem beispielhaften Transportträger und gelenkiger Verbindung zur Hängeware in Vorderansicht;
- Fig. 15: ein beispielhaftes, elektrisches Blockschaltbild eines Transportträgers.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z. B. oben, unten, seitlich usw. auf die unmittelbar beschriebene sowie dargestellte Figur bezogen und bei einer Lageänderung sinngemäß auf die neue Lage zu übertragen.

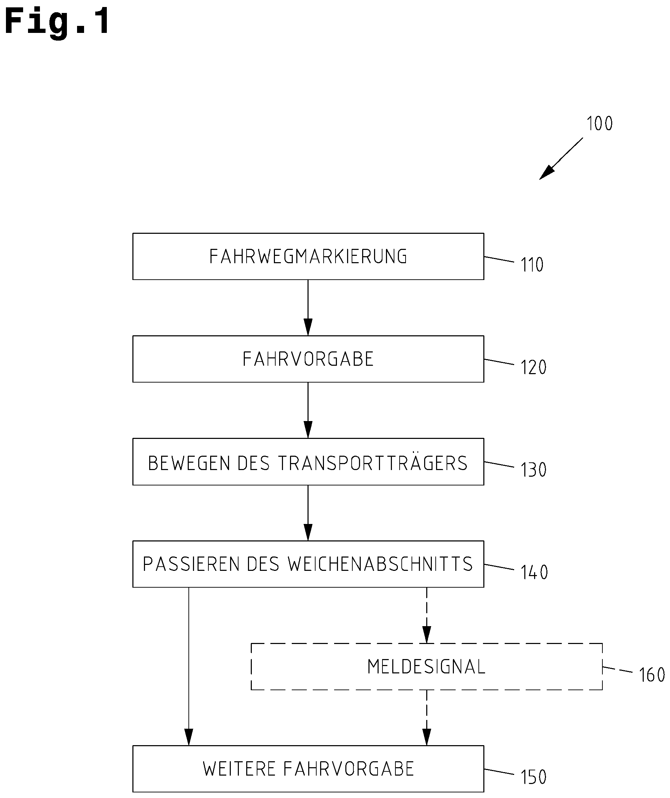

In Fig. 1 bis Fig. 3 ist ein Verfahren 100 zum Ansteuern von Transportträgern 3 zum Transport von Hängeware 10 an einer Hängefördervorrichtung 1 für ein Kommissioniersystem schematisch dargestellt.

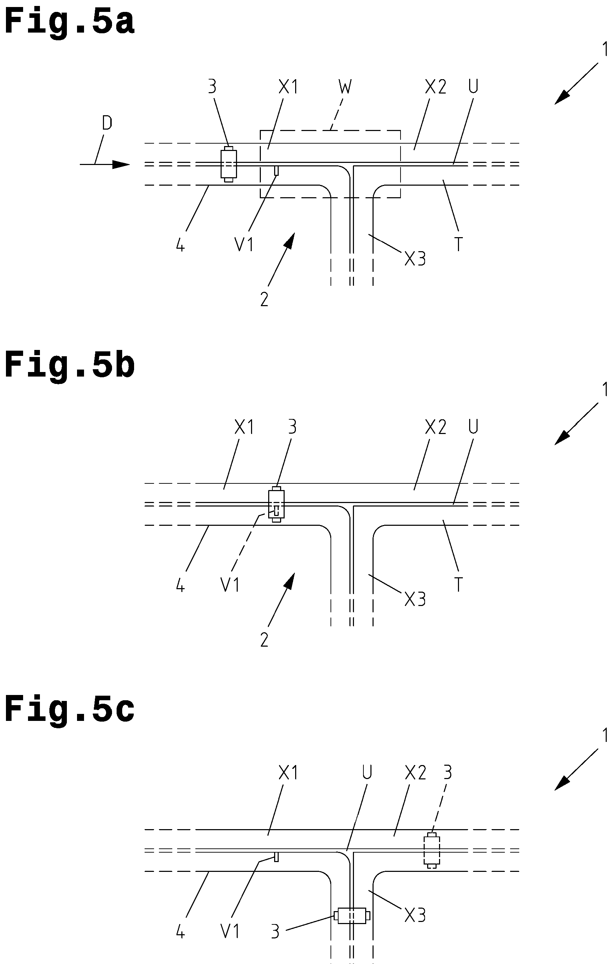

Darüber hinaus ist in Fig. 5a bis Fig. 6c ein Ausschnitt einer Hängefördervorrichtung 1, insbesondere ein Verteilermodul 2, mit einem entlang eines Transportwegs S bewegten Transportträgers 3 schematisch in Untersicht dargestellt.

Beim Verfahren 100 erfolgt zunächst ein Bereitstellen 110 einer Fahrwegmarkierung U, V1..V5, welche im Wesentlichen dazu dient einen Transportweg S und/oder neuralgische Punkte entlang des Transportweges S zu markieren, wie beispielsweise Verzweigungen, Zusammenführungen, Überprüfpunkte und dergleichen.

Die Fahrwegmarkierung U, V1..V5 umfasst zumindest eine Abfragemarkierung V1 und eine Meldemarkierung V2, deren Funktion nachfolgend genauer beschrieben wird. Unter dem Begriff Steuermarkierung V1..V5 können unter anderem die Abfragemarkierung V1 und die Meldemarkierung V2 zusammengefasst bzw. verstanden werden. Mit anderen Worten kann eine Steuermarkierung V1..V5 beispielsweise als Abfragemarkierung V1 oder als Meldemarkierung V2 ausgebildet sein.

Darüber hinaus kann die Fahrwegmarkierung U, V1..V5, eine Fahrmarkierung U umfassen, welche sich entlang des Transportweges S erstreckt und welche den Transportträger 3 entlang des Transportweges S leitet. Diese Fahrmarkierung U kann beispielsweise als Fahrlinie bzw. Leitlinie ausgebildet sein, entlang welcher der Transportträger 3 fahren kann. Die Fahrlinie umfasst eine erste Kante und eine zweite Kante.

Ferner erfolgt ein Bereitstellen 120 einer Fahrwegvorgabe für einen Transportträger 3. Diese Fahrvorgabe wird in einem (elektronischen) Speicher 35 des Transportträgers 3 gespeichert und ist so jederzeit durch den Transportträger 3 abrufbar. Hierfür kann die Fahrvorgabe, beispielsweise von einer übergeordneten Steuerung 6, an eine Fahrsteuerung 34 des Transportträgers 3 übermittelt und von dieser im Speicher 35 gespeichert werden.

Überdies umfasst das Verfahren einen Schritt des Bewegens 130 des Transportträgers 3 entlang des Transportweges S. Dies kann autonom durch den Transportträger 3 erfolgen, indem dieser durch die Fahrsteuerung 34 entsprechend angesteuert wird. Beispielsweise kann der Transportträger 3 eine oder mehrere Antriebsvorrichtungen 15 umfassen, welche durch die Fahrsteuerung 34 angesteuert werden.

Damit der Transportträger 3 im Kommissioniersystem bzw. an der Hängefördervorrichtung 1 nicht bloß entlang einer einzigen Route bewegt werden kann, ist üblicherweise vorgesehen, dass der Transportweg S einen oder mehrere Weichenabschnitte W aufweist. Der oder die Weichenabschnitte W umfassen einen oder mehrere, insbesondere jeweils zwei, Wege, welche vom Transportträger 3 befahren werden können.

Die zuvor beschriebene Fahrwegvorgabe umfasst eine Wegdefinition, die einen auszuwählenden Weg in dem Weichenabschnitt W oder in einem oder mehreren Weichenabschnitten W der Weichenabschnitte W angibt.

Beispielsweise kann die Fahrsteuerung 34 des Transportträgers 3 zum Empfang der Fahrwegvorgabe, insbesondere der Wegdefinition, von der übergeordneten Steuerung 6, zum Speichern 35 dieser Wegdefinition im Speicher 35 des Transportträgers 3 und zur Auswahl eines Weges von mehreren Wegen in einem Weichenabschnitt W mit Hilfe der Fahrsteuerung 34 und entsprechend dieser Wegdefinition ausgebildet sein. Die Wegdefinition kann mit Hilfe von optischer, drahtgebundener oder funkbasierter Kommunikation übermittelt werden (insbesondere via Powerline-Communication).

Die Wegdefinition kann beispielsweise die Werte bzw. Listenelemente "Geradeausfahrt" oder "Umleitfahrt" umfassen. Dies kann auch binär in der Form "0" oder "1" angegeben sein. "Geradeausfahrt" oder "0" können beispielsweise bedeuten, dass der Transportträger 3 einen ersten Weg der Wege auswählen soll. Analog dazu können "Umleitfahrt" oder "1" bedeuten, dass der Transportträger 3 einen zweiten Weg der Wege auswählen soll. Wenn der Transportträger 3 mehrere Weichenabschnitte W passieren soll, so kann die Wegdefinition eine Abfolge bzw. eine Liste aus mehreren Listenelementen umfassen.

Die Wegdefinition kann somit die Wahl eines bestimmten Weges bzw. einer bestimmten Fahrmarkierung U in einem Weichenabschnitt W oder eine Abfolge einer Wahl eines Weges bzw. Fahrmarkierung U für die beispielsweise nächsten vier Weichenabschnitte W umfassen, also etwa die Abfolge "Geradeausfahrt, Umleitfahrt, Umleitfahrt, Geradeausfahrt". Die Abfolge kann im Wesentlichen als Liste umfassend mehrere Listenelemente angesehen werden. Diese Wegdefinition wird an die Fahrsteuerung 34 übermittelt, im Speicher 35 gespeichert, und dient dann der Wahl eines bestimmten Weges bzw. einer bestimmten Fahrmarkierung U. Im Fall einer Fahrmarkierung U wird im ersten Weichenabschnitt W demzufolge jene Fahrmarkierung U gewählt, welche eine Geradeausfahrt bewirkt, im zweiten Weichenabschnitt W jene Fahrmarkierung U, welche eine Umleitfahrt bewirkt, und so weiter. Dazu kann vorgesehen sein, dass der Transportträger 3 mit Hilfe einer Erfassungseinheit bzw. eines Fahrflächensensors 30 und einer Steuereinheit 33 der linken oder rechten Kante der Fahrmarkierung U nachfährt. Durch Wahl der entsprechenden Kante kann die Wahl des gewünschten Weges im Weichenabschnitt W bewirkt werden. Die übergeordnete Steuerung 6 gibt also den Weg vor, welcher dann autonom vom Transportträger 3 mit Hilfe der Fahrsteuerung 34 befahren wird. Die Abfolge kann auch rein binär angegeben werden, beispielsweise in der Abfolge "0, 1, 1, 0" und dann direkt für die Ansteuerung einer mit der Fahrsteuerung 34 verbundenen Lichtquelle des Transportträgers 3 verwendet werden.

Selbstverständlich ist die Übertragung von Daten von der übergeordneten Steuerung 6 zur Fahrsteuerung 34 des Transportträgers 3 nicht auf Wegdefinitionen beschränkt, sondern es kann auch eine Ziel- bzw. Sollgeschwindigkeit oder ein Ziel- bzw. Sollabstand zu einem vorausfahrenden Transportträger 3 übermittelt werden. Dies kann zusätzlich oder alternativ zur Steuerung mit Hilfe von Steuermarkierungen V1..V5 erfolgen. Hierfür kann die Fahrvorgabe beispielsweise die Soll- bzw. Ziel-Geschwindigkeit und/oder den Soll- bzw. Ziel-Abstand umfassen.

Vorteilhaft ist es insbesondere, wenn die Fahrsteuerung 34 des Transportträgers 3 zum Empfang eines Gewichts einer vom Transportträger 3 getragenen Masse (also zum Beispiel zum Empfang des Gewichts der Ware) von der übergeordneten Steuerung 6, zum Speichern 35 dieses Gewichts im Speicher 35 und zum Ausführen eines Beschleunigungsprofils mit Hilfe der Fahrsteuerung 34 und in Abhängigkeit dieses Gewichts ausgebildet ist. Auf diese Weise kann die Fahrdynamik des Transportträgers 3 an die Ware angepasst werden. Das genannte Gewicht kann beispielsweise aus einer Datenbank stammen, in welcher das Gewicht zugeordnet zu einer Ware gespeichert ist, oder durch Abwiegen ermittelt werden.

Wenn der Transportträger 3 nun entlang des Transportwegs S bewegt wird, kann es vorkommen, dass dieser einen Weichenabschnitt W erreicht, woraufhin der Transportträger 3 den Weichenabschnitt W passiert. Beim Passieren 140 des Weichenabschnitts W wird durch den Transportträger 3 im Wesentlichen einer der möglichen Wege gemäß der Wegdefinition ausgewählt und befahren.

Um eine erhöhte Flexibilität des Transports durch den Transportträger 3 zu ermöglichen, indem gegebenenfalls der Transportträger 3 umgeleitet oder eine Route des Transportträgers 3 angepasst wird, ist vorgesehen, dass an sogenannten Meldepunkten, welche durch eine Meldemarkierung V2 markiert sind, ein Übertragen 150 einer neuen bzw. weiteren Fahrvorgabe erfolgt.

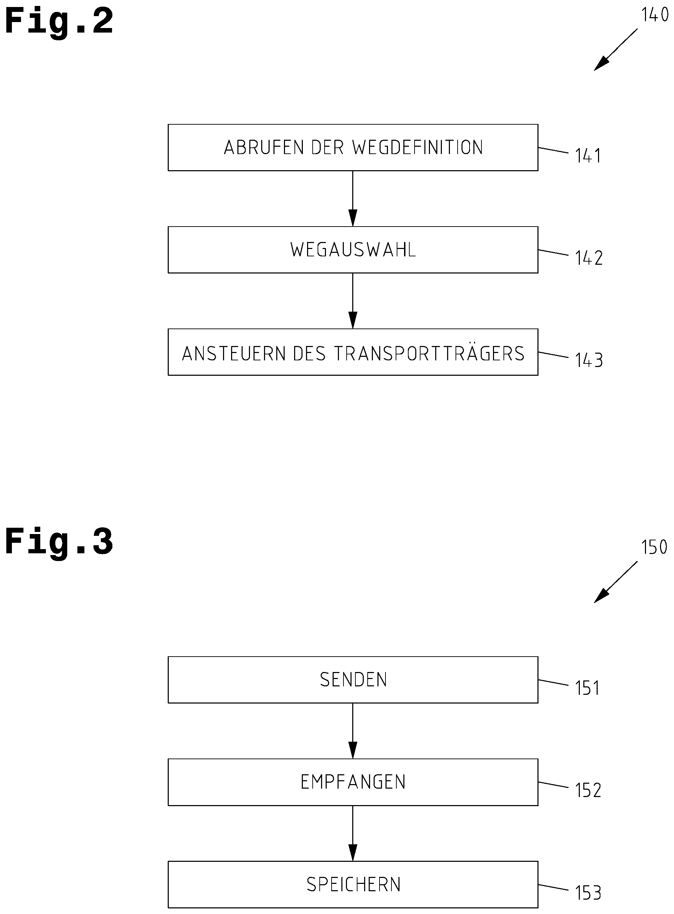

Wie in Fig. 2 schematisch dargestellt, umfasst das Passieren 140 des Weichenabschnitts W einen Schritt eines Abrufens 141 der Wegdefinition. Dies erfolgt in Reaktion auf ein Erreichen der Abfragemarkierung V1 durch den Transportträger 3. Hierfür kann vorgesehen sein, dass der Transportträger 3 die Fahrwegmarkierung U, V1..V5 erfasst und auswertet, um die Abfragemarkierung V1 und somit ein Erreichen dieser (autonom) zu erkennen. Dies erfolgt beispielsweise über eine Interaktion zwischen der Abfragemarkierung V1 und dem Transportträger 3. Insbesondere ist die Abfragemarkierung V1 als optische Markierung ausgebildet, welche durch eine Erfassungseinheit des Transportträgers 3, vorzugsweise mittels lichtempfindlichen Elementen 7 wie Fotodioden, erfassbar ist. Alternativ kann die Abfragemarkierung V1 als Tastelement ausgebildet sein, welches einen am Transportträger 3 angeordneten Taster betätigt.

Anschließend erfolgt ein Auswählen 142 eines der Wege im Weichenabschnitt W gemäß der Wegdefinition durch die Fahrsteuerung 34 und schließlich ein Ansteuern 143 des Transportträgers 3 durch die Fahrsteuerung 34. Hierbei wird der Transportträger 3 derart angesteuert, dass dieser dem zuvor ausgewählten Weg folgt bzw. entlang dieses Weges bewegt wird.

Das Übertragen 150 der weiteren Fahrvorgabe von der übergeordneten Steuerung 6 an den Transportträger 3 erfolgt in Reaktion auf ein Erreichen der Meldemarkierung V2 durch den Transportträger 3. Hierfür kann vorgesehen sein, dass der Transportträger 3 die Fahrwegmarkierung U, V1..V5 erfasst und auswertet, um die Meldemarkierung V2 und somit ein Erreichen dieser (autonom) zu erkennen. Dies kann wie zuvor im Zusammenhang mit der Abfragemarkierung V1 beschrieben über eine Interaktion zwischen der Meldemarkierung V2 und dem Transportträger 3 erfolgen.

Bevorzugt umfasst das Verfahren 100 einen Schritt eines Übermittelns 160 eines Meldesignals, wobei das Meldesignal von der Fahrsteuerung 34 des Transportträgers 3 gesendet und von der übergeordneten Steuerung 6 empfangen wird. Das Meldesignal wird hierbei in Reaktion auf das Erreichen der Meldemarkierung V2 übermittelt. Dies kann beispielsweise durch ein Kommunikationsmodul 37 des Transportträgers 3, insbesondere einen Kurzdistanz-Funksender 8, erfolgen. In diesem Fall kann das Meldesignal durch eine Kommunikationseinheit 5 der übergeordneten Steuerung 6, insbesondere durch einen Kurzdistanz-Funkempfänger 9, empfangen werden. Alternativ kann die Meldemarkierung V2 als Taster ausgebildet sein, welcher durch ein am Transportträger 3 angeordnetes Tastelement betätigt wird. Wenn das Übermitteln 160 des Meldesignals vorgesehen ist, dann ist es zweckmäßig, wenn das Übertragen 150 der weiteren Fahrvorgabe in Reaktion auf das Empfangen des Meldesignals durch die übergeordnete Steuerung 6 durchgeführt wird.

Bevorzugt wird beim Übertragen 150 der weiteren Fahrvorgabe in einem ersten Schritt 151 ein Meldesignal vom Transportträger 3 an die übergeordnete Steuerung 6 übertragen. Hierbei wird zunächst das Meldesignal von der Fahrsteuerung 34 des Transportträgers 3 gesendet, wenn der Transportträger 3 die Meldemarkierung V2 erreicht.

Das Übertragen 150 der weiteren Fahrvorgabe erfolgt vorzugsweise wie in Fig. 3 dargestellt und umfasst einen Schritt eines Sendens 151 der weiteren Fahrvorgabe durch die übergeordnete Steuerung 6, insbesondere durch die Kommunikationseinheit 5 der übergeordneten Steuerung 6. Dies kann drahtlos erfolgen, beispielsweise durch einen Kurzdistanz-Funksender 8 der Kommunikationseinheit 5. Alternativ kann das Senden 151 auch drahtgebunden erfolgen. Ferner kann das Übertragen 150 einen Schritt eines Empfangens 152 der weiteren Fahrvorgabe durch die Fahrsteuerung 34 des Transportträgers 3, insbesondere durch das Kommunikationsmodul 37, umfassen. Im zuvor beschriebenen Fall kann die weitere Fahrvorgabe auch drahtlos empfangen werden, beispielsweise durch einen Kurzdistanz-Funkempfänger 9 des Transportträgers 3, insbesondere der Fahrsteuerung 34. Alternativ kann das Empfangen 151 auch drahtgebunden erfolgen. Die empfangene weitere Fahrsteuerung 34 wird in einem Schritt des Speicherns 153 im Speicher 35 des Transportträgers 3 gespeichert und somit in diesem bereitgestellt.

Unabhängig davon, wie das Übertragen 150 der weiteren Fahrvorgabe erfolgt, kann eine zuvor bereitgestellte Fahrvorgabe aus dem Speicher 35 gelöscht werden, wenn die weitere Fahrvorgabe übertragen wird.

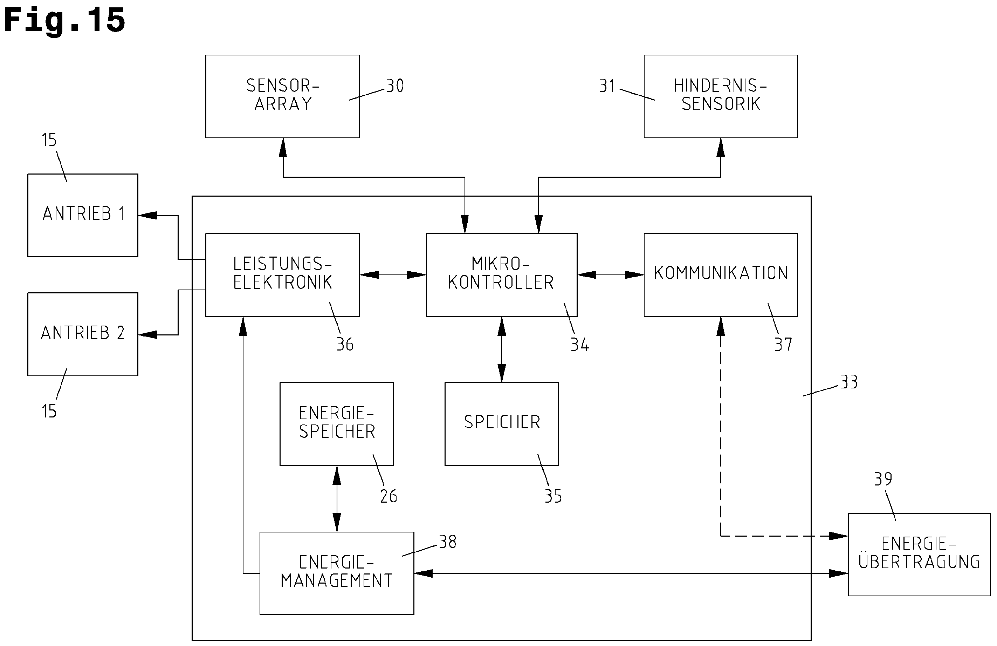

Ein beispielhaftes, elektrisches Blockschaltbild eines Transportträgers 3 ist in Fig. 15 gezeigt.

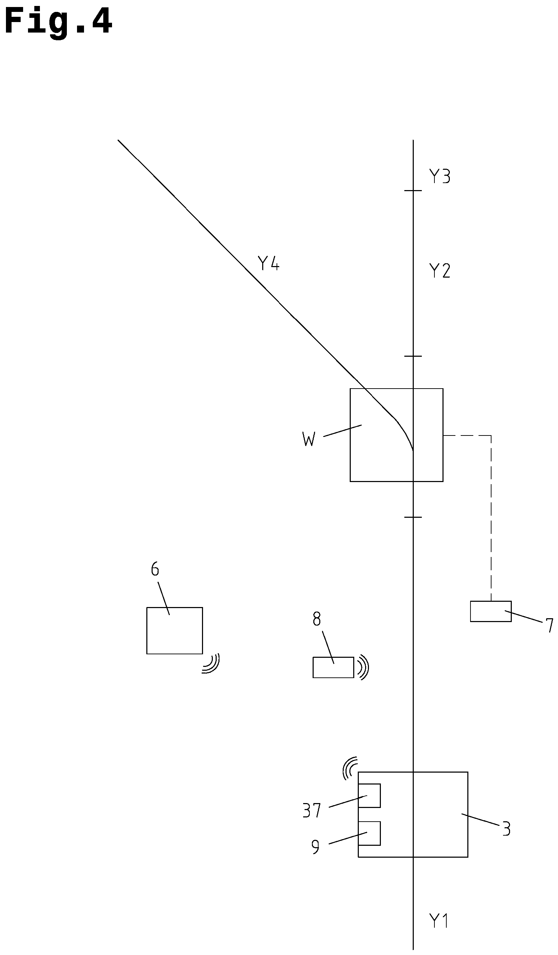

Fig. 4 zeigt ergänzend eine schematische Darstellung eines Ausschnitts aus einem Transportnetz mit einem Weichenabschnitt W, welcher optional mit einem lichtempfindlichen Element 100 verbunden ist.

Es kann somit, beispielsweise in einer weiteren möglichen Ausführungsvariante, vorgesehen sein, dass die Steuermarkierung V1..V5, insbesondere die Meldemarkierung V2, ein (aktives) Melden der Fahrsteuerung 34 bei der übergeordneten Steuerung 6 auslöst. Das Lesen der Steuermarkierung V1..V5, insbesondere der Meldemarkierung V2, kann wiederum durch den Fahrflächensensor 30 oder einen anderen Sensor des Transportträgers 3 erfolgen.

Beispielsweise kann das Melden der Fahrsteuerung 34 bei der übergeordneten Steuerung 6 das Senden einer Wegdefinition durch die übergeordnete Steuerung 6 bewirken. Beispielsweise kann das durch die Tragstruktur 4 gebildete Transportnetz in mehrere durch Meldepunkte getrennte Segmente unterteilt sein. Beim aktiven Melden der Fahrsteuerung 34 an einer als Meldepunkt wirkenden Steuermarkierung V1..V5 erhält die Fahrsteuerung 34 von der übergeordneten Steuerung 6 die Wegdefinition für das folgende Segment. Auf diese Weise kann der Transportträger 3 flexibel durch das Transportnetz geleitet werden (vergleiche auch die Versorgungs-Segmente Y1..Y4 in Fig. 4). Die als Meldepunkt wirkende Steuermarkierung V1..V5 kann auch als Meldemarkierung V2 bezeichnet werden.

Denkbar wäre auch, dass im Transportnetz Kurzdistanz-Funksender 8 verteilt sind und die Transportträger 3 mit der Fahrsteuerung 34 verbundene Kurzdistanz-Funkempfänger 9 aufweisen oder umgekehrt, so wie das in Fig. 4 schematisch dargestellt ist. Wird durch einen Kurzdistanz-Funkempfänger 9 ein Signal eines Kurzdistanz-Funksenders 8 erfasst, kann das Melden der Fahrsteuerung 34 bei der übergeordneten Steuerung 6 und in Folge ebenfalls die Übermittlung einer Wegdefinition von der übergeordneten Steuerung 6 an die Fahrsteuerung 34 ausgelöst werden. Sind im Transportnetz Kurzdistanz-Funkempfänger 9 verteilt und weisen die Transportträger 3 Kurzdistanz-Funksender 8 auf, dann sind die in der Fig. 4 dargestellten Rollen umgekehrt. In diesem Fall kann der Empfang des Signals des Kurzdistanz-Funksenders 8 beim stationären Kurzdistanz-Funkempfänger 9 das Melden des Transportträgers 3 bei der übergeordneten Steuerung 6 durch den Kurzdistanz-Funkempfänger 9 und in Folge ebenfalls die Übermittlung einer Wegdefinition von der übergeordneten Steuerung 6 an die Fahrsteuerung 34 auslösen.

Der Steuermarkierung V1..V5 oder dem Kurzdistanz-Funksender 8 (beziehungsweise alternativ dem im Transportnetz angeordneten Kurzdistanz-Funkempfänger) kann eine örtliche Position zugeordnet sein, und das Melden der Fahrsteuerung 34 bei der übergeordneten Steuerung 6 kann eine Anpassung der Wegdefinition ausgehend von der genannten Position durch die übergeordnete Steuerung 6 bewirken, wenn eine Soll-Position des Transportträgers 3 nicht mit der örtlichen Position der Steuermarkierung V1..V5 oder des Kurzdistanz-Funksender 8 (beziehungsweise des Kurzdistanz-Funkempfängers) übereinstimmt. Es kann vorkommen, dass die tatsächliche Position oder Ist-Position des Transportträgers 3, welche bei Erfassung der Steuermarkierung V1..V5 oder bei Erfassung des Signals des Kurzdistanz-Funksenders 8 der Position dieser Steuermarkierung V1..V5 oder dieses Kurzdistanz-Funksenders 8 (beziehungsweise dieses Kurzdistanz-Funkempfängers) entspricht, nicht mit der von der Fahrsteuerung 34 angenommenen Position des Transportträgers 3 (Soll-Position) übereinstimmt. Die Wahl eines bestimmten Weges entsprechend der im Speicher 35 gespeicherten Wegdefinition führt dann gegebenenfalls zu Fehlschaltungen und Fehlleitungen. Um zu überprüfen, ob die Soll-Position des Transportträgers 3 mit der örtlichen Position der Steuermarkierung V1..V5, insbesondere der Meldemarkierung V2, übereinstimmt, kann vorgesehen sein, dass die Fahrvorgabe eine Soll-Kennung umfasst, welche die Soll-Position angibt und die Steuermarkierung V1..V5 eine Ist-Kennung umfasst, welche der örtlichen Position der jeweiligen Steuermarkierung V1..V5 zugeordnet ist. Die Soll- und Ist-Kennung können durch die übergeordnete Steuerung 6 verglichen werden. Mit den vorgeschlagenen Maßnahmen kann eine Abweichung der tatsächlichen Position des Transportträgers 3 von der von der Fahrsteuerung 34 angenommenen Position berücksichtigt beziehungsweise die Soll-Position des Transportträgers 3 wieder korrigiert werden, das heißt auf dessen Ist-Position gesetzt werden. Eine Berücksichtigung der tatsächlichen Position des Transportträgers 3 kann beispielsweise dadurch erfolgen, dass eine weitere Fahrvorgabe derart erstellt wird, dass diese eine korrigierende Wegdefinition umfasst. Diese weitere Fahrvorgabe kann dann an den Transportträger 3 übertragen werden.

Denkbar wäre auch, dass die Steuermarkierung V1..V5 oder der Kurzdistanz-Funksender 8 (beziehungsweise der Kurzdistanz-Funkempfängers) dazu ausgebildet sind, das gleichzeitige Melden der Fahrsteuerungen 34 mehrerer Transportträger 3 bei der übergeordneten Steuerung 6 zu bewirken.

In Fig. 5a bis Fig. 5c ist ein Ausschnitt einer Hängefördervorrichtung 1, insbesondere ein Verteilermodul 2, schematisch in Untersicht sowie eine Bewegung eines Transportträgers 3 beim Passieren 140 des Weichenabschnittes W dargestellt. Aus Gründen der Übersichtlichkeit ist die Hängeware 10 nicht dargestellt.

Die Hängefördervorrichtung 1 bzw. das Verteilermodul 2 umfasst eine Tragstruktur 4, welche eine Fahrfläche T ausbildet, an welcher der Transportträger 3 verfahrbar ist. Hierbei kann die Tragstruktur 4 beispielsweise als Platte ausgebildet sein, an welcher der Transportträger 3 abrollbar anliegt. Entlang der Tragstruktur 4 verläuft der Transportweg S.

Darüber hinaus umfasst die Hängefördervorrichtung 1 bzw. das Verteilermodul 2 eine Fahrwegmarkierung U, V1..V5, welche an der Tragstruktur 4 entlang des Transportwegs S angeordnet ist. Die Fahrwegmarkierung U, V1..V5 umfasst eine oder mehrere Steuermarkierungen V1..V5, insbesondere die zuvor beschriebene Abfragemarkierung V1 und/oder Meldemarkierung V2.

Der Transportweg S umfasst den Weichenabschnitt W, wobei sich der Transportweg S in einem Knoten des Weichenabschnitts W verzweigt, sodass der Weichenabschnitt W eine zum Knoten hinführende Einlaufstrecke X1 und mehrere, insbesondere zwei, vom Knoten wegführende Auslaufstrecken X2, X3 aufweist. Hierbei stellen die Einlaufstrecke X1 und eine erste bzw. zweite Auslaufstrecke X2, X3 einen ersten bzw. zweiten Weg für den Transportträger 3 im Weichenabschnitt W bereit. Die Abfragemarkierung V1 ist dem Weichenabschnitt W zugeordnet und entlang dessen Einlaufstrecke X1 angeordnet.

Im Weichenabschnitt W kann vorgesehen sein, dass sich die Fahrmarkierung U, insbesondere die Fahrlinie, verzweigt, wie dies in Fig. 5a bis Fig. 5c dargestellt ist. Hierbei kann die erste Kante im entlang des ersten Weges und die zweite Kante entlang des zweiten Weges verlaufen.

In Fig. 5a nähert sich der Transportträger 3 dem gestrichelt eingezeichneten Weichenabschnitt W, wo der Transportträger 3 die Abfragemarkierung V1 erreicht, wie dies in Fig. 5b gezeigt ist. Zu diesem Zeitpunkt wird die Wegdefinition aus dem Speicher 35 abgerufen, welche zumindest für den soeben erreichten Weichenabschnitt W angibt, welcher Weg gewählt werden soll.

Wenn die Wegdefinition beispielsweise den ersten Weg angibt, so wird der Transportträger 3 entlang der ersten Auslaufstrecke X2, insbesondere geradeaus, weiterbewegt. Hierfür kann der Transportträger 3 jener Fahrmarkierung U folgen, welche sich entlang des ersten Weges erstreckt, beispielsweise indem die erste Kante der Fahrlinie verfolgt wird. Dies kann beispielsweise der zuvor beschriebenen "Geradeausfahrt" entsprechen.

Alternativ wird der Transportträger 3 entlang der zweiten Auslaufstrecke X3 weiterbewegt, wenn die Wegdefinition den zweiten Weg angibt, wie dies in Fig. 5c durch den gestrichelten Transportträger 3 angedeutet ist. Hierfür kann der Transportträger 3 jener Fahrmarkierung U folgen, welche sich entlang des zweiten Weges erstreckt, beispielsweise indem die zweite Kante der Fahrlinie verfolgt wird. Dies kann beispielsweise der zuvor beschriebenen "Umlenkfahrt" entsprechen.

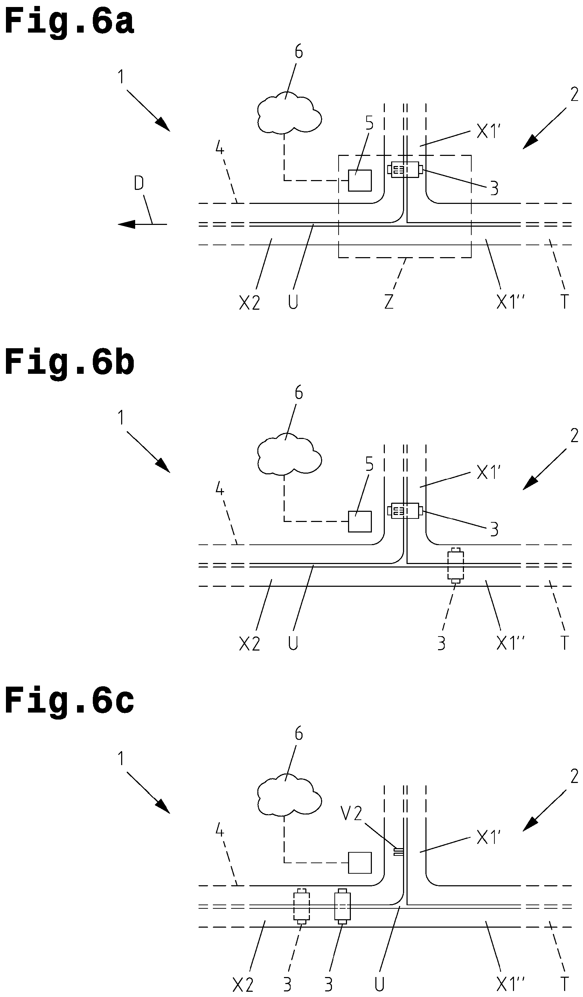

Wenn mehrere Strecken des Transportwegs S auf eine Strecke zusammengeführt werden sollen, ist es günstig, wenn der Transportweg S einen Zusammenführungsabschnitt Z umfasst, wie dies beispielhaft in Fig. 6a bis Fig. 6c dargestellt ist. Hierbei laufen mehrere Strecken des Transportwegs S in einem Knoten auf eine Strecke zusammen, sodass der Zusammenführungsabschnitt Z mehrere, insbesondere zwei, zum Knoten hinführende Einlaufstrecken X1', X1" und eine vom Knoten wegführende Auslaufstrecke X2 aufweist. Die Meldemarkierung V2 kann dem Zusammenführungsabschnitt Z zugeordnet und entlang einer ersten Einlaufstrecke X1' der Einlaufstrecken X1', X1" angeordnet sein, wie dies in Fig. 6a bis Fig. 6c gezeigt ist. Selbstverständlich kann auch entlang einer zweiten Einlaufstrecke X1" eine Meldemarkierung V2 angeordnet sein.

In Fig. 6a erreicht der Transportträger 3 den gestrichelt eingezeichneten Zusammenführungsabschnitt Z, wo der Transportträger 3 die Meldemarkierung V2 erreicht, wie dies in Fig. 6b gezeigt ist. Zu diesem Zeitpunkt und/oder an diesem Ort erfolgt eine Datenübertragung zwischen dem Transportträger 3 und der übergeordneten Steuerung 6. Hierbei wird insbesondere die weitere Fahrvorgabe an den Transportträger 3 übertragen. Dies kann wie zuvor beschrieben erfolgen. Die weitere Fahrvorgabe kann eine weitere bzw. neue Wegdefinition umfassen, wenn dies erforderlich ist.

Wenn keine weiteren Weichenabschnitte W zwischen der Meldemarkierung V2, an welcher sich der Transportträger 3 befindet, und einem Zielort, zu welchem der Transportträger 3 fahren soll, vorhanden sind, ist beispielsweise keine Wegdefinition mehr erforderlich. Hierbei kann die Fahrvorgabe andere Angaben, beispielsweise betreffend die Sollgeschwindigkeit, den Sollabstand, eine nachfolgend beschriebene Freigabeanweisung, oder dergleichen umfassen. Zur Datenübertragung kann das Verteilermodul 2 eine Kommunikationseinheit 5 der übergeordneten Steuerung 6 umfassen, welche im Bereich der Meldemarkierung V2 angeordnet ist.

Während sich der Transportträger 3 im Zusammenführungsabschnitt Z, beispielsweise an der Meldemarkierung V2, befindet, kann es vorkommen, dass auch ein anderer gestrichelt eingezeichneter Transportträger 3 die zweite Einlaufstrecke X1" entlangfährt und so den Zusammenführungsabschnitt Z erreicht, wie dies in Fig. 6b dargestellt ist.

In diesem Fall ist es zweckmäßig, wenn die Fahrvorgabe eine Freigabeanweisung umfasst, welche dem Transportträger 3 angibt, wann sich dieser über den Knoten auf die Auslaufstrecke X2 bewegen soll. Die Freigabeanweisung kann von der übergeordneten Steuerung 6 so erstellt werden, dass dies ohne Kollision mit dem anderen Transportträger 3 erfolgt, beispielsweise indem der Transportträger 3 vor dem anderen Transportträger 3 oder, wie in Fig. 6c gezeigt, nach dem anderen Transportträger 3 eingereiht wird.

Alternativ kann vorgesehen sein, dass der Transportträger 3 mit einer Sensorik zur Erfassung des anderen Transportträgers 3 im Weichenabschnitt W ausgestattet oder zur Kommunikation mit dem anderen Transportträger 3 ausgebildet ist, sodass das Durchfahren des Knotens und überführen des Transportträgers 3 auf die Auslaufstrecke X2 durch den Transportträger 3 bzw. dessen Fahrsteuerung 34, insbesondere ohne Kollision mit dem anderen Transportträger 3, autonom erfolgen kann.

Bei dem dargestellten Ausschnitt der Hängefördervorrichtung 1 bzw. bei dem Verteilermodul 2 kann vorgesehen sein, dass eine der Auslaufstrecken X2, X3 des Weichenabschnittes W mit einer der Einlaufstrecken X1', X1" des Zusammenführungsabschnittes Z über eine Verbindungsstrecke verbunden ist, wie dies durch gestrichelte Linien in Fig. 5a bis Fig. 6c angedeutet ist.

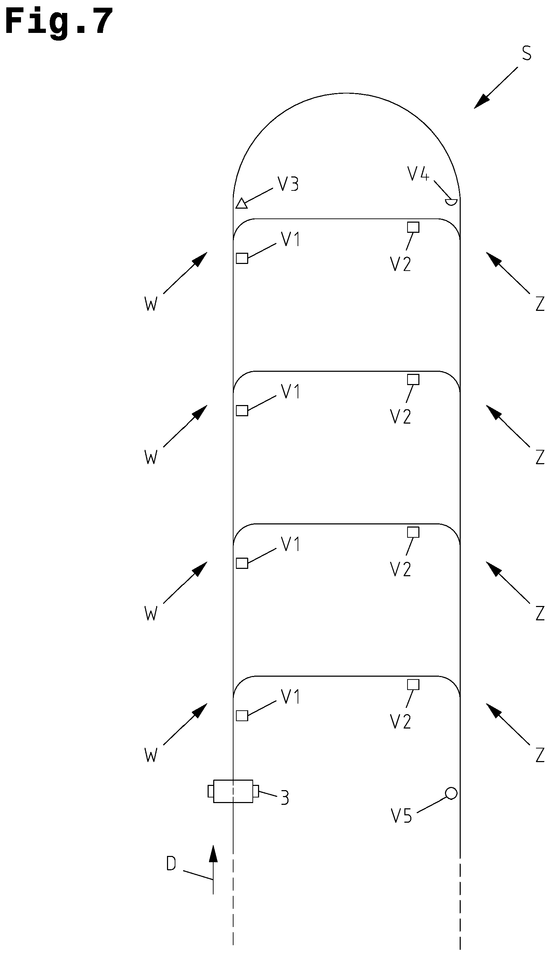

In Fig. 7 ist ein Ausschnitt eines Transportweges S schematisch dargestellt, welcher mehrere Weichenabschnitte W umfasst. Der Transportweg S kann wie dargestellt auch mehrere Zusammenführungsabschnitte Z aufweisen.

Den Weichenabschnitten W und/oder den Zusammenführungsabschnitten Z kann wie dargestellt jeweils eine Steuermarkierung V1..V5, konkret jeweils eine Abfragemarkierung V1 bzw. eine Meldemarkierung V2 zugeordnet sein.

Zusätzlich zu den bereits beschriebenen Steuermarkierungen V1..V5 kann die Fahrwegmarkierung U, V1..V5 weitere Steuermarkierungen V1..V5 umfassen. Eine derartige Steuermarkierung V1..V5 kann beispielsweise eine Regelungsmarkierung V3 sein, welche eine Ziel-Geschwindigkeit des Transportträgers 3 und/oder einen Ziel-Abstand des Transportträgers 3 vorgibt. Ein Erkennen der Regelungsmarkierung V3 kann somit den Transportträger 3 bzw. dessen Fahrsteuerung 34 dazu veranlassen, die Geschwindigkeit des Transportträgers 3 und/oder einen Abstand zu einem vorausfahrenden Transportträger 3 anzupassen. Eine derartige Regelungsmarkierung V3 kann an beliebiger Stelle entlang des Transportweges S angeordnet sein, je nachdem, wo eine Geschwindigkeits- oder Abstandsregelung erforderlich oder gewünscht ist. Im dargestellten Beispiel ist die Regelungsmarkierung V3 unmittelbar vor einer Kurve angeordnet.

Darüber hinaus kann eine derartige Steuermarkierung V1..V5 auch eine Umschaltmarkierung V4 sein, welche dem Transportträger 3 bzw. dessen Fahrvorgabe vorgibt, welche Kante der Fahrlinie zu verfolgen ist. Im gezeigten Beispiel ist die Umschaltmarkierung V4 den Zusammenführungsabschnitten Z vorgelagert und gibt an, dass die in Transportrichtung D linke Kante zu verfolgen ist. Dadurch wird gewährleistet, dass der Transportträger 3 nicht zufällig im Zusammenführungsabschnitt Z falsch abbiegt. Im gezeigten Beispiel wird somit eine Geradeausfahrt gewährleistet.

Ferner kann die Fahrwegmarkierung U, V1..V5 eine weitere Steuermarkierung V1..V5, nämlich eine Kontrollmarkierung V5, umfassen. Die Kontrollmarkierung V5 kann, analog zur Meldemarkierung V2, ein Melden des Transportträgers 3 bei der übergeordneten Steuerung 6 auslösen. Somit kann überwacht werden, ob ein Transportträger 3 oder ob alle Transportträger 3 einer Transportträgergruppe einen durch die Kontrollmarkierung V5 markierten Kontrollpunkt passiert haben. Hierbei ist eine Übertragung einer weiteren Fahrvorgabe nicht zwingend erforderlich.

Bei mehreren Weichenabschnitten W, wie dies beispielhaft in Fig. 7 gezeigt ist, kann über die Wegdefinition kann angegeben werden, in welchem Weichenabschnitt W der Transportträger 3 abbiegen bzw. umgeleitet werden soll. Um im ersten Weichenabschnitt W abzubiegen, kann der Transportträger 3 in dessen Speicher 35 eine Wegdefinition bereitgestellt haben, welche den Wert bzw. das Listenelement "Umleitfahrt" bzw. "1" umfasst. Ebenso kann der Transportträger 3 in dessen Speicher 35 eine Wegdefinition bereitgestellt haben, welche die Werte bzw. Listenelemente "Geradeausfahrt, Umleitfahrt" bzw. "0, 1" bereitgestellt haben, wenn der Transportträger 3 im zweiten Weichenabschnitt W abbiegen soll. Für den dritten oder vierten Weichenabschnitt W kann die Wegdefinition die Werte bzw. Listenelemente "Geradeausfahrt, Geradeausfahrt, Umleitfahrt" bzw. "0, 0, 1" oder "Geradeausfahrt, Geradeausfahrt, Geradeausfahrt, Umleitfahrt" bzw. "0, 0, 0, 1" umfassen.

Ein Transportträger 3, der an der ersten Weiche abbiegen soll, kann in dessen Speicher 35 eine Wegdefinition bereitgestellt haben, welche den Wert "Umleitfahrt" bzw. "1" umfasst.

Darüber hinaus kann vorgesehen sein, dass die Fahrsteuerung 34 einen Markierungszähler umfasst, welcher an jedem Weichenabschnitt W bzw. beim Erkennen der Abfragemarkierung V1 um den Wert "1" erhöht bzw. inkrementiert wird. Den oben beschriebenen Listenelementen kann jeweils eine Ordnungszahl zugeordnet werden. Im Beispiel "0, 1" ist das Listenelement "0" das erste Listenelement der Liste, was der Ordnungszahl "1" entspricht und das Listenelement "1" das zweite Listenelement der Liste, was der Ordnungszahl "2" entspricht. Für weitere Listenelemente gilt analoges. Das Auswählen der Auslaufstrecke X2, X3 kann nun gemäß jenem Listenelement erfolgen, dessen Ordnungszahl dem Markierungszähler entspricht. Im ersten Weichenabschnitt W entspricht der Markierungszähler dem Wert "1", weshalb das Auswählen gemäß dem ersten Listenelement erfolgt, im zweiten Weichenabschnitt W entspricht der Markierungszähler dem Wert "2", weshalb das Auswählen gemäß dem zweiten Listenelement erfolgt und so weiter.

Im dargestellten Beispiel bilden der Transportweg S, dessen Weichenabschnitte W und Zusammenführungsabschnitte Z sowie die Verbindungsstrecken im Wesentlichen eine Sortiervorrichtung, wobei jede Verbindungsstrecke eine Sortiererbahn bereitstellt. In einem solchen Fall kann beispielsweise die Kontrollmarkierung V5 dazu dienen, abzufragen, ob alle zu sortierenden Transportträger 3 den Kontrollpunkt, insbesondere in der richtigen Reihenfolge, passiert haben.

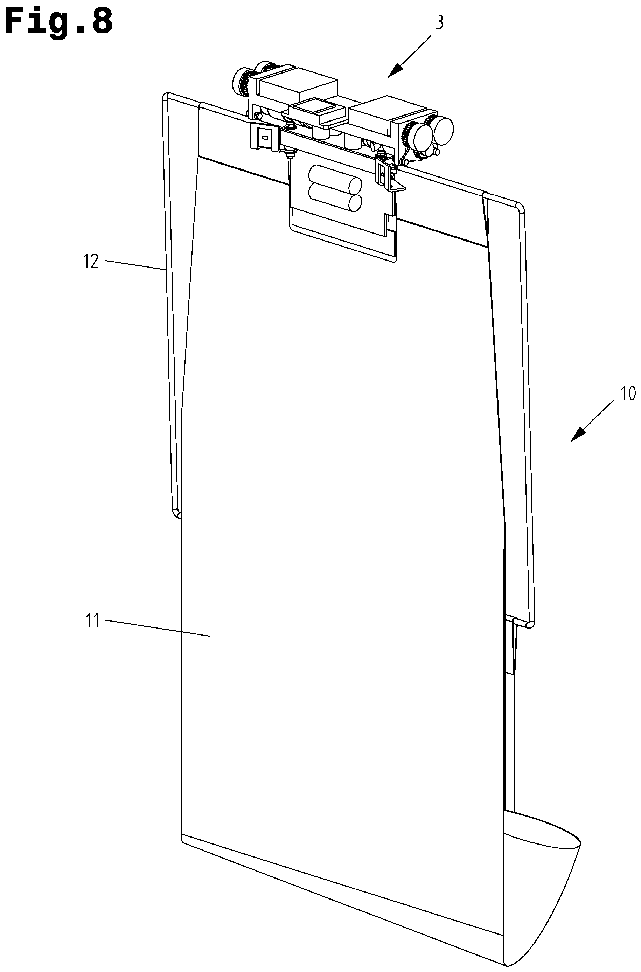

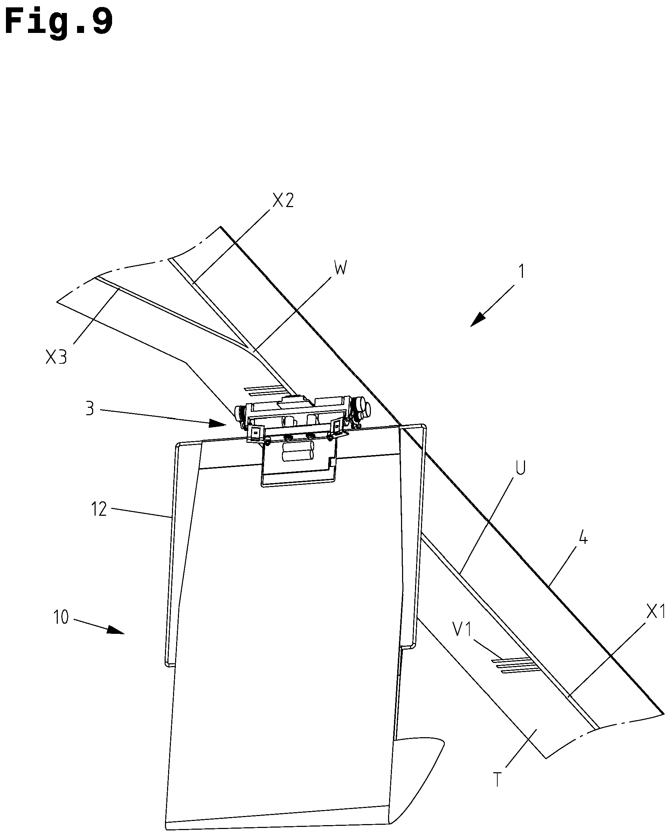

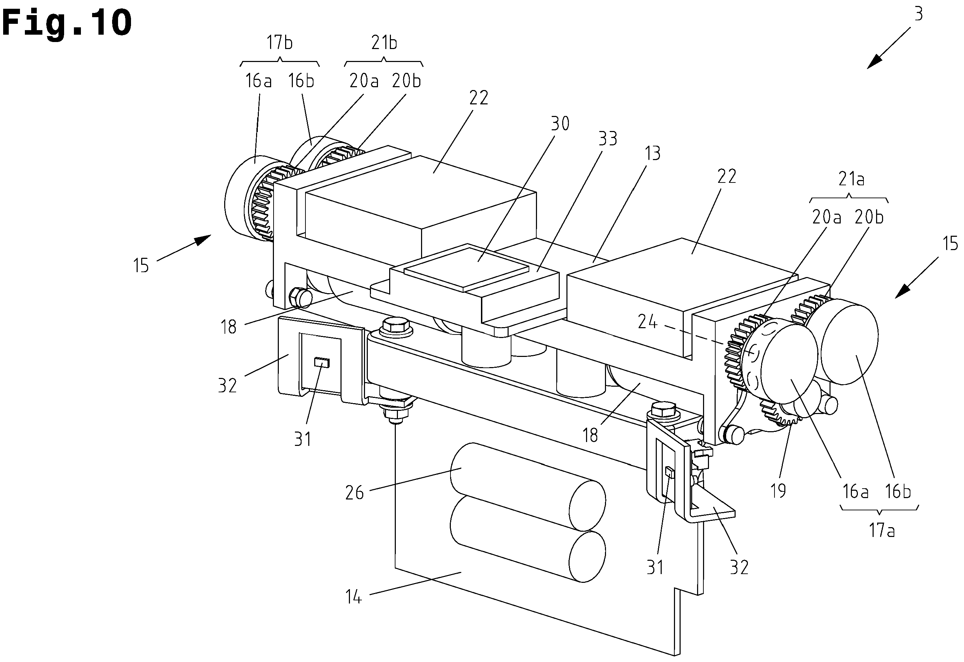

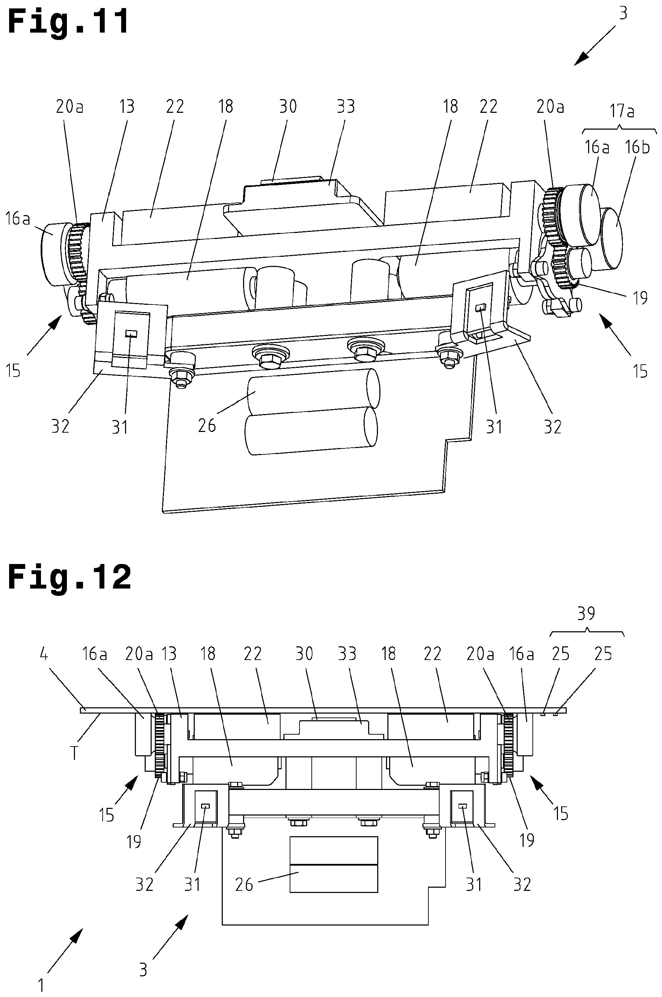

Fig. 8 bis Fig. 12 zeigen eine Hängefördervorrichtung 1 für ein Kommissioniersystem, beziehungsweise einen Transportträger 3 zum Transport von Hängeware 10. Fig. 8 zeigt den Transportträger 3 mit einer Hängeware 10 von schräg oben, Fig. 9 zeigt die Hängefördervorrichtung 1 von schräg unten, Fig. 10 zeigt den Transportträger 3 in detaillierter Darstellung von schräg oben, Fig. 11 zeigt den Transportträger 3 in detaillierter Darstellung von schräg unten und Fig. 12 zeigt den Transportträger 3 beziehungsweise die Hängefördervorrichtung 1 in detaillierter Darstellung in Vorderansicht.

Die Hängefördervorrichtung 1 umfasst eine Tragstruktur 4, welche eine Fahrfläche T ausbildet, und einen Transportträger 3 zum Transport von Hängeware 10, welcher einen Basiskörper 13 ausbildet. Der Basiskörper 13 bildet eine erste Transportträgerseite und eine, insbesondere der ersten Transportträgerseite gegenüberliegende, zweite Transportträgerseite aus. Die Hängeware 10 umfasst beispielsweise eine Transporttasche mit einem Taschenkörper 11, welcher an einem Bügel 12 befestigt ist und für die Aufbewahrung einer hier nicht explizit dargestellten Ware vorgesehen ist. Alternativ kann die Hängeware 10 auch durch ein Kleidungsstück gebildet sein, das mit Hilfe eines Kleiderbügels am Transportträger 3 hängt.

Der Transportträger 3 kann - so wie das in dem in Fig. 9 dargestellten Beispiel der Fall ist - einen Tragkörper 14 mit einer Aufnahme zum Aufhängen der Hängeware 10 aufweisen. Die Aufnahme kann eine vollständig umschlossene Aufnahmeöffnung zum Einhängen des Bügels 12 der Hängeware 10 aufweisen. Alternativ könnte auch ein offener Aufnahmeabschnitt (Haken) zum Einhängen oder Aufhängen des Bügels 12 der Hängeware 10 vorgesehen sein. Der Tragkörper 14 kann insbesondere über eine Verbindungsvorrichtung auswechselbar am Basiskörper 13 befestigt sein.

Weiterhin umfasst der Transportträger 3 zwei Antriebsvorrichtungen 15 zum Bewegen des Transportträgers 3 auf der Fahrfläche T sowie einen Haftkrafterzeuger, durch welchen der Transportträger 3 an der Tragstruktur 4 und insbesondere an der Fahrfläche T bewegbar haftet.

Die Antriebsvorrichtungen 15 umfassen jeweils Antriebsorgane, welche an der Fahrfläche T anliegen, und mehrere elektrisch betriebene Motoren 18, die am Basiskörper 13 angeordnet sind. Insbesondere sind die Antriebsorgane in diesem Beispiel durch Antriebsräder 16a, 16b gebildet. Im gezeigten Beispiel umfasst ein erstes Antriebsorgan auf der ersten Transportträgerseite ein erstes Antriebsrad 16a und ein zweites Antriebsrad 16b. Darüber hinaus umfasst ein zweites Antriebsorgan auf der zweiten Transportträgerseite ein erstes Antriebsrad 16a und ein zweites Antriebsrad 16b.

Somit befinden sich auf der ersten Transportträgerseite (rechts) zwei Antriebsräder 16a, 16b eines ersten Antriebsräderpaares 17a, welche das erste Antriebsorgan bilden, und auf der zweiten Transportträgerseite (links) zwei Antriebsräder 16a, 16b eines zweiten Antriebsräderpaares 17b, welche das zweite Antriebsorgan bilden. Die Antriebsräder 16a, 16b des ersten Antriebsorgans sind mit einem ersten Motor 18 der elektrisch betriebenen Motoren 18 gekoppelt. Analog dazu sind die Antriebsräder 16a, 16b des zweiten Antriebsorgans mit einem zweiten Motor 18 der elektrisch betriebenen Motoren 18 gekoppelt.

In diesem Beispiel sind also zwei Motoren 18 vorgesehen. Denkbar wäre aber auch, dass die Antriebsorgane mit einem einzigen Motor 18 gekoppelt sind.

Die Kopplung der Antriebsorgane mit den elektrisch betriebenen Motoren 18 kann über ein auf dem jeweiligen Motor 18 sitzendes Motorritzel 19 sowie über Zahnräder 20a, 20b eines ersten Zahnradpaares 21a und Zahnräder 20a, 20b eines zweiten Zahnradpaares 21b erfolgen. Konkret sind das erste Zahnrad 20a des ersten Zahnradpaares 21a koaxial mit dem ersten Antriebsrad 16a des ersten Antriebsräderpaares 17a, das zweite Zahnrad 20b des ersten Zahnradpaares 21a koaxial mit dem zweiten Antriebsrad 16b des ersten Antriebsräderpaares 17a, das erste Zahnrad 20a des zweiten Zahnradpaares 21b koaxial mit dem ersten Antriebsrad 16a des zweiten Antriebsräderpaares 17b und das zweite Zahnrad 20b des zweiten Zahnradpaares 21b koaxial mit dem zweiten Antriebsrad 16b des zweiten Antriebsräderpaares 17b angeordnet.

Hierbei kann die Kopplung der Antriebsräder 16a, 16b mit den Motoren 18 über Zahnradgetriebe erfolgen. Denkbar wäre auch hier wieder die Verwendung eines Zugmittelantriebs.

Obwohl der Antrieb des Transportträgers 3 in dem in Fig. 8 bis Fig. 12 gezeigten Beispiel durch Motoren 18 erfolgt, die am Transportträger 3 angeordnet sind, wäre auch denkbar, dass der Antrieb des Transportträgers 3 mittels des linearmotorischen Prinzips erfolgt. Beispielsweise können entlang der Fahrfläche T Spulen und am Transportträger 3 eine Kurzschlussspule, eine fremderregte Spule oder ein Permanentmagnet 22 vorgesehen sein, sodass die Anordnung als linearer Asynchronmotor beziehungsweise linearer Synchronmotor wirkt.

Der Transportträger 3 weist weiterhin einen oder mehrere Haftkrafterzeuger auf, welche vorzugsweise zwei Permanentmagneten 22 umfassen können, wie dies in Fig. 8 bis Fig. 12 beispielhaft gezeigt ist. Die Permanentmagneten 22 beziehungsweise Haftkrafterzeuger sind am Basiskörper 13 zwischen der ersten Transportträgerseite und zweiten Transportträgerseite angeordnet.

Die Tragstruktur 4 bildet darüber hinaus die Fahrfläche T aus und ist vorzugsweise aus einem (ferro)magnetischen Werkstoff hergestellt. Beispielsweise kann die Tragstruktur 4 beziehungsweise die Fahrfläche T aus einem Stahlblech gefertigt sein. Mit Hilfe der Permanentmagneten 22 haftet der Transportträger 3 kopfüber an der Fahrfläche T, wobei der Transportträger 3 auf der Fahrfläche T bewegbar ist.

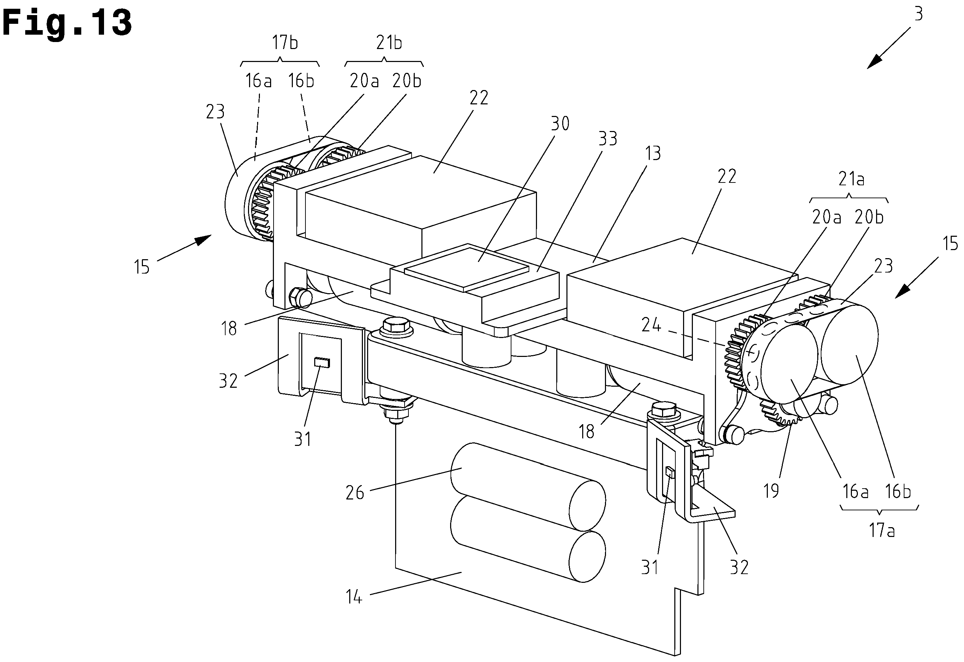

In dem in den Fig. 8 bis Fig. 12 gezeigten Beispiel sind die Antriebsorgane durch Antriebsräder 16a, 16b gebildet. Dies ist aber nicht die einzig vorstellbare Möglichkeit. Denkbar wäre auch, dass die Antriebsorgane ein auf der ersten Transportträgerseite um die Antriebsräder 16a, 16b des ersten Antriebsräderpaares 17a geführtes, erstes endlos umlaufendes Raupenband 23 und ein auf der zweiten Transportträgerseite um die Antriebsräder 16a, 16b des zweiten Antriebsräderpaares 17b geführtes, zweites endlos umlaufendes Raupenband 23 umfassen, so wie das in dem in Fig. 13 dargestellten Beispiel der Fall ist.

Analog wäre auch denkbar, dass anstelle der Raupenbänder Ketten vorgesehen sind. Die Antriebsorgane sind dann durch eine auf der ersten Transortträgerseite um die Antriebsräder 16a, 16b des ersten Antriebsräderpaares 17a geführte, erste endlos umlaufende Kette und durch eine auf der zweiten Transportträgerseite um die Antriebsräder 16a, 16b des zweiten Antriebsräderpaares 17b geführte, zweite endlos umlaufende Kette gebildet.

In dem in den Fig. 8 bis Fig. 13 gezeigten Beispiel umfassen die Haftkrafterzeuger Permanentmagneten 22. Dies ist aber nicht die einzig vorstellbare Möglichkeit. Denkbar wäre auch, dass die Haftkrafterzeuger Haftlamellen nach dem Gecko-Prinzip, Saugnäpfe und/oder ein Klettband einer Klettverbindung und somit beispielsweise Haken 29 oder Pilzköpfe einer Klettverbindung umfassen, die am Außenumfang der Antriebsorgane angeordnet sind, also zum Beispiel umfangsseitig auf den Antriebsrädern oder außen auf den Raupenbändern oder Ketten. In Fig. 12 sind optionale Saugnäpfe 24 durch gestrichelte Kreise auf dem Antriebsrad und in Fig. 13 durch gestrichelte Kreise auf dem Raupenband 23 angedeutet. In der Realität ist die Anwendung von Saugnäpfen 24 natürlich nicht auf das Antriebsrad und das Raupenband 23 beschränkt. So können diese alternativ oder zusätzlich auch auf den anderen Antriebsrädern und/oder auf dem Raupenband 23 angeordnet sein. Im Falle einer Klettverbindung kann am Außenumfang der Antriebsorgane ein Teil eines Klettbands angeordnet sein. Der andere Teil der Klettverbindung befindet sich dann auf der Fahrfläche T.

Bei Anwendung von Haftlamellen, Saugnäpfen 24 oder einer Klettverbindung können die Permanentmagneten 22 weggelassen oder zusätzlich zu den genannten Haftkrafterzeugern vorgesehen werden.

Das in Fig. 8 bis Fig. 13 gezeigte Ausführungsbeispiel der Hängefördervorrichtung 1 beziehungsweise des Transportträgers 3 umfasst ein optionales Energieversorgungssystem 39, welches einen Isolator und freiliegende elektrische Leiter 25 aufweist, welche entlang der Fahrfläche T verlaufen und auf dieser befestigt sein können (in Fig. 12 explizit dargestellt). Der Transportträger 3 kann zudem Stromabnehmer aufweisen (in Fig. 8 bis Fig. 13 nicht dargestellt), welche elektrisch in Kontakt mit den elektrischen Leitern 25 stehen und elektrisch mit den Motoren 18 verbunden sind. Die Stromabnehmer können als Schleifkontakte ausgebildet sein, die bei Bewegung des Transportträgers 3 auf den elektrischen Leitern 25 gleiten/schleifen. Die Stromabnehmer können aber auch rad- oder rollenförmig ausgebildet sein und auf den elektrischen Leitern 25 abrollen.

Anstelle einer kontaktbehafteten Energieübertragung könnte auch eine kontaktlose Energieübertragung mit Hilfe eines induktiven Energieversorgungssystems vorgesehen sein, wie nachfolgend beschrieben wird.

Ferner kann vorgesehen sein, dass das Energieversorgungssystem 39 nur auf geraden Streckenabschnitten der Führungsschiene vorgesehen ist. Dadurch kann das Energieversorgungssystem 39 einfacher gestaltet sein.

Optional kann der Motor 18 in Kurven und/oder auf Weichen aus einem Energiespeicher 26 versorgt werden (siehe hierzu auch Fig. 15). Dies kann unabhängig davon vorgesehen sein, ob das Energieversorgungssystem 39 zur kontaktbehafteten oder zur kontaktlosen Energieübertragung ausgebildet ist.

Dazu kann vorgesehen sein, dass der Transportträger 3 und/oder die Hängeware 10, insbesondere die Transporttasche, einen mit den Motoren 18 elektrisch verbundenen Energiespeicher 26 oder eine mit den Motoren 18 elektrisch verbundene Energiequelle aufweist. Die in den Fig. 8 bis F angegebene Position des Energiespeichers 26 ist nicht zwingend. Stattdessen kann der Energiespeicher 26 beispielsweise auch in ein Gehäuse einer Steuereinheit 33 eingebaut sein (siehe hierzu auch Fig. 15).

Insbesondere sind die Motoren 18 über Schaltelemente oder Steuerelemente mit dem Energiespeicher 26 oder der Energiequelle verbunden. Der Energiespeicher 26 kann beispielsweise als Akkumulator ausgebildet sein. Die Energiequelle kann als Solarmodul ausgebildet sein.

Alternativ zu den elektrischen Leitern 25, welche wie zuvor beschrieben als Schleifleitungen fungieren, kann entlang der Tragstruktur 4 bzw. entlang der Fahrfläche T ein induktives Energieversorgungssystem vorgesehen sein und die Energieübertragung zum Motor 18 (und gegebenenfalls zu einer Ladeschaltung einer mit dem Motor 18 verbundenen Energiequelle) des Transportträgers 3 induktiv erfolgen.

Insbesondere kann das induktive Energieversorgungsystem einen oder mehrere parallel zur Tragstruktur 4 bzw. Fahrfläche T verlaufende elektrische Leiter 25 aufweisen, und eine auf dem Transportträger 3 angeordnete Spule kann elektrisch mit dem Motor 18 verbunden sein, wobei die Energieübertragung zur Spule kontaktlos erfolgt. Besonders bevorzugt umfasst der Transportträger 3 einen ferromagnetischen Kern, um welchen die Spule gewickelt ist und welcher den zumindest einen elektrischen Leiter 25 zumindest teilweise umgreift. Der ferromagnetische Kern und die Spule können zusätzlich durch ein Gehäuse geschützt sein.

Wenn die Haftkrafterzeuger Permanentmagneten 22 umfassen und die Tragstruktur 4 aus einem (ferro)magnetischen Werkstoff besteht, ist es von Vorteil, wenn die elektrischen Leiter 25 unterhalb der Tragstruktur 4 angeordnet sind, so wie das in Fig. 12 dargestellt ist. Denkbar wäre aber auch, dass die elektrischen Leiter 25 über der Tragstruktur 4 angeordnet sind, konkret über einem isolierenden Bereich der Tragstruktur 4 oder auch wenn die Tragstruktur 4 ganz aus einem isolierenden Werkstoff gefertigt ist. In diesem Fall sollten als Haftkrafterzeuger Haftlamellen, Saugnäpfe und/oder eine Klettverbindung vorgesehen sein.

Sind das Energieversorgungssystem 39 der Hängefördervorrichtung 1 (also die Schleifleitung oder das induktive Energieversorgungssystem) auch zur drahtgebundenen Kommunikation mit der Fahrsteuerung 34 des Transportträgers 3 ausgebildet, kann vorteilhaft vorgesehen sein, dass das Energieversorgungssystem 39 der Hängefördervorrichtung 1 in mehrere Versorgungs-Segmente Y1..Y4 gegliedert ist, welche unterschiedliche Adressen in einem Kommunikationssystem der Hängefördervorrichtung 1 aufweisen, so wie das in Fig. 4 symbolisch dargestellt ist.

Einem Versorgungs-Segment Y1..Y4 des Energieversorgungssystems 39 kann weiterhin eine örtliche Position zugeordnet sein, wobei das Einfahren des Transportträgers 3 in dieses Versorgungs-Segment Y1..Y4 eine Anpassung der Wegdefinition ausgehend von der genannten Position durch die übergeordnete Steuerung 6 bewirkt, wenn eine Soll-Position des Transportträgers 3 nicht mit der örtlichen Position des Versorgungs-Segments Y1..Y4 des Energieversorgungssystems 39 übereinstimmt. Die Wahl eines bestimmten Weges entsprechend der im Speicher 35 gespeicherten Wegdefinition führt bei der genannten Abweichung wiederum zu Fehlschaltungen und Fehlleitungen. Mit den vorgeschlagenen Maßnahmen kann eine Abweichung der tatsächlichen Position des Transportträgers 3 von der von der Fahrsteuerung 34 angenommenen Position aber berücksichtigt und die Soll-Position des Transportträgers 3 wieder korrigiert werden, das heißt auf dessen Ist-Position gesetzt werden (in diesem Fall auf die Position des Versorgungs-Segments Y1..Y4, in welches der Transportträger 3 einfährt).

In dem in Fig. 4 dargestellten Beispiel ist im Bereich des Weichenabschnitts W kein Versorgungs-Segment Y1..Y4 vorgesehen. Stattdessen wird der Transportträger 3 dort aus dem Energiespeicher 26 versorgt. Dies ist aber nicht zwingend, sondern im Bereich der Weiche könnte ebenfalls ein Versorgungs-Segment Y1..Y4 vorgesehen sein.

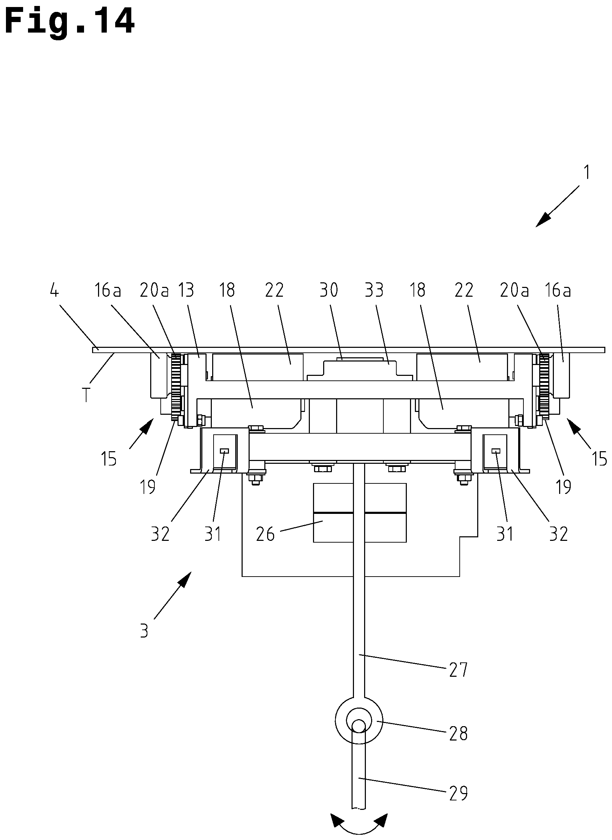

Denkbar ist weiterhin, dass die Fahrfläche T nicht horizontal ausgerichtet ist, so wie das in Fig. 9 und Fig. 12 dargestellt ist, sondern schräg verläuft oder sogar vertikal ausgerichtet ist, also im Prinzip eine Wand ausbildet. An dieser Wand können die an der Fahrfläche T haftenden Transportträger 3 ebenfalls fahren. Zum Beispiel könnte auf diese Weise eine platzsparende Lagerfläche für die Transportträger 3 gebildet werden. Insbesondere in diesem Zusammenhang ist es von Vorteil, wenn der Transportträger 3 eine Gelenkanordnung umfasst, welche ein Ausschwenken der Hängeware 10 relativ zum Basiskörper 13 um mehr als 45° und insbesondere um zumindest 90° quer zur Bewegungsrichtung des Transportträgers 3 ermöglicht. Dies ist in Fig. 14 gezeigt. Hierbei umfasst der Transportträger 3 eine Verlängerungsstange 27 mit einer daran angeordneten Öse 28 und einem darin drehbar gelagerten Haken 29 einer Hängeware 10. Diese kann aufgrund der Aufhängung sowohl in Längsrichtung als auch in Querrichtung (siehe den Doppelpfeil) ausschwenken. Durch eine entsprechende Wahl der Länge der Verlängerungsstange 27 kann insbesondere der seitliche Ausschwenkwinkel bestimmt werden.

Die Hängefördervorrichtung 1 weist noch weitere Merkmale auf. Konkret betrifft dies die Fahrmarkierung U und die Steuermarkierung V1..V5, die auf der Fahrfläche T angebracht sind, sowie den auf dem Transportträger 3 angeordneten Fahrflächensensor 30. Darüber hinaus kann der Transportträger 3 mehrere, insbesondere zwei Abstandssensoren 31 umfassen, die mit Hilfe von Sensorhaltern 32 am Basiskörper 8 befestigt sind. Aus Fig. 9 ist auch erkennbar, dass die Fahrmarkierung U in einen Weichenabschnitt W und drei Fahrstrecken X1..X3, insbesondere die Einlaufstrecke X1 und die Auslaufstrecken X2, X3, gegliedert ist.

Wie in Fig. 15 ersichtlich ist, kann der Transportträger 3 eine Steuereinheit 33 umfassen, mit einer, beispielsweise als Mikrocontroller ausgebildeten, Fahrsteuerung 34, einem damit verbundenen Speicher 35 (Daten- und/oder Programmspeicher) und gegebenenfalls einer mit der Fahrsteuerung 34 verbundenen Leistungselektronik 36 und einem mit der Fahrsteuerung 34 verbundenen Kommunikationsmodul 37.

Die Fahrsteuerung 34 beziehungsweise das Kommunikationsmodul 37 kann zur optischen, funkbasierten oder drahtgebundenen Kommunikation ausgebildet sein, insbesondere zur Kommunikation über das Energieversorgungssystem 39 entsprechend der Powerline-Communication-Technologie.

Darüber hinaus kann die Steuereinheit 33 ein Energiemanagementmodul 38 und den damit verbundenen Energiespeicher 26 umfassen.

An die Fahrsteuerung 34 können darüber hinaus der Fahrflächensensor 30 und der Abstandssensor 31 (oder sofern zwei Abstandssensoren 31 vorhanden sind, beide Abstandssensoren 31) angeschlossen sein.

An die Leistungselektronik 36 können die beiden Motoren 18 (oder im Falle nur eines Motors 18 nur der Motor 18) angeschlossen sein. Darüber hinaus sind das Energiemanagementmodul 38 und das Kommunikationsmodul 37 vorzugsweise mit dem Energieversorgungssystem 39 verbunden oder Teil desselben.

An dieser Stelle wird angemerkt, dass sich das in der Fig. 15 dargestellte Blockschaltbild sowie die Funktion der Steuereinheit 33 nicht nur auf den zuvor beschriebenen Transportträger 3 beziehen, sondern auf alle Bauarten von Transportträgern 3.

Die Funktion des solcherart ausgestatteten Transportträgers 3 ist nun wie folgt:
Wie erwähnt weist der Transportträger 3 die Fahrsteuerung 34 und den damit verbundenen beschreib- und auslesbar ausgebildeten Speicher 35 auf. Insbesondere kann die Fahrsteuerung 34 dazu ausgebildet sein, eine Bewegung des Transportträgers 3 auf der Tragstruktur 4 auf Basis von im Speicher 35 hinterlegten beziehungsweise gespeicherten Bewegungsdaten zu beeinflussen beziehungsweise zu steuern oder zu regeln.

Beispielsweise kann die Fahrsteuerung 34 des Transportträgers 3 zur Regelung einer Geschwindigkeit des Transportträgers 3 ausgebildet sein. Dazu werden die Motoren 18 von der Fahrsteuerung 34 entsprechend angesteuert. Konkret steuert die Fahrsteuerung 34 dabei die mit den Motoren 18 verbundene Leistungselektronik 36 an, welche die für den Betrieb der Motoren 18 nötige elektrische Energie über das Energiemanagementmodul 38 vom Energieversorgungssystem 39 beziehungsweise vom Energiespeicher 26 bezieht.

Die Erfassungseinheit bzw. der Fahrflächensensor 30 kann dazu verwendet werden, den Transportträger 3 entlang der Fahrmarkierung U zu führen. Bei der Fahrmarkierung U kann es sich beispielsweise um eine auf die Fahrfläche T aufgemalte, aufgedruckte oder aufgeklebte Linie handeln, die eine andere Helligkeit und/oder Farbe als die übrige Fahrfläche T aufweist. Beispielsweise kann die Fahrmarkierung U schwarz auf hellem Grund sein. In diesem Fall ist der Fahrflächensensor 30 als optischer Fahrflächensensor 30 ausgebildet, beispielsweise als Sensor-Array mehrerer optischer Sensoren. Durch Auswertung des Sensorsignals können Richtungskorrekturen oder Richtungsänderungen für den Transportträger 3 abgeleitet werden. Eine Richtungskorrektur oder Richtungsänderung wird durch unterschiedliche Ansteuerung der Motoren 18 ausgeführt. Unterschiedliche Drehzahlen führen dazu, dass der Transportträger 3 eine Kurve fährt.

Denkbar wäre auch, dass die Fahrmarkierung U als Magnetstreifen und der Fahrflächensensor 30 als Magnet-Sensor (insbesondere als Hall-Sensor) ausgebildet sind. Auch auf diese Weise kann der Transportträger 3 entlang der Fahrmarkierung U geführt werden.

Wenn der Transportträger 3 einen oder mehrere Abstandssensoren 31 aufweist, kann der Abstandssensor 31 (oder die Abstandssensoren 31) zum Messen eines Abstands zu einem anderen, vorausfahrenden Transportträger 3 ausgebildet und mit der Fahrsteuerung 34 verbunden sein. Die Fahrsteuerung 34 kann hierbei dazu ausgebildet sein, einen Abstand zu dem anderen, vorausfahrenden Transportträger 3 auf Basis des vom Abstandssensor 31 (oder von den Abstandssensoren 31) gemessenen Abstands zu regeln. Beispielsweise kann der Abstandssensor 31 als Ultraschallsensor ausgebildet sein.

Die beiden Abstandssensoren 31 sind in diesem Beispiel vorteilhaft in einem spitzen Winkel (mehr als 0° und kleiner als 90°) zueinander angeordnet. Dadurch kann der Abstand zu einem vorausfahrenden Transportträger 3 auch in Kurven oder im Weichenabschnitt W gut gemessen werden. Dabei wird jeweils das Signal des in das Kurveninnere weisenden Abstandssensors 31 bevorzugt oder ausschließlich ausgewertet. Ganz allgemein wäre aber auch ein Winkel von mehr als 0° und kleiner als 180° zwischen den beiden Abstandssensoren 31 möglich.

Die Fahrsteuerung 34 des Transportträgers 3 kann also zur Regelung einer Geschwindigkeit des Transportträgers 3 und/oder zur Regelung eines Abstands zu einem anderen Transportträger 3 ausgebildet sein.

Weiterhin ist denkbar, dass die Bewegung des Transportträgers 3 auf der Tragstruktur 4 mit Hilfe der Steuermarkierung V1..V5 beeinflusst wird. Diese kann ebenfalls optisch oder magnetisch auf die Fahrfläche T aufgebracht und vom Fahrflächensensor 30 oder einem anderen dafür vorgesehenen Sensor gelesen werden, wobei dieselben Erwägungen wie für die Fahrmarkierung U gelten.

Beispielsweise kann die Steuermarkierung V1..V5 bedeuten, dass der Transportträger 3 seine Geschwindigkeit bei Erfassung der Steuermarkierung V1..V5 ändern (also erhöhen oder verringern) soll, den Abstand zu einem vorausfahrenden Transportträger 3 ändern (also erhöhen oder verringern) soll oder anhalten soll. In diesem Fall stellt die Steuermarkierung V1..V5 eine zuvor beschriebene Regelungsmarkierung V3 bereit, welche im Wesentlichen eine Fahrdynamik des Transportträgers 3 regelt. Ebenso kann die Steuermarkierung V1..V5 bedeuten, dass der Transportträger 3 seine Fahrt beim Weichenabschnitt W ausgehend von der Einlaufstrecke X1 bzw. ersten Fahrstrecke X1 entlang einer der Auslaufstrecken X2, X3 insbesondere entlang der zweiten Fahrstrecke X2 oder entlang der dritten Fahrstrecke X3, fortzusetzen soll. In diesem Fall stellt die Steuermarkierung V1..V5 eine zuvor beschriebene Abfragemarkierung V1 bereit.

Das Einstellen einer Zielgeschwindigkeit des Transportträgers 3 oder eines Zielabstands des Transportträgers 3 zu einem anderen Transportträger 3 kann also anhand einer Steuermarkierung V1..V5 bewirkt werden, welche im Bereich der Tragstruktur 4 durch den Transportträger 3 erfassbar angeordnet ist.

Der Fahrflächensensor 30 des Transportträgers 3 ist in diesem Beispiel zusammenfassend ein mit der Fahrsteuerung 34 verbundenes, lichtempfindliches Element 7, mit dem eine auf der Tragstruktur 4 angebrachte optische Fahrmarkierung U und/oder optische Steuermarkierung V1..V5 lesbar ist, mit welcher eine Bewegung des Transportträgers 3 auf der Tragstruktur 4 beeinflussbar ist. Die optische Markierung kann als Fahrlinie oder Fahrmarkierung U auf der Fahrfläche T der Tragstruktur 4 ausgebildet sein, sie kann aber auch als Steuerelement oder Steuermarkierung V1..V5 für den Transportträger 3 ausgebildet sein und als Abbiegepunkt wirken, wenn die Steuermarkierung V1..V5 die Fahrtrichtung des Transportträgers 3 beeinflusst, oder als Haltepunkt, wenn die Steuermarkierung V1..V5 das Anhalten des Transportträgers 3 bewirkt. Die optische Steuermarkierung V1..V5 kann insbesondere auch als Barcode oder QR-Code ausgebildet sein. Zudem kann die optische Steuermarkierung V1..V5 auch länger ausgebildet sein und auf mehrere aufeinanderfolgenden Transportträger 3 wirken.

Denkbar wäre weiterhin, dass die Fahrwegmarkierung U, V1..V5, insbesondere die Fahrmarkierung U und/oder die Steuermarkierung V1..V5, nicht fix auf der Tragstruktur 4 aufgebracht ist, sondern als steuerbare Lichtquelle ausgebildet ist, wodurch ein Steuerbefehl von der Lichtquelle an den Fahrflächensensor 30 oder einen anderes lichtempfindlichen Element 7 des Transportträgers 3 und damit von der Tragstruktur 4 an die Fahrsteuerung 34 des Transportträgers 3 übertragbar ist. Beispielsweise kann die steuerbare Lichtquelle auf der Tragstruktur 4 mehrere individuell aktivierbare und matrixförmig angeordnete Leuchtpunkte aufweisen. Durch die vorgeschlagenen Maßnahmen sind die an den Transportträger 3 übertragenen Steuerbefehle nicht fix, sondern können flexibel an eine bestimmte Situation angepasst werden.

Beispielsweise kann die Steuermarkierung V1..V5 wahlweise dazu eingesetzt werden, die Geschwindigkeit des Transportträgers 3 bedarfsweise zu ändern, den Abstand zu einem vorausfahrenden Transportträger 3 bedarfsweise zu ändern, den Transportträger 3 bedarfsweise anzuhalten und/oder die Fahrtrichtung bzw. den Weg des Transportträgers 3 beim Weichenabschnitt W bedarfsweise zu steuern. Auch die Fahrmarkierung U kann die Fahrtrichtung bzw. den Weg des Transportträger 3 flexibel beeinflussen. Durch entsprechende Vorgabe der Geschwindigkeit des Transportträgers 3 und des Abstandes des Transportträgers 3 zu einem vorausfahrenden Transportträger 3 kann auch ein bestimmter Durchsatz von Transportträgern 3 vorgegeben beziehungsweise erreicht werden. Beispielsweise kann die besagte Geschwindigkeit und der besagte Abstand in Kurven verringert und auf geraden Abschnitten erhöht werden. Der besagte Durchsatz kann dabei insbesondere konstant gehalten werden.

Denkbar ist nicht nur die Ansteuerung des Transportträgers 3 durch eine Fahrwegmarkierung U, V1..V5, beispielsweise eine Fahrmarkierung U und/oder Steuermarkierung V1..V5, auf der Tragstruktur 4, sondern auch die Ansteuerung von (fixen) Elementen der Hängefördervorrichtung 1 durch den Transportträger 3. Mit anderen Worten kann die Fahrsteuerung 34 dazu ausgebildet sein, eine Bewegung eines Steuerelements der Tragstruktur 4 auf Basis von im Speicher 35 hinterlegten beziehungsweise gespeicherten Steuerdaten zu beeinflussen.

Beispielsweise kann der Transportträger 3 eine mit der Fahrsteuerung 34 verbundene Lichtquelle und das Steuerelement der Tragstruktur 4 ein lichtempfindliches Element 7 aufweisen, wobei mit der Lichtquelle über das lichtempfindliche Element 7 ein Steuerbefehl von der Fahrsteuerung 34 des Transportträgers 3 an das Steuerelement der Tragstruktur 4 übertragbar ist.

Durch die vorgeschlagenen Maßnahmen ist es möglich, dass sich der Transportträger 3, insbesondere wie zuvor beschrieben, autonom über das durch die Tragstruktur 4 gebildete Transportnetz bewegt.

Insbesondere ist es möglich, dass sich der Transportträger 3 entlang des Transportwegs S von einem Startort, beispielsweise einer Beladestation oder einem Lager für Hängeware, zu einem Zielort, beispielsweise einer Kommissionierstation, bewegt. Eine Routenplanung kann hierbei durch die übergeordnete Steuerung 6 erfolgen, wobei eine gesamte Strecke vom Startort zum Zielort im Wesentlichen segmentiert bzw. in Teilstrecken unterteilt werden, welche jeweils bis zu einer Meldemarkierung V2 oder von der letzten Meldemarkierung V2 zum Zielort verlaufen. Dadurch kann der Transportträger 3 besonders flexibel durch das Transportnetz navigiert werden.

Abschließend wird auch festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

| | | | |
|---|---|---|---|
| 1 | Hängefördervorrichtung | 37 | Kommunikationsmodul (Kommunikation) |
| 2 | Verteilermodul | | |
| 3 | Transportträger | 38 | Energiemanagementmodul (Energiemanagement) |
| 4 | Tragstruktur | | |
| 5 | Kommunikationseinheit | 39 | Energieversorgungssystem |
| 6 | übergeordnete Steuerung | 100 | Verfahren zum Ansteuern |
| 7 | lichtempfindliches Element | 110 | Bereitstellen der Fahrwegmarkierung |
| 8 | Kurzdistanz-Funksender | | |
| 9 | Kurzdistanz-Funkempfänger | 120 | Bereitstellen der Fahrvorgabe |
| | | 130 | Bewegen des Transportträgers |
| 10 | Hängeware | | |
| 11 | Taschenkörper | 140 | Passieren des Weichenabschnitts |
| 12 | Bügel | 141 | Abrufen der Wegdefinition |
| 13 | Basiskörper | 142 | Auswählen des Weges |
| 14 | Tragkörper | 143 | Ansteuern des Transportträgers |
| 15 | Antriebsvorrichtung | 150 | Übertragen der weiteren Fahrvorgabe |
| 16a, 16b | Antriebsrad | | |
| 17a, 17b | Antriebsräderpaar | 151 | Senden der weiteren Fahrvorgabe |
| 18 | Motor | 152 | Empfangen der weiteren |
| 19 | Motorritzel | | Fahrvorgabe |
| 20a, 20b | Zahnrad | 153 | Speichern der weiteren Fahrvorgabe |
| 21a, 21b | Zahnradpaar | | |
| 22 | Permanentmagnet | 160 | Senden des Meldesignals |
| 23 | Raupenband | D | Transportrichtung |
| 24 | Saugnapf | S | Transportweg |
| | | T | Fahrfläche |
| 25 | elektrischer Leiter | U | Fahrmarkierung |
| 26 | Energiespeicher | V1..V5 | Steuermarkierung |
| 27 | Verlängerungsstange | V1 | Abfragemarkierung |
| 28 | Öse | V2 | Meldemarkierung |
| 29 | Haken | V3 | Regelungsmarkierung |
| | | V4 | Umschaltmarkierung |
| 30 | Fahrflächensensor | V5 | Kontrollmarkierung |
| 31 | Abstandssensor (Hindernissensorik) | W | Weichenabschnitt |
| | | X1, X1',X1" | Einlaufstrecke |
| 32 | Sensorhalter | X2, X3 | Auslaufstrecke |
| 33 | Steuereinheit | Y1..Y4 | Versorgungs-Segment |
| 34 | Fahrsteuerung (Mikrokontroller) | Z | Zusammenführungsabschnitt |
| 35 | Speicher | | |
| 36 | Leistungselektronik | | |

## Patentansprüche

1. Hängefördervorrichtung (1) für ein Kommissioniersystem, umfassend eine Tragstruktur (4), welche eine Fahrfläche (T) ausbildet, und einen Transportträger (3) zum Transport von Hängeware (10), welcher einen Basiskörper (13) aufweist, und eine Antriebsvorrichtung (15) zum Bewegen des Transportträgers (3) auf der Fahrfläche (T),
wobei die Antriebsvorrichtung (15) Antriebsorgane umfasst, welche an der Fahrfläche (T) anliegen, und mehrere elektrisch betriebene Motoren (18) umfasst, welche am Basiskörper (13) angeordnet sind, wobei ein erstes Antriebsorgan der Antriebsorgane mit einem ersten Motor (18) der elektrisch betriebenen Motoren (18) und ein zweites Antriebsorgan der Antriebsorgane mit einem zweiten Motor (18) der elektrisch betriebenen Motoren (18) gekoppelt sind,
wobei der Basiskörper (13) eine erste Transportträgerseite und eine zweite Transportträgerseite ausbildet und mit dem ersten und zweiten Antriebsorgan versehen ist, wobei das erste Antriebsorgan auf der ersten Transportträgerseite und das zweite Antriebsorgan auf der zweiten Transportträgerseite angeordnet sind,
wobei der Transportträger (3) zusätzlich einen Haftkrafterzeuger umfasst, durch welchen der Transportträger (3) an der Tragstruktur (4) bewegbar haftet,
**dadurch gekennzeichnet, dass**
die Erzeugung der Haftkraft kontaktlos erfolgt,
der Haftkrafterzeuger einen Permanentmagneten (22) oder Elektromagneten umfasst und am Basiskörper (13) zwischen der ersten Transportträgerseite und zweiten Transportträgerseite angeordnet ist.

2. Hängefördervorrichtung (1) nach Anspruch 1, **dadurch gekennzeichnet, dass**
das erste und zweite Antriebsorgan jeweils ein oder mehrere Antriebsräder (16a, 16b) umfassen,
wobei das erste Antriebsorgan ein auf der ersten Transportträgerseite um die Antriebsräder (16a, 16b) des ersten Antriebsorgans geführtes, endlos umlaufendes erstes Raupenband (23), und/oder
wobei das zweite Antriebsorgan ein auf der zweiten Transportträgerseite um die Antriebsräder (16a, 16b) des zweiten Antriebsorgans geführtes, endlos umlaufendes zweites Raupenband (23) umfasst.

3. Hängefördervorrichtung (1) nach Anspruch 1, **dadurch gekennzeichnet, dass**
das erste und zweite Antriebsorgan jeweils ein oder mehrere Antriebsräder (16a, 16b) umfassen,
wobei das erste Antriebsorgan eine auf der ersten Transportträgerseite um die Antriebsräder (16a, 16b) des ersten Antriebsorgans geführte, endlos umlaufende erste Kette, und/oder
wobei das zweite Antriebsorgan eine auf der zweiten Transportträgerseite um die Antriebsräder (16a, 16b) des zweiten Antriebsorgans geführte, endlos umlaufende zweite Kette umfasst.

4. Hängefördervorrichtung (1) nach einem der Ansprüche 1 bis 3, **dadurch gekennzeichnet, dass** die Tragstruktur (4) eine Fahrfläche (T) ausbildet und aus einem ferromagnetischen Werkstoff hergestellt ist, wobei der Transportträger (3) über die Permanentmagneten (22) an der Fahrfläche (T) bewegbar haftet.

5. Hängefördervorrichtung (1) nach einem der Ansprüche 1 bis 4, **dadurch gekennzeichnet, dass**
der Transportträger (3) einen mit dem Motor (18) elektrisch verbundenen Energiespeicher (26) und/oder eine mit dem Motor (18) elektrisch verbundene Energiequelle aufweist, und/oder
die Hängefördervorrichtung (1) die Hängeware (10) umfasst, welche eine Transporttasche mit einem Taschenkörper (11) zur Aufbewahrung einer Ware aufweist,
wobei vorzugsweise die Transporttasche einen mit dem Motor (18) elektrisch verbundenen Energiespeicher (26) und/oder eine mit dem Motor (18) elektrisch verbundene Energiequelle aufweist.

6. Hängefördervorrichtung (1) nach einem der Ansprüche 1 bis 5, **gekennzeichnet durch** ein elektrisches Energieversorgungssystem (39), welches einen Isolator und freiliegende elektrische Leiter (25) umfasst, welche entlang der Tragstruktur (4), insbesondere an der Tragstruktur (4), angeordnet sind, wobei der Transportträger (3) Stromabnehmer aufweist, welche elektrisch in Kontakt mit den Leitern (25) stehen und elektrisch mit dem Motor (18) verbunden sind.

7. Hängefördervorrichtung (1) nach Anspruch 6, **dadurch gekennzeichnet, dass** das elektrische Energieversorgungssystem (39) nur auf geraden Streckenabschnitten der Tragstruktur (4) vorgesehen ist.

8. Hängefördervorrichtung (1) nach einem der Ansprüche 1 bis 6, **dadurch gekennzeichnet, dass** entlang der Tragstruktur (4), insbesondere an der Tragstruktur (4), ein induktives Energieversorgungssystem (39) angeordnet ist und die Energieübertragung zum Motor (18) des Transportträgers (3) induktiv erfolgt,
wobei vorzugsweise das induktive Energieversorgungssystem (39) zumindest einen parallel zur Tragstruktur (4) verlaufenden elektrischen Leiter (25) und eine Spule, welche auf dem Transportträger (3) angeordnet und elektrisch mit dem Motor (18) verbunden ist, umfasst, wobei die Energieübertragung zur Spule kontaktlos erfolgt,
wobei vorzugsweise der Transportträger (3) einen ferromagnetischen Kern umfasst, um welchen die Spule gewickelt ist und welcher den zumindest einen elektrischen Leiter (25) zumindest teilweise umgreift.

9. Hängefördervorrichtung (1) nach einem der Ansprüche 1 bis 8, **dadurch gekennzeichnet, dass** der Transportträger (3) eine Fahrsteuerung (34) und einen mit der Fahrsteuerung (34) verbundenen elektronischen Speicher (35) aufweist,
wobei vorzugsweise der Transportträger (3) mehrere Abstandssensoren (31) aufweist, welche mit der Fahrsteuerung (34) verbunden und derart angeordnet sind, dass diese paarweise einen Winkel von mehr als 0° und kleiner als 180° einschließen.

10. Hängefördervorrichtung (1) nach Anspruch 9, **dadurch gekennzeichnet, dass** die Tragstruktur (4) die Fahrfläche (T) ausbildet, entlang welcher ein Transportweg (S) angeordnet ist, und dass eine übergeordnete Steuerung (6), zumindest ein Verteilermodul (2) und der Transportträger (3) zum Transport von Hängeware (10) entlang des Transportwegs (S) vorgesehen sind,
wobei das zumindest eine Verteilermodul (2)
eine Tragstruktur (4) umfasst, welche eine Fahrfläche (T) und einen Transportweg (S) entlang der Fahrfläche (T) für einen Transportträger (3) ausbildet, wobei der Transportweg (S) einen Weichenabschnitt (W) mit einem Knoten, einer zum Knoten hinführenden Einlaufstrecke (X1), einer vom Knoten wegführenden ersten Auslaufstrecke (X2) und einer vom Knoten wegführenden zweiten Auslaufstrecke (X3) aufweist, wobei die Einlaufstrecke (X1) und die erste Auslaufstrecke (X2) einen ersten Weg für einen Transportträger (3) und die Einlaufstrecke (X1) und die zweite Auslaufstrecke (X3) einen zweiten Weg für den Transportträger (3) bereitstellen, und
eine Fahrwegmarkierung (U, V1..V5) und eine Kommunikationseinheit (5) der übergeordneten Steuerung (6) umfasst,
wobei die Fahrwegmarkierung (U, V1..V5) entlang des Transportwegs (S) an der Tragstruktur (4) angeordnet ist und eine Abfragemarkierung (V1), welche dem Weichenabschnitt (W) zugeordnet und entlang der Einlaufstrecke (X1) angeordnet ist, sowie eine Meldemarkierung (V2) aufweist,
wobei die Kommunikationseinheit (5) im Bereich der Meldemarkierung (V2) angeordnet und dazu ausgebildet ist, eine Fahrvorgabe zu senden, welche eine Freigabeanweisung und/oder eine Wegdefinition für den Transportträger (3) umfasst, wobei die Fahrsteuerung (34) des Transportträgers (3) dazu eingerichtet ist, eine von der Kommunikationseinheit (5) des zumindest einen Verteilermoduls (2) gesendete Fahrvorgabe zu empfangen, im Speicher (35) des Transportträgers (3) zu speichern, die Fahrvorgabe aus dem Speicher (35) abzurufen und den Transportträger (3) gemäß der Fahrvorgabe anzusteuern.

11. Hängefördervorrichtung (1) nach Anspruch 9 oder 10, **dadurch gekennzeichnet, dass** die Tragstruktur (4) zumindest ein Steuerelement aufweist und die Fahrsteuerung (34) dazu ausgebildet ist, auf Basis von im elektronischen Speicher (35) gespeicherten Steuerdaten eine Bewegung des zumindest eines Steuerelements der Tragstruktur (4) zu steuern,
wobei vorzugsweise die Fahrsteuerung (34) des Transportträgers (3) und/oder das zumindest eine Steuerelement der Tragstruktur (4) zur optischen, drahtgebundenen oder funkbasierten Kommunikation ausgebildet sind.

12. Hängefördervorrichtung (1) nach einem der Ansprüche 9 bis 11, **dadurch gekennzeichnet, dass** der Transportträger (3) eine mit der Fahrsteuerung (34) verbundene Lichtquelle und das Steuerelement der Tragstruktur (4) ein lichtempfindliches Element (7) aufweisen, wobei mit der Lichtquelle über das lichtempfindliche Element (7) ein Steuerbefehl von der Fahrsteuerung (34) des Transportträgers (3) an das Steuerelement der Tragstruktur (4) übertragbar ist.

13. Hängefördervorrichtung (1) nach Anspruch 11 oder 12, **dadurch gekennzeichnet, dass** die Tragstruktur (4) eine steuerbare Lichtquelle und der Transportträger (3) einen mit der Fahrsteuerung (34) verbundenen, optischen Fahrflächensensor (30) aufweist,
wobei ein Steuerbefehl mittels der Lichtquelle und des optischen Fahrflächensensors (30) von der Tragstruktur (4) an die Fahrsteuerung (34) des Transportträgers (3) übertragbar ist,
wobei vorzugsweise die steuerbare Lichtquelle auf dem Transportträger (3) oder der Tragstruktur (4) mehrere individuell aktivierbare und matrixförmig angeordnete Leuchtpunkte aufweist.

14. Hängefördervorrichtung (1) nach Anspruch 12 oder 13, **dadurch gekennzeichnet, dass** der Transportträger (3)
einen mit der Fahrsteuerung (34) verbundenen Fahrflächensensor (30) aufweist, mit dem eine an der Tragstruktur (4) angeordnete Steuermarkierung (V1..V5), insbesondere eine Meldemarkierung (V2), lesbar ist, wobei ein Erkennen der Steuermarkierung (V1..V5) ein Melden der Fahrsteuerung (34) bei einer übergeordneten Steuerung (6) auslöst, oder
einen mit der Fahrsteuerung (34) verbundenen Kurzdistanz-Funkempfänger (9) aufweist, mit dem ein Signal eines an der Tragstruktur (4) angeordneten Kurzdistanz-Funksenders (8) empfangbar ist, wobei ein Empfang des Signals durch den Kurzdistanz-Funkempfänger (9) ein Melden der Fahrsteuerung (34) bei einer übergeordneten Steuerung (6) auslöst, oder
einen Kurzdistanz-Funksender (8) aufweist, wobei ein Empfang eines Signals des Kurzdistanz-Funksenders (8) des Transportträgers (3) durch einen an der Tragstruktur (4) angeordneten Kurzdistanz-Funkempfänger (9) ein Melden des Transportträgers (3) bei einer übergeordneten Steuerung (6) auslöst,
wobei vorzugsweise das Melden der Fahrsteuerung (34) bei der übergeordneten Steuerung (6) ein Senden einer Wegdefinition an die Fahrsteuerung (34) durch die übergeordnete Steuerung (6) bewirkt.

15. Hängefördervorrichtung (1) nach Anspruch 14, **dadurch gekennzeichnet, dass** die Fahrwegmarkierung (U, V1..V5) oder der an der Tragstruktur (4) angeordnete Kurzdistanz-Funksender (8) oder der an der Tragstruktur (4) angeordnete Kurzdistanz-Funkempfänger (9) dazu ausgebildet sind, das gleichzeitige Melden der Fahrsteuerungen (34) mehrerer Transportträger (3) bei der übergeordneten Steuerung (6) zu bewirken.

16. Hängefördervorrichtung (1) nach einem der Ansprüche 1 bis 15, **dadurch gekennzeichnet, dass** die Hängefördervorrichtung (1) ein Energieversorgungssystem (39) umfasst, welches auch zur drahtgebundenen Kommunikation mit der Fahrsteuerung (34) des Transportträgers (3) ausgebildet ist,
wobei vorzugsweise das elektrische Energieversorgungssystem (39) einen Isolator und freiliegende elektrische Leiter (25) umfasst, welche entlang der Tragstruktur (4), insbesondere an der Tragstruktur (4), angeordnet sind, wobei der Transportträger (3) Stromabnehmer aufweist, welche elektrisch in Kontakt mit den Leitern (25) stehen und sowohl elektrisch mit einem Motor (18) der Antriebsvorrichtung (15) verbunden sind als auch elektrisch über ein Kommunikationsmodul (37) des Transportträgers (3) mit der Fahrsteuerung (34) verbunden sind.

17. Hängefördervorrichtung (1) nach Anspruch 14 oder 15, **dadurch gekennzeichnet, dass** entlang der Tragstruktur (4), insbesondere an der Tragstruktur (4), ein induktives Energieversorgungssystem (39) vorgesehen ist und die Energieübertragung zu einem Motor (18) der Antriebsvorrichtung (15) des Transportträgers (3) und/oder eine Datenübertragung zu einem mit der Fahrsteuerung (34) verbundenen Kommunikationsmodul (37) des Transportträgers (3) induktiv erfolgt.

18. Hängefördervorrichtung (1) für ein Kommissioniersystem, umfassend eine Tragstruktur (4), welche eine Fahrfläche (T) ausbildet, und einen Transportträger (3) zum Transport von Hängeware (10), welcher einen Basiskörper (13) aufweist, wobei der Basiskörper (13) eine erste Transportträgerseite und eine zweite Transportträgerseite ausbildet, und eine Antriebsvorrichtung (15) zum Bewegen des Transportträgers (3) auf der Fahrfläche (T),
wobei der Transportträger (3) zusätzlich einen Haftkrafterzeuger umfasst, durch welchen der Transportträger (3) an der Tragstruktur (4) bewegbar haftet,
**dadurch gekennzeichnet, dass**
die Haftkraft durch Kontakt des Haftkrafterzeugers mit der Fahrfläche erzeugt wird, wobei der Haftkrafterzeuger Haftlamellen, Saugnäpfe (24) und/oder ein Klettband einer Klettverbindung umfasst.

19. Hängefördervorrichtung (1) nach Anspruch 18, **dadurch gekennzeichnet, dass** der Transportträger (3) eine Fahrsteuerung (34) und einen mit der Fahrsteuerung (34) verbundenen elektronischen Speicher (35) aufweist,
wobei vorzugsweise der Haftkrafterzeuger zusätzlich einen Permanentmagneten (22) oder Elektromagneten umfasst,
wobei vorzugsweise die Tragstruktur (4) eine Fahrfläche (T) ausbildet und aus einem ferromagnetischen Werkstoff hergestellt ist, wobei der Transportträger (3) über die Permanentmagneten (22) an der Fahrfläche (T) bewegbar haftet.

20. Hängefördervorrichtung (1) nach Anspruch 18, **dadurch gekennzeichnet, dass** die Tragstruktur (4) die Fahrfläche (T) ausbildet, entlang welcher ein Transportweg (S) angeordnet ist, und dass eine übergeordnete Steuerung (6), zumindest ein Verteilermodul (2) und der Transportträger (3) zum Transport von Hängeware (10) entlang des Transportwegs (S) vorgesehen sind,
wobei das zumindest eine Verteilermodul (2)
eine Tragstruktur (4) umfasst, welche eine Fahrfläche (T) und einen Transportweg (S) entlang der Fahrfläche (T) für einen Transportträger (3) ausbildet, wobei der Transportweg (S) einen Weichenabschnitt (W) mit einem Knoten, einer zum Knoten hinführenden Einlaufstrecke (X1), einer vom Knoten wegführenden ersten Auslaufstrecke (X2) und einer vom Knoten wegführenden zweiten Auslaufstrecke (X3) aufweist, wobei die Einlaufstrecke (X1) und die erste Auslaufstrecke (X2) einen ersten Weg für einen Transportträger (3) und die Einlaufstrecke (X1) und die zweite Auslaufstrecke (X3) einen zweiten Weg für den Transportträger (3) bereitstellen, und
eine Fahrwegmarkierung (U, V1..V5) und eine Kommunikationseinheit (5) der übergeordneten Steuerung (6) umfasst,
wobei die Fahrwegmarkierung (U, V1..V5) entlang des Transportwegs (S) an der Tragstruktur (4) angeordnet ist und eine Abfragemarkierung (V1), welche dem Weichenabschnitt (W) zugeordnet und entlang der Einlaufstrecke (X1) angeordnet ist, sowie eine Meldemarkierung (V2) aufweist,
wobei die Kommunikationseinheit (5) im Bereich der Meldemarkierung (V2) angeordnet und dazu ausgebildet ist, eine Fahrvorgabe zu senden, welche eine Freigabeanweisung und/oder eine Wegdefinition für den Transportträger (3) umfasst, wobei die Fahrsteuerung (34) des Transportträgers (3) dazu eingerichtet ist, eine von der Kommunikationseinheit (5) des zumindest einen Verteilermoduls (2) gesendete Fahrvorgabe zu empfangen, im Speicher (35) des Transportträgers (3) zu speichern, die Fahrvorgabe aus dem Speicher (35) abzurufen und den Transportträger (3) gemäß der Fahrvorgabe anzusteuern.

## Claims

1. An overhead conveying device (1) for an order-picking system comprising a support structure (4) which forms a driving surface (T), and a transport carrier (3) for transporting a hanging article (10), which has a base body (13), and a drive device (15) for moving the transport carrier (3) on the driving surface (T),
wherein the drive device (15) comprises drive elements, which rest on the driving surface (T), and a plurality of electrically powered motors (18) arranged on the base body (13), wherein a first drive element of the drive elements is coupled to a first motor (18) of the electrically powered motors (18) and a second drive element of the drive elements is coupled to a second motor (18) of the electrically powered motors (18),
wherein the base body (13) forms a first transport carrier side and a second transport carrier side and is provided with the first and second drive element, wherein the first drive element is arranged on the first transport carrier side and the second drive element on the second transport carrier side,
wherein the transport carrier (3) additionally comprises a holding force generator, by which the transport carrier (3) adheres movably to the support structure (4),
**characterized in that**
the generation of the holding force takes place contactlessly,
the holding force generator comprises a permanent magnet (22) or an electromagnet and is arranged on the base body (13) between the first transport carrier side and the second transport carrier side.

2. The overhead conveying device (1) according to claim 1, **characterized in that**
the first and second drive elements each comprise one or multiple drive wheels (16a, 16b),
wherein the first drive element comprises an endlessly circulating first crawler belt (23) guided on the first transport carrier side around the drive wheels (16a, 16b) of the first drive element, and/or
wherein the second drive element comprises an endlessly circulating second crawler belt (23) guided on the second transport carrier side around the drive wheels (16a, 16b) of the second drive element.

3. The overhead conveying device (1) according to claim 1, **characterized in that**
the first and second drive elements each comprise one or multiple drive wheels (16a, 16b),
wherein the first drive element comprises an endlessly circulating first chain guided on the first transport carrier side around the drive wheels (16a, 16b) of the first drive element, and/or
wherein the second drive element comprises an endlessly circulating second chain guided on the second transport carrier side around the drive wheels (16a, 16b) of the second drive element.

4. The overhead conveying device (1) according to one of the claims 1 to 3, **characterized in that** the support structure (4) forms a driving surface (T) and is made of a ferromagnetic material, wherein the transport carrier (3) is movably adhered to the driving surface (T) via the permanent magnets (22).

5. The overhead conveying device (1) according to one of the claims 1 to 4, **characterized in that**
the transport carrier (3) has an energy storage (26) electrically connected to the motor (18) and/or an energy source electrically connected to the motor (18), and/or
the overhead conveying device (1) comprises the hanging article (10), which has a transport bag with a bag body (11) for storing an article,
wherein preferably the transport bag has an energy storage (26) electrically connected to the motor (18) and/or an energy source electrically connected to the motor (18).

6. The overhead conveying device (1) according to one of the claims 1 to 5, **characterized by** an electrical energy supply system (39) comprising an insulator and exposed electrical conductors (25) that are arranged along the support structure (4), in particular on the support structure (4), wherein the transport carrier (3) has current collectors that are in electrical contact with the conductors (25) and are electrically connected to the motor (18).

7. The overhead conveying device (1) according to claim 6, **characterized in that** the electrical energy supply system (39) is provided only on straight route sections of the support structure (4).

8. The overhead conveying device (1) according to one of the claims 1 to 6, **characterized in that** an inductive energy supply system (39) is arranged along the support structure (4), in particular on the support structure (4), and the energy transmission to the motor (18) of the transport carrier (3) is inductive,
wherein preferably the inductive energy supply system (39) comprises at least one electrical conductor (25) extending parallel to the support structure (4) and a coil, which is arranged on the transport carrier (3) and is electrically connected to the motor (18), wherein the energy transmission to the coil is contactless,
wherein preferably the transport carrier (3) comprises a ferromagnetic core, around which the coil is wound and which at least partially surrounds the at least one electrical conductor (25).

9. The overhead conveying device (1) according to one of the claims 1 to 8, **characterized in that** the transport carrier (3) has a driving control (34) and an electronic memory (35) connected to the driving control (34),
wherein preferably the transport carrier (3) has a plurality of distance sensors (31), which are connected to the driving control (34) and are arranged in such a way that the distance sensors (31) form an angle greater than 0° and less than 180° in pairs.

10. The overhead conveying device (1) according to claim 9, **characterized in that** the support structure (4) forms the driving surface (T) along which a transport path (S) is arranged, and **in that** a superordinate controller (6), at least one distribution module (2) and the transport carrier (3) for transporting a hanging article (10) are provided along the transport path (S),
wherein the at least one distribution module (2)
comprises a support structure (4) which forms a driving surface (T) and a transport path (S) along the driving surface (T) for a transport carrier (3), wherein the transport path (S) has a diverter section (W) with a node, an infeed route (X1) leading to the node, a first outfeed route (X2) leading away from the node and a second outfeed route (X3) leading away from the node, wherein the infeed route (X1) and the first outfeed route (X2) provide a first path for a transport carrier (3) and the infeed route (X1) and the second outfeed route (X3) provide a second path for the transport carrier (3), and
comprises a track marking (U, V1..V5) and a communication unit (5) of the superordinate controller (6),
wherein the track marking (U, V1..V5) is arranged along the transport path (S) on the support structure (4) and has a query marking (V1), which is assigned to the diverter section (W) and arranged along the infeed route (X1), and has a notification marking (V2),
wherein the communication unit (5) is arranged in the region of the notification marking (V2) and is configured to send a driving specification, which comprises a release instruction and/or a path definition for the transport carrier (3), wherein the driving control (34) of the transport carrier (3) is configured to receive a driving specification sent by the communication unit (5) of the at least one distribution module (2), to store the driving specification in the memory (35) of the transport carrier (3), to access the driving specification from the memory (35), and to actuate the transport carrier (3) according to the driving specification.

11. The overhead conveying device (1) according to claim 9 or 10, **characterized in that** the support structure (4) has at least one control element, and the driving control (34) is configured to control a movement of the at least one control element of the support structure (4) on the basis of control data stored in the electronic memory (35),
wherein preferably the driving control (34) of the transport carrier (3) and/or the at least one control element of the support structure (4) is configured for optical, wired or radio-based communication.

12. The overhead conveying device (1) according to one of the claims 9 to 11, **characterized in that** the transport carrier (3) has a light source connected to the driving control (34) and the control element of the support structure (4) has a light-sensitive element (7), wherein a control command can be transmitted from the driving control (34) of the transport carrier (3) to the control element of the support structure (4) with the light source via the light-sensitive element (7).

13. The overhead conveying device (1) according to claim 11 or 12, **characterized in that** the support structure (4) has a controllable light source and the transport carrier (3) has an optical driving surface sensor (30) connected to the driving control (34),
wherein a control command can be transmitted from the support structure (4) to the driving control (34) of the transport carrier (3) by the light source and the optical driving surface sensor (30),
wherein preferably the controllable light source on the transport carrier (3) or the support structure (4) has a plurality of individually activatable luminous dots arranged in the form of a matrix.

14. The overhead conveying device (1) according to claim 12 or 13, **characterized in that** the transport carrier (3)
has a driving surface sensor (30) connected to the driving control (34), with which a control marking (V1..V5) arranged on the support structure (4), in particular a notification marking (V2), can be read, wherein detecting the control marking (V1..V5) triggers notification of the driving control (34) to a superordinate controller (6), or
has a short-range radio receiver (9) connected to the driving control (34), with which a signal of a short-range radio transmitter (8) arranged on the support structure (4) can be received, wherein receiving the signal by the short-range radio receiver (9) triggers notification of the driving control (34) to a superordinate controller (6), or
has a short-range radio transmitter (8), wherein receiving a signal from the short-range radio transmitter (8) of the transport carrier (3) by a short-range radio receiver (9) arranged on the support structure (4) triggers notification of the transport carrier (3) to a superordinate controller (6),
wherein preferably the notification of the driving control (34) to the superordinate controller (6) causes the superordinate controller (6) to send a path definition to the driving control (34).

15. The overhead conveying device (1) according to claim 14, **characterized in that** the track marking (U, V1..V5) or the short-range radio transmitter (8) arranged on the support structure (4) or the short-range radio receiver (9) arranged on the support structure (4) are configured to effect the simultaneous notification of the driving controls (34) of a plurality of transport carriers (3) to the superordinate controller (6).

16. The overhead conveying device (1) according to one of the claims 1 to 15, **characterized in that** the overhead conveying device (1) comprises an energy supply system (39), which is also configured for wired communication with the driving control (34) of the transport carrier (3),
wherein preferably the electrical energy supply system (39) comprises an insulator and exposed electrical conductors (25), which are arranged along the support structure (4), in particular on the support structure (4), wherein the transport carrier (3) has current collectors, which are in electrical contact with the conductors (25) and are both electrically connected to a motor (18) of the drive device (15) and are electrically connected to the driving control (34) via a communication module (37) of the transport carrier (3).

17. The overhead conveying device (1) according to claim 14 or 15, **characterized in that** an inductive energy supply system (39) is provided along the support structure (4), in particular on the support structure (4), and the energy transmission to a motor (18) of the drive device (15) of the transport carrier (3) and/or a data transmission to a communication module (37) of the transport carrier (3) connected to the driving control (34) is inductive.

18. An overhead conveying device (1) for an order-picking system comprising a support structure (4) which forms a driving surface (T), and a transport carrier (3) for transporting a hanging article (10), which has a base body (13), wherein the base body (13) forms a first transport carrier side and a second transport carrier side, and a drive device (15) for moving the transport carrier (3) on the driving surface (T),
wherein the transport carrier (3) additionally comprises a holding force generator, by which the transport carrier (3) adheres movably to the support structure (4),
**characterized in that**
the holding force is generated by contact of the holding force generator with the driving surface, wherein the holding force generator comprises adhesive lamellae, suction cups (24) and/or a Velcro strip of a Velcro fastening.

19. The overhead conveying device (1) according to claim 18, **characterized in that** the transport carrier (3) has a driving control (34) and an electronic memory (35) connected to the driving control (34),
wherein preferably the holding force generator additionally comprises a permanent magnet (22) or electromagnet,
wherein preferably the support structure (4) forms a driving surface (T) and is made of a ferromagnetic material, wherein the transport carrier (3) is movably adhered to the driving surface (T) via the permanent magnets (22).

20. The overhead conveying device (1) according to claim 18, **characterized in that** the support structure (4) forms the driving surface (T) along which a transport path (S) is arranged, and **in that** a superordinate controller (6), at least one distribution module (2) and the transport carrier (3) for transporting a hanging article (10) are provided along the transport path (S),
wherein the at least one distribution module (2)
comprises a support structure (4) which forms a driving surface (T) and a transport path (S) along the driving surface (T) for a transport carrier (3), wherein the transport path (S) has a diverter section (W) with a node, an infeed route (X1) leading to the node, a first outfeed route (X2) leading away from the node and a second outfeed route (X3) leading away from the node, wherein the infeed route (X1) and the first outfeed route (X2) provide a first path for a transport carrier (3) and the infeed route (X1) and the second outfeed route (X3) provide a second path for the transport carrier (3), and
comprises a track marking (U, V1..V5) and a communication unit (5) of the superordinate controller (6),
wherein the track marking (U, V1..V5) is arranged along the transport path (S) on the support structure (4) and has a query marking (V1), which is assigned to the diverter section (W) and arranged along the infeed route (X1), and has a notification marking (V2),
wherein the communication unit (5) is arranged in the region of the notification marking (V2) and is configured to send a driving specification, which comprises a release instruction and/or a path definition for the transport carrier (3), wherein the driving control (34) of the transport carrier (3) is configured to receive a driving specification sent by the communication unit (5) of the at least one distribution module (2), to store the driving specification in the memory (35) of the transport carrier (3), to access the driving specification from the memory (35), and to actuate the transport carrier (3) according to the driving specification.

## Revendications

1. Dispositif de transport suspendu (1) pour un système de préparation de commandes, comprenant une structure porteuse (4) qui forme une surface de déplacement (T), et un support de transport (3) pour le transport de marchandises suspendues (10), qui présente un corps de base (13), et un dispositif d'entraînement (15) pour déplacer le support de transport (3) sur la surface de déplacement (T),
dans lequel le dispositif d'entraînement (15) comprend des organes d'entraînement qui s'appuient sur la surface de déplacement (T) et comprend une pluralité de moteurs à entraînement électrique (18) qui sont agencés sur le corps de base (13), un premier organe d'entraînement des organes d'entraînement étant couplé à un premier moteur (18) des moteurs à entraînement électrique (18) et un deuxième organe d'entraînement des organes d'entraînement étant couplé à un deuxième moteur (18) des moteurs à entraînement électrique (18),
dans lequel le corps de base (13) forme un premier côté de support de transport et un deuxième côté de support de transport et est pourvu des premier et deuxième organes d'entraînement, le premier organe d'entraînement étant agencé sur le premier côté de support de transport et le deuxième organe d'entraînement étant agencé sur le deuxième côté de support de transport,
le support de transport (3) comprenant en outre un générateur de force d'adhérence par lequel le support de transport (3) adhère de manière mobile à la structure porteuse (4), **caractérisé en ce que**
la génération de la force d'adhérence s'effectue sans contact,
le générateur de force d'adhérence comprenant un aimant permanent (22) ou un électroaimant et étant agencé sur le corps de base (13) entre le premier côté de support de transport et le deuxième côté de support de transport.

2. Dispositif de transport suspendu (1) selon la revendication 1, **caractérisé en ce que** les premier et deuxième organes d'entraînement comprennent chacun une ou plusieurs roues d'entraînement (16a, 16b),
le premier organe d'entraînement étant une première bande de chenilles (23) circulant sans fin, guidée sur le premier côté de support de transport autour des roues d'entraînement (16a, 16b) du premier organe d'entraînement, et/ou
le deuxième organe d'entraînement comprenant une deuxième bande de chenilles (23) circulant sans fin, guidée sur le deuxième côté du support de transport autour des roues d'entraînement (16a, 16b) du deuxième organe d'entraînement.

3. Dispositif de transport suspendu (1) selon la revendication 1, **caractérisé en ce que** les premier et deuxième organes d'entraînement comprennent chacun une ou plusieurs roues d'entraînement (16a, 16b),
le premier organe d'entraînement étant une première chaîne circulant sans fin, guidée sur le premier côté de support de transport autour des roues d'entraînement (16a, 16b) du premier organe d'entraînement, et/ou
le deuxième organe d'entraînement comprenant une deuxième chaîne circulant sans fin, guidée sur le deuxième côté de support de transport autour des roues d'entraînement (16a, 16b) du deuxième organe d'entraînement.

4. Dispositif de transport suspendu (1) selon l'une des revendications 1 à 3, **caractérisé en ce que** la structure porteuse (4) forme une surface de déplacement (T) et est réalisée en un matériau ferromagnétique, le support de transport (3) adhérant de manière mobile à la surface de déplacement (T) par l'intermédiaire des aimants permanents (22).

5. Dispositif de transport suspendu (1) selon l'une des revendications 1 à 4, **caractérisé en ce que**
le support de transport (3) présente un accumulateur d'énergie (26) relié électriquement au moteur (18) et/ou une source d'énergie reliée électriquement au moteur (18), et/ou le dispositif de transport suspendu (1) comprend les marchandises suspendues (10), lequel dispositif présentant un sac de transport avec un corps de sac (11) pour le stockage d'une marchandise,
le sac de transport présentant de préférence un accumulateur d'énergie (26) relié électriquement au moteur (18) et/ou une source d'énergie reliée électriquement au moteur (18).

6. Dispositif de transport suspendu (1) selon l'une quelconque des revendications 1 à 5, **caractérisé par** un système d'alimentation électrique (39) comprenant un isolateur et des conducteurs électriques exposés (25) agencés le long de la structure porteuse (4), en particulier sur la structure porteuse (4), le support de transport (3) présentant des collecteurs de courant qui sont en contact électrique avec les conducteurs (25) et qui sont reliés électriquement au moteur (18).

7. Dispositif de transport suspendu (1) selon la revendication 6, **caractérisé en ce que** le système d'alimentation électrique (39) n'est prévu que sur des parties rectilignes de la structure porteuse (4).

8. Dispositif de transport suspendu (1) selon l'une des revendications 1 à 6, **caractérisé en ce qu'**un système d'alimentation électrique inductif (39) est agencé le long de la structure porteuse (4), en particulier sur la structure porteuse (4), et la transmission d'énergie au moteur (18) du support de transport (3) s'effectue par induction,
le système d'alimentation électrique inductif (39) comprenant, de préférence, au moins un conducteur électrique (25) s'étendant parallèlement à la structure porteuse (4) et une bobine qui est agencée sur le support de transport (3) et est reliée électriquement au moteur (18), la transmission d'énergie à la bobine s'effectuant sans contact,
le support de transport (3) comprenant, de préférence, un noyau ferromagnétique autour duquel la bobine est enroulée et qui entoure au moins partiellement l'au moins un conducteur électrique (25).

9. Dispositif de transport suspendu (1) selon l'une des revendications 1 à 8, **caractérisé en ce que** le support de transport (3) présente une commande de déplacement (34) et une mémoire électronique (35) reliée à la commande de déplacement (34),
le support de transport (3) présentant, de préférence, plusieurs capteurs de distance (31) qui sont reliés à la commande de déplacement (34) et sont agencés de telle sorte que ceux-ci forment par paires un angle supérieur à 0° et inférieur à 180°.

10. Dispositif de transport suspendu (1) selon la revendication 9, **caractérisé en ce que** la structure porteuse (4) forme la surface de déplacement (T) le long de laquelle est agencé un chemin de transport (S), et **en ce qu'**une commande supérieure (6), au moins un module de distribution (2) et le support de transport (3) sont prévus pour le transport de marchandises suspendues (10) le long du chemin de transport (S),
dans lequel l'au moins un module de distribution (2) comprend
une structure porteuse (4) qui forme une surface de déplacement (T) et un chemin de transport (S) le long de la surface de déplacement (T) pour un support de transport (3), le chemin de transport (S) comprenant une section d'aiguillage (W) avec un nœud, un trajet d'entrée (X1) menant au nœud, un premier trajet de sortie (X2) s'éloignant du nœud et un deuxième trajet de sortie (X3) s'éloignant du nœud, le trajet d'entrée (X1) et le premier trajet de sortie (X2) fournissant un premier chemin pour un support de transport (3) et le trajet d'entrée (X1) et le deuxième trajet de sortie (X3) fournissant un deuxième chemin pour le support de transport (3), et comprend
un marquage de chemin de déplacement (U, V1..V5) et une unité de communication (5) de la commande supérieure (6),
le marquage de chemin de déplacement (U, V1..V5) étant agencé le long du chemin de transport (S) sur la structure porteuse (4) et comprenant un marquage d'interrogation (V1) qui est associé à la section d'aiguillage (W) et est agencé le long du trajet d'entrée (X1), ainsi qu'un marquage de notification (V2),
l'unité de communication (5) étant agencée dans la zone du marquage de notification (V2) et étant conçue pour envoyer une consigne de déplacement qui comprend une instruction de libération et/ou une définition de chemin pour le support de transport (3), la commande de déplacement(34) du support de transport (3) étant conçue pour recevoir une consigne de déplacement envoyée par l'unité de communication (5) de l'au moins un module de distribution (2), pour l'enregistrer dans la mémoire (35) du support de transport (3), pour récupérer la consigne de déplacement dans la mémoire (35) et pour commander le support de transport (3) conformément à la consigne de déplacement.

11. Dispositif de transport suspendu (1) selon la revendication 9 ou 10, **caractérisé en ce que** la structure porteuse (4) présente au moins un élément de commande et **en ce que** la commande de déplacement (34) est conçue pour commander un mouvement de l'au moins un élément de commande de la structure porteuse (4) sur la base de données de commande enregistrées dans la mémoire électronique (35),
la commande de déplacement (34) du support de transport (3) et/ou l'au moins un élément de commande de la structure porteuse (4) étant de préférence conçus pour la communication optique, par fil ou par radio.

12. Dispositif de transport suspendu (1) selon l'une des revendications 9 à 11, **caractérisé en ce que** le support de transport (3) présente une source lumineuse reliée à la commande de déplacement (34) et l'élément de commande de la structure porteuse (4) présente un élément photosensible (7), la source lumineuse permettant de transmettre un ordre de commande de la commande de déplacement (34) du support de transport (3) à l'élément de commande de la structure porteuse (4) par l'intermédiaire de l'élément photosensible (7).

13. Dispositif de transport suspendu (1) selon la revendication 11 ou 12, **caractérisé en ce que**
la structure porteuse (4) présente une source lumineuse commandable et le support de transport (3) un capteur optique de surface de déplacement (30) relié à la commande de déplacement (34),
un ordre de commande pouvant être transmis au moyen de la source lumineuse et du capteur optique de surface de déplacement (30) de la structure porteuse (4) à la commande de déplacement (34) du support de transport (3),
la source lumineuse commandable sur le support de transport (3) ou la structure porteuse (4) présentant de préférence plusieurs points lumineux activables individuellement et agencés en forme de matrice.

14. Dispositif de transport suspendu (1) selon la revendication 12 ou 13, **caractérisé en ce que**
le support de transport (3) présente
un capteur de surface de déplacement (30) relié à la commande de déplacement (34), avec lequel un marquage de commande (V1..V5) agencé sur la structure porteuse (4), en particulier un marquage de notification (V2), peut être lu, une reconnaissance du marquage de commande (V1..V5) déclenchant une notification de la commande de déplacement (34) auprès d'une commande supérieure (6), ou
présentant un récepteur radio à courte portée (9) relié à la commande de déplacement (34), avec lequel un signal d'un émetteur radio à courte portée (8) agencé sur la structure porteuse (4) peut être reçu, une réception du signal par le récepteur radio à courte portée (9) déclenchant une notification de la commande de déplacement (34) à une commande supérieure (6), ou
présentant un émetteur radio à courte portée (8), une réception d'un signal de l'émetteur radio à courte portée (8) du support de transport (3) par un récepteur radio à courte portée (9) agencé sur la structure porteuse (4) déclenchant une notification du support de transport (3) à une commande supérieure (6),
la notification de la commande de déplacement (34) à la commande supérieure (6) provoquant, de préférence, l'envoi d'une définition de chemin à la commande de déplacement (34) par la commande supérieure (6).

15. Dispositif de transport suspendu (1) selon la revendication 14, **caractérisé en ce que** le marquage de chemin de déplacement (U, V1.. V5) ou l'émetteur radio à courte portée (8) agencé sur la structure porteuse (4) ou le récepteur radio à courte portée (9) agencé sur la structure porteuse (4) est conçu pour provoquer la notification simultanée des commandes de déplacement (34) de plusieurs supports de transport (3) à la commande supérieure (6).

16. Dispositif de transport suspendu (1) selon l'une des revendications 1 à 15, **caractérisé en ce que** le dispositif de transport suspendu (1) comprend un système d'alimentation électrique (39),
qui est également conçu pour la communication par fil avec la commande de déplacement (34) du support de transport (3),
dans lequel, de préférence, le système d'alimentation électrique (39) comprend un isolateur et des conducteurs électriques exposés (25) qui sont agencés le long de la structure porteuse (4), en particulier sur la structure porteuse (4), le support de transport (3) présentant des collecteurs de courant qui sont en contact électrique avec les conducteurs (25) et qui sont à la fois reliés électriquement à un moteur (18) du dispositif d'entraînement (15) et reliés électriquement à la commande de déplacement (34) par l'intermédiaire d'un module de communication (37) du support de transport (3).

17. Dispositif de transport suspendu (1) selon la revendication 14 ou 15, **caractérisé en ce qu'**un système d'alimentation électrique inductif (39) est prévu le long de la structure porteuse (4), en particulier sur la structure porteuse (4), et la transmission d'énergie à un moteur (18) du dispositif d'entraînement (15) du support de transport (3) et/ou une transmission de données à un module de communication (37) du support de transport (3) relié à la commande de déplacement (34) s'effectue par induction.

18. Dispositif de transport suspendu (1) pour un système de préparation de commandes, comprenant une structure porteuse (4) qui forme une surface de déplacement (T), et un support de transport (3) pour transporter des marchandises suspendues (10), qui présente un corps de base (13), le corps de base (13) formant un premier côté de support de transport et un deuxième côté de support de transport, et un dispositif d'entraînement (15) pour déplacer le support de transport (3) sur la surface de déplacement (T),
le support de transport (3) comprenant en outre un générateur de force d'adhérence, par lequel le support de transport (3) adhère de manière mobile à la structure porteuse (4), **caractérisé en ce que**
la force d'adhérence est générée par le contact du générateur de force d'adhérence avec la surface de déplacement,
le générateur de force d'adhérence comprenant des lamelles d'adhérence, des ventouses (24) et/ou une bande auto-agrippante d'une connexion auto-agrippante.

19. Dispositif de transport suspendu (1) selon la revendication 18, **caractérisé en ce que** le support de transport (3) présente une commande de déplacement (34) et une mémoire électronique (35) reliée à la commande de déplacement (34),
le générateur de force d'adhérence comprenant de préférence, en outre, un aimant permanent (22) ou un électroaimant,
la structure porteuse (4) formant de préférence une surface de déplacement (T) et étant fabriquée en un matériau ferromagnétique, le support de transport (3) adhérant de manière mobile à la surface de déplacement (T) par l'intermédiaire des aimants permanents (22).

20. Dispositif de transport suspendu (1) selon la revendication 18, **caractérisé en ce que** la structure porteuse (4) forme la surface de déplacement (T) le long de laquelle est agencé un chemin de transport (S), et **en ce qu'**une commande supérieure (6), au moins un module de distribution (2) et le support de transport (3) sont prévus pour le transport de marchandises suspendues (10) le long du chemin de transport (S),
ledit au moins un module de distribution (2) comprenant
une structure porteuse (4) qui forme une surface de déplacement (T) et un chemin de transport (S) le long de la surface de déplacement (T) pour un support de transport (3), le chemin de transport (S) comprenant une section d'aiguillage (W) avec un nœud, un trajet d'entrée (X1) menant au nœud, un premier trajet de sortie (X2) s'éloignant du nœud et un deuxième trajet de sortie (X3) s'éloignant du nœud, le trajet d'entrée (X1) et le premier trajet de sortie (X2) formant un premier chemin pour un support de transport (3) et le trajet d'entrée (X1) et le deuxième trajet de sortie (X3) fournissant un deuxième chemin pour le support de transport (3), et comprenant un marquage de chemin de déplacement (U, V1..V5) et une unité de communication (5) de la commande supérieure (6),
le marquage de chemin de déplacement (U, V1..V5) étant agencé le long du chemin de transport (S) sur la structure porteuse (4) et comprenant un marquage d'interrogation (V1) qui est associé à la section d'aiguillage (W) et est agencé le long du trajet d'entrée (X1), ainsi qu'un marquage de notification (V2),
l'unité de communication (5) étant agencée dans la zone du marquage de notification (V2) et étant conçue pour envoyer une consigne de déplacement qui comprend une instruction de libération et/ou une définition de chemin pour le support de transport (3), la commande de déplacement (34) du support de transport (3) étant conçue pour recevoir une consigne de déplacement envoyée par l'unité de communication (5) de l'au moins un module de distribution (2), pour l'enregistrer dans la mémoire (35) du support de transport (3), pour récupérer la consigne de déplacement dans la mémoire (35) et pour commander le support de transport (3) conformément à la consigne de déplacement.
